# EUROPEAN PATENT APPLICATION

(11) **EP 2 983 444 A1**
(43) Date of publication of application: **10.02.2016**
(21) Application number: 14779496.0
(22) Date of filing: 31.03.2014
(51) Int. Cl.: H04W 76/02, H04M 3/42, H04W 8/00, H04W 92/18

(54) **TERMINAL, BASE STATION, AND CONTROL DEVICE**

(30) Priority: 02.04.2013 JP 2013076577
(71) Applicant: Sharp Kabushiki Kaisha, Osaka-shi, Osaka 545-8522 (JP)
(72) Inventor: ENOMOTO, Masayuki, Osaka-shi, Osaka 545-8522 (JP); ARAMOTO Masafumi, Osaka-shi, Osaka 545-8522 (JP)
(74) Representative: Müller Hoffmann & Partner
(86) International application number: PCT/JP2014/059554
(87) International publication number: WO 2014/163054

(57) **Abstract**

A UE that transmits and receives data in a proximity service, notifies a server of location information in advance, and when starting the proximity service, receives degrees of proximity including a degree of proximity of a communication target UE from the server before performing proximity detection for the communication target UE, and discovers the communication target UE based on the degrees of proximity, thereby suppressing unnecessary proximity detection.

## Description

### Technical Field

The present invention relates to a mobile communication system that includes a terminal device, a base station device, a control device, a proximity terminal located in the proximity of the terminal device, and a server device which detects the proximity terminal.

This application is based upon and claims the benefit of priority of the prior Japanese Patent Application No. 2013-076577, filed on April 2, 2013, the entire contents of which are incorporated herein by reference.

### Background Art

In the 3GPP (the 3rd Generation Partnership Project) which is the standardization group for a mobile communication system, the specification work of EPS (Evolved Packet System) described in Non Patent Literature 1 as the next generation mobile communication system has proceeded, a wireless LAN (WLAN) as well as LTE (Long Term Evolution) as an access system connected to the EPS has been examined.

In the 3GPP, as described in Non Patent Literature 2, the proximity service (ProSe) that notifies user equipment (UE) of the presence of other user equipment in proximity has been examined. In the ProSe, the UE can directly transmit and receive data to and from the proximity UE without a base station.

In the ProSe, since the data is directly transmitted and received between the UEs, a mobile communication network or a wireless LAN network is not used, and data traffic can be offloaded. Thus, it is possible to avoid the concentration of traffic to the LTE.

In the ProSe, the use of two methods as a direct communication path between the UEs has been examined. The first method is a method (hereinafter, referred to as LTE Direct) of establishing the direct communication path between the UEs using an LTE access technology, and the second method is a method of establishing the direct communication path using a wireless LAN access technology.

In the LTE Direct, the UE uses a commercial frequency allocated in an LTE system of each mobile communication provider, and directly transmits and receives data to and from another UE by using an LTE communication system.

In the WLAN Direct, the UE uses a non-commercial frequency allocated in the WLAN, and directly transmits and receives data to and from another UE.

In the ProSe, the necessity for the UE to detect the presence of a communication target UE in proximity by discovering the communication target UE in order to transmit and receive data through the LTE Direct or the WLAN Direct is given as a service required condition.

In the ProSe, a method (hereinafter, referred to as a locally routed method) of performing communication via a base station by being connected to the same base station device in the communication between the UEs has been examined. In the case of the communication between the UEs of the related art, a communication path is established between a UE and a gateway within a core network, and the communication with each UE is performed through the established communication path. Meanwhile, in the case of the locally routed method, a base station performs data transmission as an anchor device for the transmission and reception of data. As stated above, since the communication path within the core network is not required, there is a merit that a resource for the communication path is not required within the core network and it is possible to suggest a time necessary for the transmission and reception.

In order for the direct communication between the UEs to be a service provided by the mobile communication provider, it is defined that the direct communication between the UEs is required to be approved by the mobile communication provider at the time of establishing the direct communication path between the UEs.

As stated above, an object of the ProSe is to provide a service that notifies a certain UE of the presence of the proximity UE, and a service that provides communication through the direct communication path between the UEs.

Meanwhile, in the related art, the mobile communication provider provides a service that performs communication via a base station device in the communication between the UEs. Since the service that provides the communication through the direct communication between the UEs can be used only when the distance between the UEs is in proximity, it is necessary to provide the service that provides the communication through the direct communication path while maintaining the service that performs the communication via the base station device of the related art irrespective of the distance between the UEs.

### Citation List

### Non Patent Literature

NPL 1: 3GPP TS23.401 Technical Specification Group Services and System Aspects, General Packet Radio Service (GPRS) enhancements for Evolved Universal Terrestrial Radio Access Network (E-UTRAN) access
NPL 2: 3GPP TR22.803 Technical Specification Group Services and System Aspects, Feasibility study for Proximity Services (ProSe)

### Summary of Invention

### Technical Problem

However, since there is no means for realizing a notification method of the proximity terminal and an establishment method of the direct communication path between the UEs, the UE starts the discovery at random when the UE as a communication source discovers the UE as the communication target irrespective of whether or not the communication target UE is in proximity. When the communication target UE is not in proximity, the communication target UE is not discovered, and the communication source UE wastes power consumption.

When the UE starts the transmission and reception of data through the direct communication of the LTE Direct, even though the communication target UE is in the proximity of the communication source UE, if the communication source UE requests the LTE Direct and the communication target UE is not able to perform the LTE Direct, unnecessary discovery is started, and thus, the communication source UE wastes the power consumption.

When the UE starts the transmission and reception of data through a locally routed communication path, even when the communication target UE and the communication source UE are in the service area of the same base station device, if the communication source UE requests the locally routed method and the communication target UE is not able to perform the locally routed method, an unnecessary request is transmitted, and thus, the communication source UE wastes power consumption.

Since the mobile communication provider has no means for granting permission or non-permission for the establishment of the direct communication path of the UE, it was not able to provide a proximity communication service to a user from the mobile communication provider.

The mobile communication provider was not able to perform the transmission and reception of data through the direct communication path and the communication via only a base station device while maintaining the communication via a base station device provided in the related art. When it is possible to use the direct communication path, the communication path via only the base station device, and the communication path via the base station device of the related art, it was not apparent whether or not to use any one of the direct communication path, the communication path via only the base station device, and the communication path via the base station device of the related art.

An aspect of the present invention has been made in view of the above circumstances, and it is an object of the present invention to provide a mobile communication system in which a communication source UE efficiently discovers a communication target UE and performs notification and a mobile communication provider provides direct communication between the UEs, a communication path via only a base station device, or communication via a base station device of the related art to the UEs when data is transmitted and received in ProSe. Solution to Problem

A terminal device according to an aspect of the present invention is a terminal device of a mobile communication system that includes a server device which detects a proximity terminal, a control device, the terminal device, and a proximity terminal device which is located in the proximity of the terminal device, the terminal device being adapted to: obtain, from the server device, information regarding a proximity terminal device which is located at a distance capable of establishing a direct communication path and a communication path via only a base station device correlated with an application, and information regarding a direct communication path capable of being established; transmit, to the control device, a request message which requests an approval for the establishment of the direct communication path capable of being established, the communication path via only the base station device and a communication path via a macro; receive a response message indicating that the establishment of the direct communication path capable of being established, the communication path via only the base station device and the communication path via the macro is permitted; and establish, based on the response message, the direct communication path with the proximity terminal device, establish the communication path via only the base station device with the proximity terminal device, and establish the communication path via the macro with the terminal device.

In the terminal device according to the aspect of the present invention, the terminal device may be adapted to: retain a first APN which permits the establishment of the direct communication path, the communication path via only the base station device, and the communication path via the macro, and a second APN which does not permit the establishment of the direct communication path and the communication path via only the base station device; and transmit, to the control device, the request message which requests the approval for the establishment of the direct communication path capable of being established, the communication path via only the base station device and the communication path via the macro by including an APN which permits the establishment of the direct communication path, the communication path via only the base station device and the communication path via the macro.

A terminal device according to another aspect of the present invention is a terminal device that is adapted to: transmit, to a control station, a request message which requests the establishment of a communication path by including an APN which permits the establishment of a direct communication path, a communication path via only a base station device, and a communication path via a macro; receive, from a control device, a response message indicating that the establishment of the communication path is permitted and the permitted communication path is established; establish the communication path based on the response message; manage an application and a communication path in correlation with each other; and select, based on the correlation of the application with the communication path, the direct communication path, the communication path via only the base station device, or the communication path via the macro to transmit application data by using the selected communication path.

A control device according to an aspect of the present invention is a control device of a mobile communication system that includes a server device which detects a proximity terminal, the control device, a terminal device, and a proximity terminal device which is located in the proximity of the terminal device, the control device being adapted to: manage identification information of the terminal device and permission information indicating that the establishment of a direct communication path, a communication path via only a base station device, and a communication path via a macro is permitted, in correlation with each other; receive a request message which requests an approval for the establishment of the direct communication path, the communication path via only the base station device, and the communication path via the macro, which is transmitted from the terminal device; and permit the establishment of the direct communication path, the communication path via only the base station device, and the communication path via the macro for the terminal device, based on the correlation of the identification information of the terminal device with the permission information indicating that the establishment of the direct communication path, the communication path via only the base station, and the communication path via the macro is permitted.

A base station device according to an aspect of the present invention is a base station device of a mobile communication system that includes a server device which detects a proximity terminal, a control device, a terminal device, and the base station device, the base station device being adapted to: receive, from the control device, a notification including information indicating whether or not the establishment of a direct communication path, a communication path via only a base station device, and a communication path via a macro is permitted for the terminal device; and allocate a radio resource for transmitting and receiving data to and from the terminal device based on the permission information included in the notification. Advantageous Effects of Invention

According to an aspect of the present invention, when the communication source UE performs the transmission and reception of data in the ProSe, it is possible to prevent the power consumption of the communication source UE from being inefficiently consumed by discovering the communication target UE without unnecessarily discovering the communication target UE.

It is possible to discover the communication target UE by giving the condition for discovering the communication target UE to the communication source UE, and it is possible to start the transmission and reception of data through the direct communication of the LTE Direct. It is possible to realize the start of the transmission and reception of data through the locally routed communication path by giving the condition for starting the transmission and reception of data through the locally routed direct communication path to the communication source UE.

The mobile communication provider determines whether or not to permit for the establishment of the direct communication path between the UEs, and thus, it is possible to provide the direct communication between the UEs and the communication through only a base station device to the UEs.

The mobile communication provider can transmit and receive data through the direct communication path, and can transmit and receive data through the communication path via only the base station device while maintaining the communication via a base station device provided in the related art. When the direct communication path, the communication path via only the base station device, and the communication path via the base station device of the related art can be used, it is possible to select whether or not to use the direct communication path, the communication path via only the base station device, or the communication path via a macro.

### Brief Description of Drawings

[Fig. 1] Fig. 1 is a diagram for describing the outline of a mobile communication system 1 according to a first embodiment.
[Fig. 2A] Fig. 2A is a first diagram for describing the configuration of an IP mobile communication network.
[Fig. 2B] Fig. 2B is a second diagram for describing the configuration of the IP mobile communication network.
[Fig. 3] Fig. 3 is a diagram for describing an example of communication between UEs (locally routed) via only a base station device.
[Fig. 4] Fig. 4 is a diagram for describing the functional configuration of a UE according to the first embodiment.
[Fig. 5A] Fig. 5A is a first diagram showing an example of the functional configuration managed in a storage unit of the UE.
[Fig. 5B] Fig. 5B is a second diagram showing an example of the functional configuration managed in the storage unit of the UE.
[Fig. 6] Fig. 6 is a diagram for describing the functional configuration of a ProSe Server.
[Fig. 7A] Fig. 7A is a first diagram showing an example of a Server contact list.
[Fig. 7B] Fig. 7B is a second diagram showing an example of the communication path for each application classification.
[Fig. 8A] Fig. 8A is a diagram showing an example of a location information management table.
[Fig. 8B] Fig. 8B is a diagram showing an example of a proximity detection policy.
[Fig. 9] Fig. 9 is a diagram for describing the functional configuration of an MME.
[Fig. 10] Fig. 10 is a diagram for describing permission information for the establishment of a communication path.
[Fig. 11] Fig. 11 is a diagram for describing a location notification procedure according to the first embodiment.
[Fig. 12] Fig. 12 is a diagram showing a case where location information in the ProSe Server is updated.
[Fig. 13] Fig. 13 is a diagram for describing a proximity detection unnecessary procedure according to the first embodiment.
[Fig. 14] Fig. 14 is a diagram showing a case where the Server contact list based on the proximity detection unnecessary procedure is updated.
[Fig. 15] Fig. 15 is a diagram for describing a proximity detection procedure according to the first embodiment.
[Fig. 16] Fig. 16 is a diagram for describing the proximity detection processing according to the first embodiment.
[Fig. 17A] Fig. 17A is a first diagram showing an example of proximity detection according to the first embodiment.
[Fig. 17B] Fig. 17B is a second diagram showing an example of the proximity detection according to the first embodiment.
[Fig. 17C] Fig. 17C is a third diagram showing an example of the proximity detection according to the first embodiment.
[Fig. 17D] Fig. 17D is a fourth diagram showing an example of the proximity detection according to the first embodiment.
[Fig. 18] Fig. 18 is a diagram for describing a communication path establishment procedure based on a PDN connection request according to the first embodiment.
[Fig. 19] Fig. 19 is a diagram for describing a communication path establishment procedure based on a service request according to the first embodiment.
[Fig. 20] Fig. 20 is a diagram for describing a disconnection procedure of stopping direct communication according to the first embodiment.
[Fig. 21] Fig. 21 is a diagram showing an example of a UE contact list managed in the UE.
[Fig. 22] Fig. 22 is a diagram showing an example of a Server contact list managed in the ProSe Server.
[Fig. 23] Fig. 23 is a diagram showing an LTE(D) availability management table and a WLAN(D) availability management table managed in the UE.
[Fig. 24] Fig. 24 is a diagram showing a Server contact list including LTE(D) availability and WLAN(D) availability in the ProSe Server.
[Fig. 25] Fig. 25 is a diagram showing a case where the LTE(D) availability and the WLAN(D) availability are updated in the Server contact list.
[Fig. 26] Fig. 26 is a diagram showing an example of a UE action policy in the UE.
[Fig. 27] Fig. 27 is a diagram showing an example of a proximity detection policy in the ProSe Server.
[Fig. 28] Fig. 28 is a diagram showing an example of the proximity detection.
[Fig. 29] Fig. 29 is a diagram showing an example in which the ProSe Server is provided in the IP mobile communication network.

### Description of Embodiments

Hereinafter, embodiments for implementing the present invention will be described with reference to the drawings. For example, in the present embodiment, embodiments of a mobile communication system when the present invention is applied will be described in detail with reference to the drawings. LTE Direct is referred to as LTE(D), and WLAN Direct is referred to as WLAN(D). Here, the LTE(D) implies that a direct communication path is established between UEs by using an LTE communication method, and the WLAN(D) implies that a direct communication path is established between the UEs by using a WLAN communication method.

Communication via a base station device (eNB) is referred to as locally routed communication. Here, the locally routed communication provides the transmission and reception of data via only the serving eNB, for the transmission and reception of data between UEs that are in the service area of the same eNB, and the transmission and reception of data to and from the gateway within the core network is not required. More specifically, in the transmission and reception of data via the base station device of the related art, the UE transmits and receives data via the SGW and PGW through the eNB, but in the locally routed communication, the data is transmitted and received through only the eNB without using the SGW and the PGW.

### [1. First Embodiment]

First, a first embodiment to which the present invention is applied will be described with reference to the drawings.

### [1.1 Outline of Mobile Communication System]

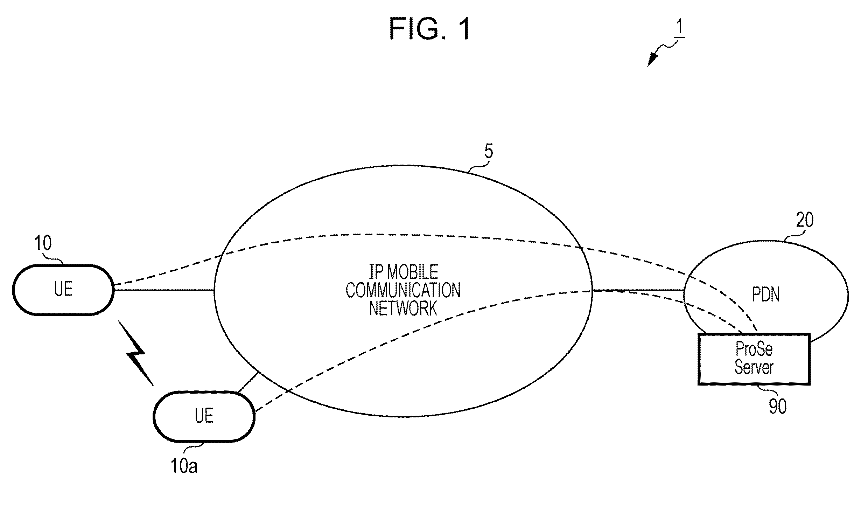

Fig. 1 is a diagram for describing the outline of a mobile communication system 1 according to the present embodiment. As shown in this drawing, the mobile communication system 1 is configured by a UE (mobile station device) 10, a UE (mobile station device) 10a, and a PDN (Packet Data Network) 20, which are connected via an IP mobile communication network 5. A ProSe Server 90 is provided in a PDN 20. The ProSe Server 90 may be provided in any position of the PDN 20. The UE 10 and the UE 10a ensure secure communication with the ProSe Server 90, and thus, can transmit and receive control information and data.

The UE 10 and the UE 10a are in proximity to each other, and are located in places where the UEs can discover each other in proximity discovery for starting the transmission and reception of data by the ProSe.

The UE 10 and the UE 10a are in proximity to each other, and are located in places where the UEs can perform the locally routed communication for starting the transmission and reception of data by the ProSe.

For example, the IP mobile communication network 5 may be a network configured by a core network and a wireless access network operated by a mobile communication provider, or may be a broadband network operated by a fixed-line communication provider. The IP mobile communication network operated by the mobile communication provider will be described below in detail.

The broadband network refers to an IP communication network operated by a communication provider who connects by ADSL (Asymmetric Digital Subscriber Line) or the like and provides high-speed communication using a digital line such as an optical fiber. The broadband network is not limited to the above example, but may be a network that allows for wireless access using WiMAX (Worldwide Interoperability for Microwave Access) or the like.

The UE 10 is a communication terminal that is connected using an access system such as LTE or WLAN, and can be connected to the IP network by being connected using a built 3GPP LTE communication interface or a WLAN communication interface or the like.

As a specific example, the UE is a portable telephone terminal or a smartphone, or the UE is a tablet computer, a personal computer, or a household electrical appliance and the like, which has a communication function.

The PDN 20 refers to a network that provides a network service for exchanging data in packets, and is, for example, the internet or an IMS.

The PDN 20 is connected to the IP access network by using a wired line or the like. For example, the PDN is established by ADSL (Asymmetric Digital Subscriber Line) or an optical fiber and the like. The PDN is not limited to the above example, but may be a wireless network such as LTE (Long Term Evolution), WLAN (Wireless LAN), or WiMAX (Worldwide Interoperability for Microwave Access).

### [1.1.1 Configuration Example of IP Mobile Communication Network]

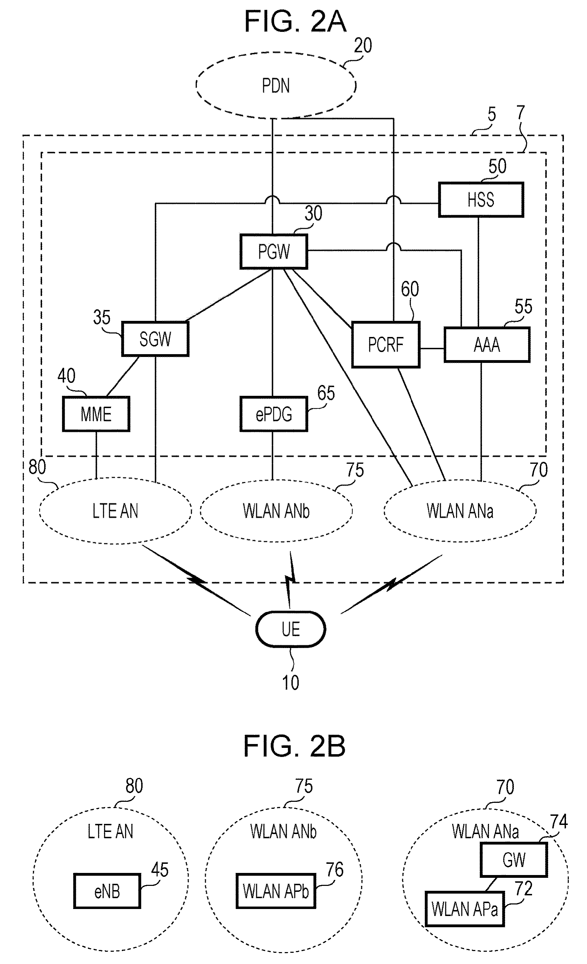

As shown in Fig. 2A, the mobile communication system 1 is configured by the UE 10, the IP mobile communication network 5, and the PDN 20 (Packet Data Network). The UE 10a is a UE different from the UE 10 and has the same configuration as that of the UE 10, and thus, the description thereof will be omitted. In addition to the UE 10 and the UE 10a, a plurality of UEs may be connected to the IP mobile communication network 5, but the description thereof will be omitted for the sake of simplification in the drawings. The IP mobile communication network 5 is configured by a core network 7 and respective wireless access networks. The detailed configuration of the core network 7 is illustrated in Fig. 2A.

The PDN 20 is a network that provides a network service for exchanging data in packets as described using Fig. 1, and is, for example, the Internet or an IMS.

The core network 7 is configured by a PGW (access control device) 30 (Packet Data Network Gateway), a SGW 35 (Serving Gateway), an MME 40 (Mobile Management Entity), an HSS 50 (Home Subscriber Server), an AAA 55 (Authentication, Authorization, and Accounting), a PCRF 60 (Policy and Charging Rules Function), and an ePDG 65 (enhanced Packet Data Gateway).

The wireless access network may be configured by a plurality of different access networks. The respective access networks are connected to the core network 7. The UE 10 can be wirelessly connected to the wireless access network.

The wireless access network may configure an LTE access network (LTE AN 80) that can be connected in an LTE access system, or an access network that can be connected in a WLAN access system.

The access network that can be connected in the WLAN access system may configure a WLAN access network b (WLAN ANb 75) that is connected using the ePDG 65 as a connection device to the core network 7, and a WLAN access network a (WLAN ANa 70) that is connected to the PGW 30, the PCRF 60 and the AAA 55.

The devices have the same configurations as those of the devices of the related art in the mobile communication system using an EPS, and thus, the detailed description thereof will be omitted, but the functions thereof will be briefly described. The PGW 30 is connected to the PDN 20, the SGW 35, the ePDG 65, the WLAN ANa, the PCRF 60 and the AAA 55, and serves as a gateway device between the core network 7 and the PDN 20 to deliver user data.

The SGW 35 is connected to the PGW 30, the MME 40, and the LTE AN 80, and serves as a gateway device between the LTE AN 80 and the core network 7 to deliver user data.

The MME 40 is connected to the SGW 35 and the LTE AN 80, and is an access control device that performs access control of the UE 10 via the LTE AN 80.

The HSS 50 is connected to the SGW 35 and the AAA 55, and manages subscriber information. The AAA 55 is connected to the PGW 30, the HSS 50, the PCRF 60 and the WLAN ANa 70, and performs access control of the UE 10 which is connected via the WLAN ANa 70. The PCRF 60 is connected to the PGW 30, the WLAN ANa 70 and the AAA 55, and manages QoS for the delivery of data.

The ePDG 65 is connected to the PGW 30 and the WLAN ANb 75, and serves as a gateway device between the core network 7 and the WLAN ANb 75 to deliver user data.

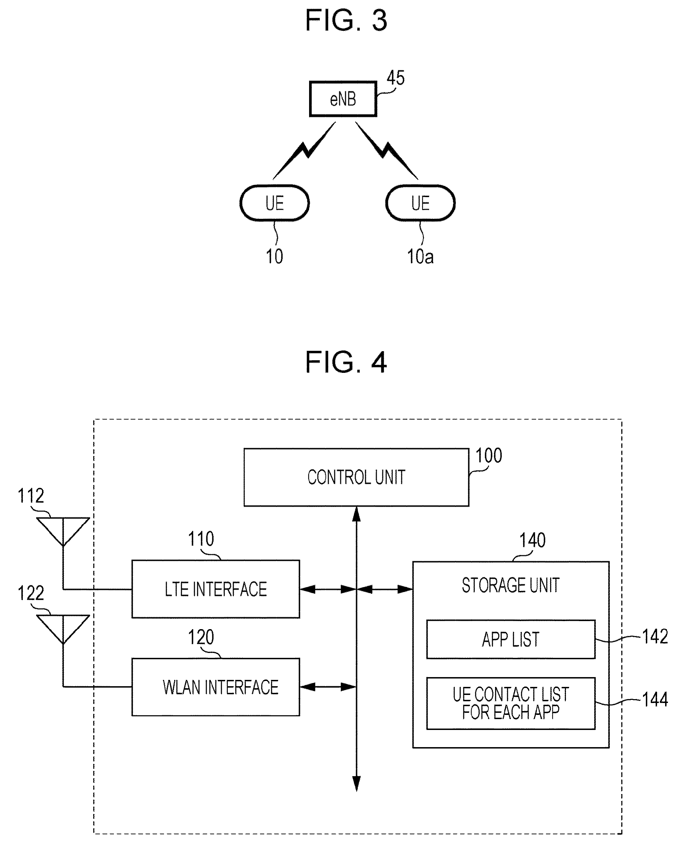

As shown in Fig. 2B, each of the wireless access networks includes a device (for example, base station device or access point device) and the like to which the UE 10 is actually connected. Although various devices compliant with the wireless access networks are considered as a device used for connection, the LTE AN 80 includes the eNB 45 in the present embodiment. The eNB 45 is a wireless base station to which the UE 10 is connected in the LTE access system, and the LTE AN 80 may include one wireless base station or a plurality of wireless base stations. As shown in Fig. 3, the eNB 45 can use the locally routed communication in the communication between the UE 10 and the UE 10a. In the locally routed communication, the UE 10 performs the transmission and reception to and from the UE 10a via only the eNB 45, and the UE 10a performs the transmission and reception to and from the UE 10 via the eNB 45.

The WLAN ANa 70 is configured by a WLAN APa 72 and a GW 74 (Gateway). The WLAN AP 72 is a wireless base station to which the UE 10 is connected in the WLAN access system, and the WLAN AN 70 may be configured by one wireless base station or a plurality of wireless base stations. The GW 74 is a gateway device between the core network 7 and the WLAN ANa 70. The WLAN APa 72 and the GW 74 may be configured by a single device.

As stated above, the gateway included in the WLAN ANa 70 can be connected to the plurality of devices within the core network 7. When the provider that operates the core network 7 and the provider that operates the WLAN ANa 70 are different from each other, the networks can be operated with such a configuration when a trust relationship is established by an operational contract or agreement between the providers. In other words, the WLAN APa 72 is an access network having reliability for the provider that operates the core network 7.

The WLAN ANb 75 is configured by a WLAN APb 76. The WLAN AP 76 is a wireless base station to which the UE 10 is connected in the WLAN access system, and the WLAN AN 75 may be configured by one wireless base station or a plurality of wireless base stations.

As described above, the WLAN ANb 75 is connected to the core network 7 by using the ePDG 65 as a gateway which is the device included in the core network 7. The ePDG 65 has a security function for ensuring safety. When the provider that operates the core network 7 and the provider that operates the WLAN ANa 70 are different from each other, the networks are operated with such a configuration when a trust relationship is not established by an operational contract or agreement between the providers. In other words, the WLAN APa is an access network that does not have reliability for the provider that operates the core network 7, and provides safety in the ePDG 65 included in the core network 7.

In the present specification, the UE 10 being connected to the respective wireless access networks means that the UE is connected to the base station devices included in the respective access networks and to the access points and the like, and data or signals to be transmitted and received pass through the base station device and the access point.

For example, the UE 10 being connected to the LTE AN 80 means that the UE 10 is connected via the eNB 45, and the UE 10 being connected to the WLAN ANa 70 means that the UE 10 is connected via the WLAN APa 72 and/or the GW 74. The UE 10 being connected to the WLAN ANb 75 means that the UE 10 is connected to the WLAN APb 76.

### [1.2 Device Configuration]

Next, the configurations of the respective devices will be simply described with reference to the drawings.

### [1.2.1 Configuration of UE]

Fig. 4 shows the functional configuration of the UE 10 according to the present embodiment. In the UE 10, an LTE interface 110, a WLAN interface 120 and a storage unit 140 are connected to a control unit 100 through a bus.

The control unit 100 is a functional unit for controlling the UE 10. The control unit 100 realizes various processes by reading various programs stored in the storage unit 140 and executing the read program.

The LTE interface 110 is a functional unit that transmits and receives data through wireless communication by using an LTE access method. An external antenna 112 is connected to the LTE interface 110.

The UE 10 may perform communication by being connected to an LTE base station through the LTE interface and being connected to the IP access network 5, or may perform communication by establishing a direct communication path with another UE without using the LTE base station.

The WLAN interface 120 is a functional unit that transmits and receives data through wireless communication by using a wireless LAN access method. An external antenna 122 is connected to the WLAN interface 120.

The UE 10 may perform communication by being connected to a WLAN base station through a WLAN interface and being connected to the IP access network 5, or may perform communication by establishing a direct communication path with another UE without using the WLAN base station.

The storage unit 140 is a functional unit that stores data and programs required for various operations of the UE 10. For example, the storage unit 140 is configured by a semiconductor memory or a hard disk drive (HDD) and the like. An APP list 142 is stored in the storage unit 140.

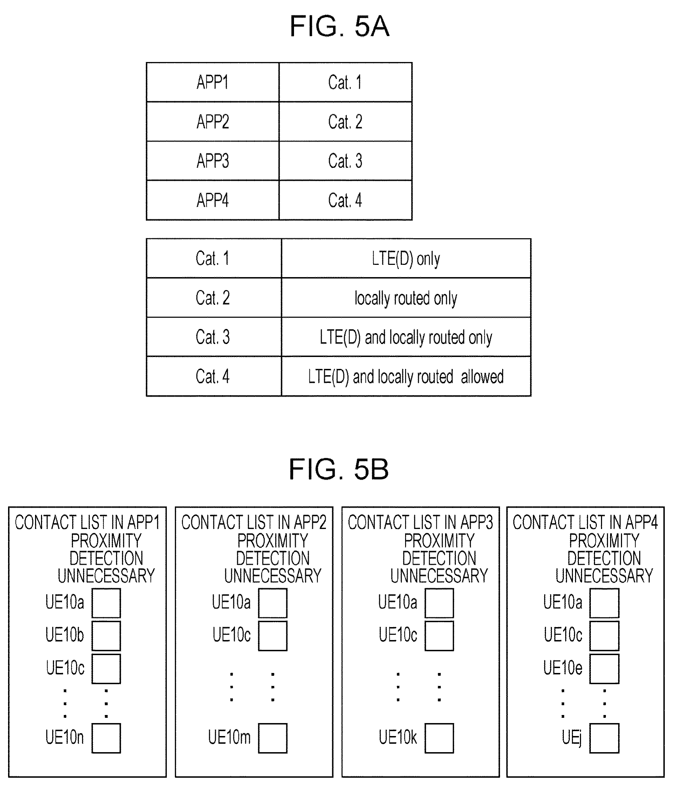

Applications that can be used by the UE 10 are stored in the APP list 142. Fig. 5A is a diagram showing an example of the APP list 142. In the APP list 142 of Fig. 5A, the applications that can be used by the UE 10 are represented as APP 1 to APP 4.

The application may be managed by being distinguished from a different application according to data classification such as VoIP, video streaming, video file, or text.

Alternatively, the application may be managed by distinguishing communication using middleware such as IMS as a single application.

Alternatively, an individual application such as Skype or LINE may be managed by being distinguished by an application name or an application ID.

Alternatively, the application may be managed by being distinguished as a different application by using a combination thereof.

Here, the applications that can be used by the UE 10 may be installed in the manufacturing stage, or may be installed by a user operation.

The UE 10 may manage information of a communication path that can be used for each application by correlating the information with the application. For example, as shown in Fig. 5A, categories (Cat. 1 to Cat. 4) are associated with the applications (APP 1 to APP 4). The respective categories are respectively correlated with the communication paths that can be used by the applications.

The Cat. 1 indicates that it is possible to perform only the direct communication of the LTE(D)and, when it is not able to perform the direct communication of the LTE(D), it is not able to perform the transmission and reception of data. The Cat. 2 indicates that it is possible to perform only the locally routed communication and, when it is not able to perform the locally routed communication, it is not able to perform the transmission and reception of data.

The Cat. 3 indicates that it is possible to perform the direct communication of the LTE(D) and the locally routed communication and, when it is not able to perform the direct communication of the LTE(D) and the locally routed communication, it is not able to perform the transmission and reception of data.

The Cat. 4 indicates that it is possible to use the direct communication of the LTE(D) and the locally routed communication. The Cat. 4 means that the UE 10 is possible to perform the transmission and reception of data, not only via the direct communication of the LTE(D) and the locally routed communication, but also via a macro when the UE 10 is not able to perform the direct communication of the LTE(D) and the locally routed communication.

Here, the communication via a macro means that the UE 10 transmits and receives data by using a communication path via a macro base station such as the eNB 45 using the LTE communication method. In this case, the UE 10 may request the establishment of PDN connection with the PGW 30 through the eNB 45 and the SGW 35, and may perform communication using the established PDN connection. The UE 10 may request the establishment of a radio bearer with the eNB 45, and the establishment of an EPS bearer with the SGW 35 and the PGW 30, and may perform communication using the established bearers.

Meanwhile, when the UE 10 performs the communication with the UE 10a, the UE 10a as the communication partner establishes the communication path via a macro as in the UE 10. As a result, the UE 10 and the UE 10a perform the communication between the UEs by using the communication paths via a macro that are established respectively by the UE 10 and the UE 10a.

Fig. 5B is a diagram showing UE contact list 144 for each APP. In Fig. 5B, the contact lists from the APP 1 to the APP 4 are managed. In the UE contact lists 144 for APPs, the UEs capable of performing direct communication through the ProSe are managed. Alternatively, the UEs capable of performing communication using the respective APPs may be managed.

Proximity detection unnecessary check boxes indicating that it is not able to perform the proximity detection on UEs may be managed in correlation with the UEs of the UE contact lists 144.

When the proximity detection unnecessary check boxes are checked, it means that the UEs of the UE contact lists 144 correlated with the checked check boxes are not able to perform the proximity detection on the UE 10. That is, the UE 10 may manage whether or not to allow the respective UEs of the UE contact lists 144 to perform the proximity detection. The proximity detection unnecessary check boxes may be updated through configuration performed by a user.

Although it has been described in the present example that whether or not the proximity detection is necessary is correlated with the respective APPs of the UE 10, whether or not the proximity detection is necessary may be managed in correlation with the UE contact lists 144. In this case, whether or not the proximity detection is necessary may be configured for all the UEs of the contact lists all at once.

Whether or not the proximity detection is necessary may be managed in correlation with the UE contact lists 144 of all the applications. In this case, whether or not the proximity detection is necessary may be configured for all the UEs of all the contact lists all at once.

That is, based on the proximity detection unnecessary check boxes, the UE 10 can exclude the UE 10 itself from a detection target when the UEs of the UE contact lists 144 detect proximity UEs.

As shown in Fig. 5B, the UEs capable of performing the direct communication through the ProSe may be managed for each application, and the fact that the proximity detection is unnecessary may be managed for each UE managed by each contact list. Alternatively, the UEs that are not able to perform the communication using the APPs may be managed.

The UE 10a to the UE 10n shown in Fig. 5B are UEs different from the UE 10 and the configurations thereof are the same as that of the UE 10, and thus, the detailed description thereof will be omitted.

### [1.2.2 Configuration of ProSe Server]

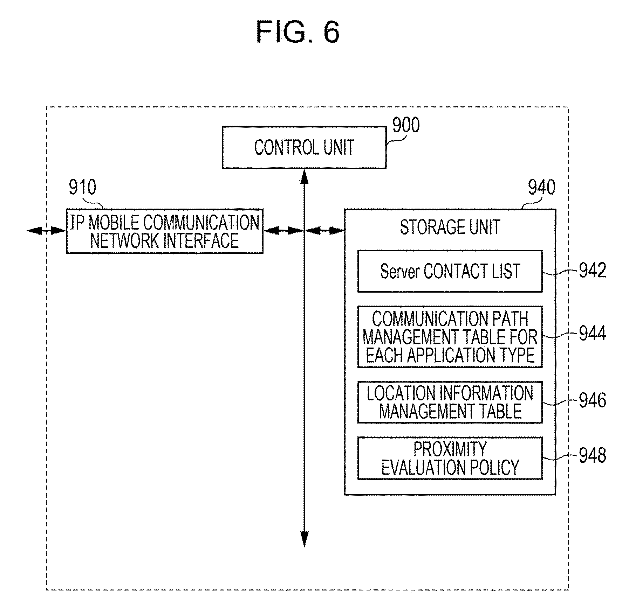

Fig. 6 shows the functional configuration of the ProSe Server 90. In the ProSe Server 90, an IP mobile communication network interface 910 and a storage unit 940 are connected to a control unit 900 through a bus.

The control unit 900 is a functional unit for controlling the UE 10. The control unit 900 realizes various processes by reading various programs stored in the storage unit 940 and executing the read program.

The IP mobile communication network interface 910 is a functional unit for allowing the ProSe Server 90 to be connected to the IP mobile communication network 5.

The storage unit 940 is a functional unit that records programs and data required for various operations of the UE 10. For example, the storage unit 940 is configured by a semiconductor memory, or a hard disk drive (HDD).

The storage unit 940 stores Server contact lists 942, a communication path management table 944, a location information management table 945, and a proximity detection policy 948.

The Server contact lists 942, the communication paths for application classifications 944 and the location information management table 946 may be stored in an external device. For example, the HSS 50 may be used.

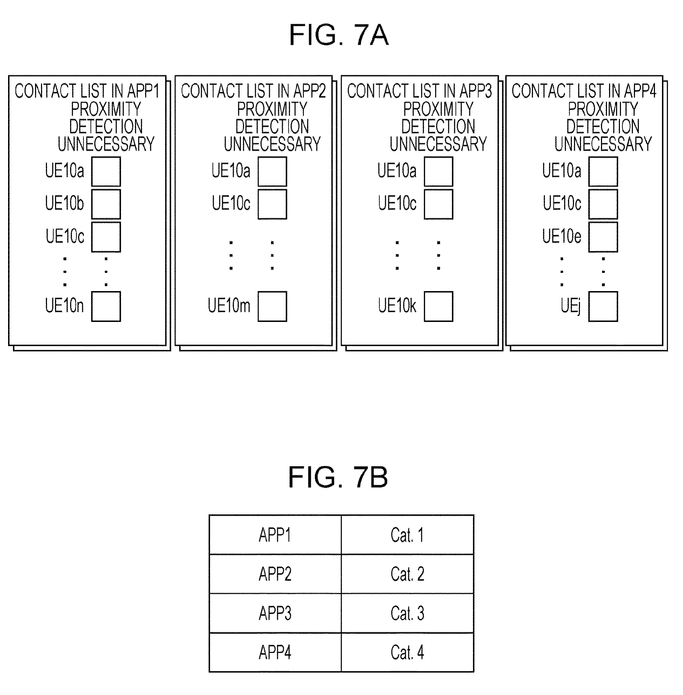

Fig. 7A shows an example in which the Server contact lists 942 are managed for respective applications that can be used by a certain UE in the example of the Server contact lists 942. In Fig. 7A, contact lists in the APP 1 to the APP 4 of the UE 10 are represented.

The application may be managed by being distinguished from a different application according to data classification such as VoIP, video streaming, video file, or text.

Alternatively, the application may be managed by distinguishing, as a single application, communication using middleware such as IMS.

Alternatively, an individual application such as Skype or LINE may be managed by being distinguished by an application name or an application ID.

Alternatively, the application may be managed by being distinguished as a different application by using a combination thereof.

In the contact lists of Fig. 7A, UE lists (UE 10a to UE 10n) that can perform the direct communication with the UE 10 through the ProSe may be managed by being correlated with proximity detection unnecessary check boxes.

The proximity detection unnecessary check box being checked means that the UE 10 is not able to detect the UEs managed as the proximity detection unnecessary, as proximity terminals. That is, the ProSe Server 90 can manage whether or not to determine the respective UEs of the Server contact lists 942 as targets to be subjected to the proximity detection for each application of the UE 10. The proximity detection unnecessary check boxes may be updated through configuration performed by the user.

Although it has been described in the present example that whether or not to the proximity detection is necessary is correlated with the respective UEs of the Server contact lists 942, whether or not to the proximity detection is necessary may be managed in correlation with the Server contact lists 942. In this case, whether or not to the proximity detection is necessary may be configured for all the UEs of the Server contact lists 942 all at once.

Whether or not to the proximity detection is necessary may be managed in correlation with all the applications. In this case, whether or not to the proximity detection is necessary may be configured for all the UEs of all the Server contact lists 942 of the UE 10 all at once.

In the above description, although the contact list for each application of the UE 10 has been described, the ProSe Server 90 similarly stores the ProSe Server contact lists 942 of the UEs (for example, UE 10a to UE 10n) different from the UE 10.

Fig. 7B shows an example of the communication path management table 944 for each application classification. In the communication path management table 944 for each application classification, the applications are managed in correlation with the communication paths that can be used in the applications.

The application may be managed by being distinguished from a different application according to data classification such as VoIP, video streaming, video file, or text.

Alternatively, the application may be managed by distinguishing, as a single application, communication using middleware such as IMS.

As the communication path that can be used in the application, the communication path such as the LTE(D), the WLAN(D) or another method that can be used is managed in correlation with each application.

In the example of Fig. 7B, the categories (Cat. 1 to Cat. 4) that transmit and receive data through the ProSe permitted by the mobile communication provider for applications or services are managed.

The Cat. 1 indicates that it is possible to perform only the direct communication of the LTE(D) and, when it is not able to perform the direct communication of the LTE(D), it is not able to perform the transmission and reception of data. The Cat. 2 indicates that it is possible to perform only the locally routed communication and, when it is not able to perform the locally routed communication, it is not able to perform the transmission and reception of data.

The Cat. 3 indicates that it is possible to perform the direct communication of the LTE(D) and the locally routed communication and, when it is not able to perform the direct communication of the LTE(D) and the locally routed communication, it is not able to perform the transmission and reception of data.

The Cat. 4 indicates that it is possible to use the direct communication of the LTE(D) and the locally routed communication. The Cat. 4 means that the UE 10 can perform the transmission and reception of data, not only via the direct communication of the LTE(D) and the locally routed communication, but also via the macro when the UE 10 is not able to perform the direct communication of the LTE(D) and the locally routed communication.

For example, since the APP 1 is associated with the Cat. 1, only the direct communication of the LTE(D) is supported. Since the APP 2 is associated with the Cat. 2, only the locally routed communication is supported. Since the APP 3 is associated with the Cat. 3, only the locally routed communication and the direct communication of the LTE(D) are supported. When it is possible to use the locally routed communication and the LTE(D) as in the Cat. 3, the UE 10 can select the LTE(D) and the locally routed communication.

Since the APP 4 is associated with the Cat. 4, the UE 10 can perform the direct communication of the LTE(D) and the locally routed communication. The Cat. 4 means that the UE 10 can perform the transmission and reception of data, not only via the direct communication of the LTE(D) and the locally routed communication, but also via the macro when the UE 10 is not able to perform the direct communication of the LTE(D) and the locally routed communication.

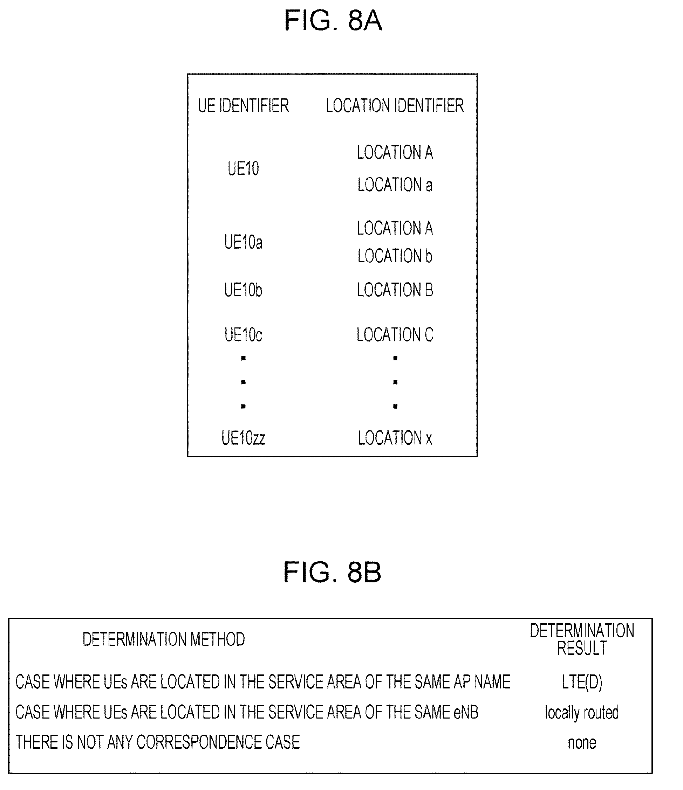

Fig. 8A shows an example of the location information management table 946. In the location information management table of Fig. 8A, location information items of the UEs capable of performing the locally routed communication and the direct communication through the ProSe are stored for the respective UEs. The ProSe Server 90 manages the location information items notified from the UEs in the location information management table 946. In Fig. 8A, the UE 10 is provided in a location A and a location a, and the UE 10a is provided in the location A and a location b. The UE 10b is provided in a location B, the UE 10c is provided in a location C, and the UE 10zz is provided in a location x. As shown in Fig. 8A, the location information managed for each UE may be one or plural.

The location A and the location a of the UE 10 may be, for example, identification information of an LTE base station and identification information of a WLAN base station to which the UE 10 is connected. In addition, the location information managed for each UE may be location information calculated by the GPS, or information for identifying an area. The location information managed for each UE may be a SSID, a BSSID, or a Realm used for connection in the WLAL, or other information.

Although the location for each UE is managed irrespective of the service and application in Fig. 8A, the location for each UE may be managed for each application or each service. When the location for each UE is managed for service, the location for each UE may be managed by being included in the contact list.

Fig. 8B shows an example of the proximity detection policy 948. The proximity detection policy 948 includes a rule for evaluating whether or not the UE 10 and another UE different from the UE 10 are located in proximity based on the location information management table 946. The ProSe Server 90 may evaluate whether or not the communication path (LTE(D)) of the direct communication and the locally routed communication can be used between a communication source UE and a communication target UE based on the proximity detection policy 948.

Fig. 8B shows an example of the determined result and the content of the policy through the proximity detection policy 948. The content of the policy manages determination methods using an AP (access point) name, and an eNB ID (base station information of the mobile communication provider). The determination may be performed using an SSID (service set identifier) or a Realm (facility information) in place of the AP.

Here, the AP is as identifier that can be obtained by the UE when the UE is connected to the WLAN, are obtained in any one of the WLAN APa 72 and the WLAN APb 76, and can be notified to the ProSe Server 90. The ProSe Server 90 manages the locations based on the notification of the location information items of the UEs. When the UE 10 is connected to the WLAN APa 72 or the WLAN APb 76, all of the AP, the SSID and the Realm may be obtained in some cases, or only any one of the AP, the SSID and the Realm may be obtained in some cases.

That is, the UE 10 may notify the ProSe Server 90 of all of the AP, the SSID and the Realm in some cases, or may notify the ProSe Server of only any one of the AP, the SSID and the Realm in some cases. Even when the AP, the SSID and the Realm are obtained from the WLAN (WLAN APa 72 or WLAN APb 76), the UE 10 may not notify the ProSe Server 90 of any one of the AP, the SSID and the Realm or some thereof in some cases.

The eNB ID is an identifier that can be obtained when the UE 10 is connected to the eNB 45. When the eNB ID is newly obtained from the eNB 45, the UE 10 notifies the ProSe Server 90 of the obtained eNB ID. Even when the eNB ID is newly obtained, the UE 10 may not notify the ProSe Server 90 in some cases.

The contents of the respective policies will be described. The AP name is an identification name for identifying each WLAN. Since the UEs connected to the same AP are located? in the area of the single WLAN and are in proximity to each other with a very high probability, these UEs are determined to use the LTE(D). Here, it may be determined to use the locally routed communication in addition to the LTE(D), or it may be determined to use only the locally routed communication.

The SSID is an identifier for identifying the WLAN. One SSID may be configured for only a single WLAN, or one SSID may be configured for a plurality of WLANs. When one SSID is configured for the plurality of WLANs, since an office that is not covered by one WLAN may be present, the UEs that are located in the same SSID are in proximity to each other with a very high probability but not as high as the UEs that are located in the same AP are in proximity to each other, and thus, these UEs are evaluated to be able to use the LTE(D). Here, it may be determined to use the locally routed communication in addition to the LTE(D), or it may be determined to use only the locally routed communication.

The Realm is a name indicating facility information in the WLAN. Since the Realm is the name indicating the facility information, the UEs which have the same Realm and are connected to the WLAN are located? in the facility corresponding to the Realm. Thus, the UEs located in the same Realm are in proximity to each other with a high probability but not as high as the UEs located in the same AP or the same SSID are in proximity to each other, and thus, these UEs are evaluated to be able to use the LTE(D) or the locally routed communication. Here, it may be determined to use the locally routed communication in addition to the LTE(D), or it may be determined to use only the locally routed communication.

The eNB 45 is an LTE base station managed by the mobile communication provider. When the UE 10 is connected to the eNB 45 in order to transmit and receive data to and from the LTE base station, the UE can detect the eNB ID. The UE 10 located in the service area of the LTE base station is located within a circular area having a radius of 500 m. Since two UEs are located in the service area of the same eNB, these UEs are evaluated to be able to use the locally routed communication. Here, it may be determined to use the LTE(D) in addition to the locally routed communication, or it may be determined to use only the LTE(D).

When there is not any correspondence, the UE is evaluated to be none. In this case, there are no usable direct communication paths or the locally routed communication paths, and the ProSe Server 90 may notify the UE 10 such that unnecessary proximity detection is not performed.

### [1.2.3 Configuration of MME]

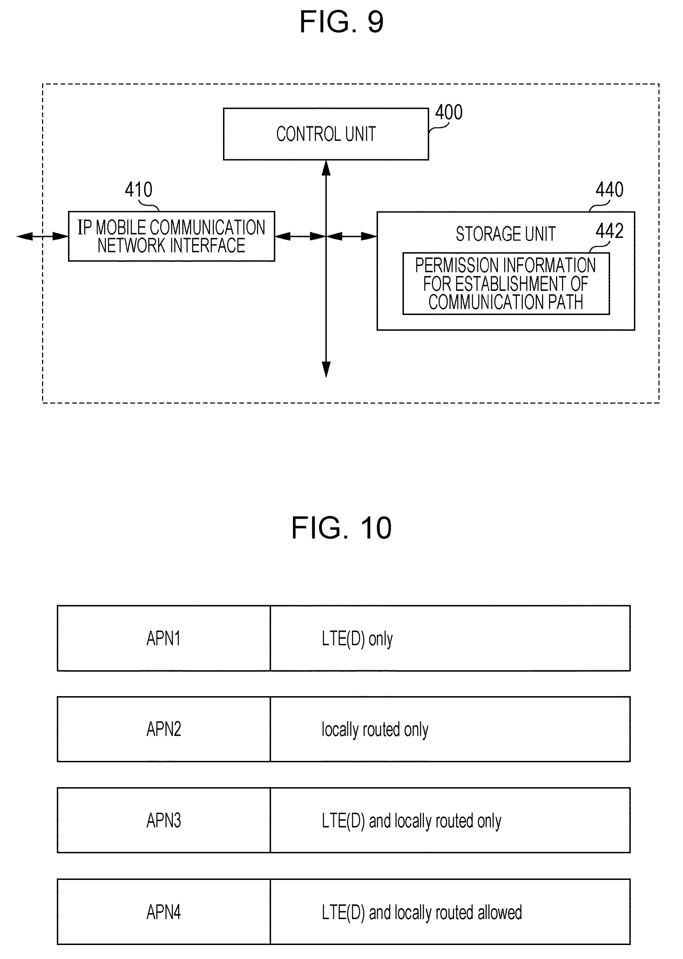

Fig. 9 shows the functional configuration of the MME 40. In the MME 40, an IP mobile communication network interface 410, and a storage unit 440 are connected to a control unit 400 through a bus.

The control unit 400 is a functional unit for controlling the UE 10. The control unit 400 realizes various processes by reading various programs stored in the storage unit 440 and executing the read program.

The IP mobile communication network interface 410 is a functional unit for allowing the MME 40 to be connected to the IP mobile communication network 5.

The storage unit 440 is a functional unit that stores programs and data required for various operations of the UE 10. For example, the storage unit 440 is a semiconductor memory or a hard disk drive (HDD). Permission information 442 for communication path establishment is managed in the storage unit 440. The permission information 442 for communication path establishment may be stored in an external device, and may be stored in, for example, the HSS 50.

Fig. 10 shows an example of the permission information 442 for communication path establishment. In Fig. 10, the communication paths to be permitted are managed in correlation with APNs. Here, the APN is connection destination information for allowing the UE 10 to transmit and receive data by being connected to the IP mobile communication network 5. Here, the UE 10 can use the communication path including a connection destination associated with the APN by notifying the permission information including the APN and being permitted from the MME 40 before the data is transmitted and received.

The APN is previously configured in the manufacturing stage of the UE 10 in some cases, or the APN needs to be separately configured in some cases when a SIM card is separately attached to the UE. The APN may be managed for each communication path, or may permit each communication path. For example, a plurality of APNs may be managed for communication path establishment or services to be provided, and the APN includes an APN correlated with permission information for the establishment of the communication path of the LTE(D) in the direct communication path may be managed for services, an APN correlated with permission information for the establishment of the locally routed communication, and an APN which performs communication via the PGW 30 and is correlated with permission information for the establishment of the communication path via a macro.

In the example of Fig. 10, only the direct communication of the LTE(D) is permitted in an APN 1, only the locally routed communication is permitted in an APN 2, and only the locally routed communication and the direct communication of the LTE(D) are permitted in an APN 3. In the APN 1, the APN 2 and the APN 3, the establishment of the PDN connection between the UE 10 and the PGW 30 is not permitted as the communication path by being connected to the core network through the LTE base station or the WLAN base station.

The direct communication of the LTE(D) and the locally routed communication can be used in an APN 4. In the APN 4, the UE 10 is permitted to transmit and receive data via the macro when the UE 10 is not able to perform the direct communication of the LTE(D) and the locally routed communication, in addition to the direct communication of the LTE(D) and the locally routed communication.

That is, in the APN 4, the establishment of the PDN connection between the UE 10 and the PGW 30 is permitted as the communication path by being connected to the core network through the LTE base station, in addition to the direct communication of the LTE(D).

The MME 40 may manage the APN that can be used by the UE for each UE, and may determine whether or not to permit the establishment of the communication path of the UE based on the APN. The APN that can be used by the UE for each UE may be plural in number. The MME 40 may manage different APNs for each UE, and for example, the MME may manage such that only the APN 1 can be used for the UE 10 and the APN 1 and the APN 2 can be used for the UE 10a different from the UE 10. The APN that can be used by the UE for each UE is managed by the device such as the HSS that manages subscriber information. The MME 40 may obtain the APN that can be used by the UE or permission information for the APN by inquiring of the HSS, and may determine whether or not to permit the establishment of the communication path of the UE based on the obtained information.

Here, the permission information for the APN 1 to APN 4 is not intended as being permitted only for these APNs, but a different communication path may be permitted in an APN different from the APN 1 to the APN 4. The APN may be managed so as not to permit the establishment of the direct communication path of the LTE(D).

The MME 40 may determine whether or not to permit the establishment of the communication path based on the APN notified from the UE 10. For example, when the UE 10 notifies of the APN 4 which permits the establishment of the communication path of the LTE(D) and the communication path via a macro and requests the establishment of the communication path of the LTE(D), the locally routed communication and the communication path via a macro, it is possible to determine whether or not to permit the establishment of the communication path of the LTE(D) based on the APN notified from the UE 10 and the permission information 442 for communication path establishment.

As stated above, the MME 40 is a control device that determines whether or not to permit the service provision and the establishment of the communication path of the UE.

### [1.3 Description of Process]

Next, embodiments of a specific process in the mobile communication system will be described. In the present embodiment, the process includes a location registration procedure performed by the UE 10, a proximity detection procedure of starting the transmission and reception of data, and a procedure of starting the transmission and reception of data. In the following description, LTE Direct for establishing the direct communication path between the UEs by using the LTE communication method is referred to as LTE(D), and WLAN Direct for establishing the direct communication path between the UEs by using the WLAN communication method is referred to as WLAN(D). The function of the LTE(D) or the function of the WLAN(D) in the UE 10 or the UE 10a is valid. The UE 10 can perform the transmission and reception of data with the UE via only the same base station such as the locally routed communication.

### [1.3.1 UE Location Notification Procedure]

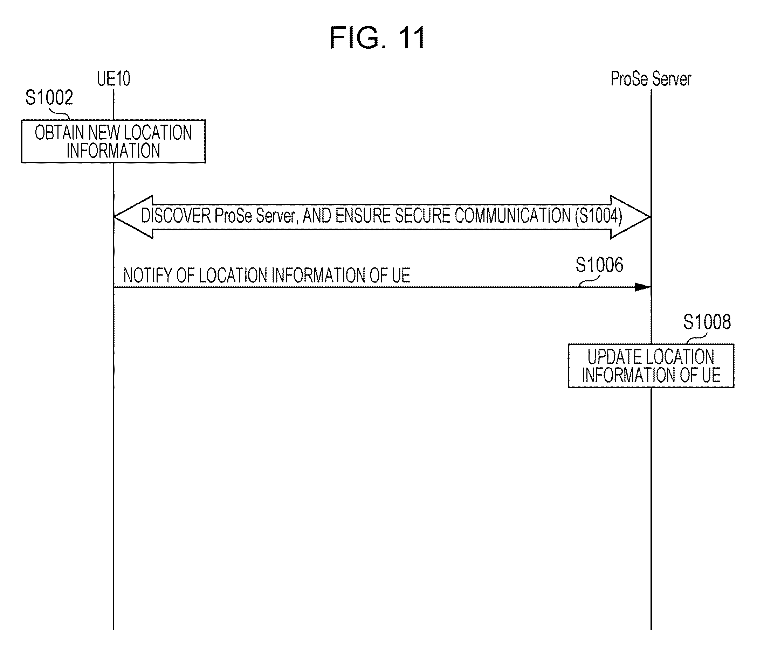

An example of the location registration procedure performed by the UE 10 will be described with reference to Fig. 11. The UE 10 detects its own location information, and notifies the ProSe Server 90 of the detected location. The location information may be notified using a case where new location information is detected or a case where new location information is obtained as its trigger, or the location information may be notified using the start of the application or the start of the UE as its trigger. Hereinafter, an example in which the UE 10 obtains new location information along with its own movement will be described. Although the UE 10 will be described in the following description, the same procedure may be used in the UE 10a.

Initially, the UE 10 obtains new location information along with its own movement (S1002). Here, new connection information is, for example, information for identifying the WLAN base station, and may be an access point (AP) name. An AP may be connected to any one of the WLAN APa 72 and the WLAN APb 76. The new location information may be obtained when the power of the UE 10 is newly turned on even though this UE does not move, or may be obtained when this UE is connected to a new AP due to the ON of the WLAN function.

The new connection information may be obtained by detecting that the SSID or the Realm is obtained from the WLAN (WLAN APa 72 or WLAN APb 76) in addition to detecting that the new AP name is obtained. The new location information may be obtained by detecting that the eNB ID obtained from the eNB 45 is obtained. In this case, a plurality of new connection information items may be obtained.

When GPS information is obtained, the UE 10 may notify the ProSe Server 90 of the location information. When the GPS information is obtained, the UE 10 does not necessarily notify the ProSe Server 90 of the location information, but may notify the ProSe Server of the location information every a predetermined period of time.

The UE 10 that determines to notify of the connection information discovers the ProSe Server 90, and ensures secure communication with the ProSe Server 90 (S1004). The UE 10 previously retains information for being connected to the ProSe Server 90. The UE 10 may be connected to the ProSe Server 90 via the eNB 45 or the WLAN (WLAN APa 72 or WLAN APb 76).

Here, for example, the secure communication being ensured means that communication is performed after connection authentication is performed by, for example, the ProSe Server 90 or a device within another core network, or a high-security communication path using IPSec is established and communication is performed through the established communication path. Another method for increasing security may be used.

Subsequently, the UE 10 that ensures the secure communication with the ProSe Server 90 notifies the ProSe Server of location information of the UE 10 (S1006). Here, the location information notified from the UE 10 may be the AP name obtained from the WLAN (WLAN APa 72 or WLAN APb 76), or may be the SSID or the Realm name. The location information may be the eNB ID obtained from the eNB 45, or may be the TAI obtained from the MME 40. Location information obtained using the GPS may be notified. When the plurality of new connection information items are obtained, the plurality of new connection items may be notified.

The ProSe Server 90 that is notified of the location information of the UE 10 receives the location information of the UE 10 from the UE 10, and updates the location information of the UE (S1008). In this case, when the plurality of location information items (any combinations of AP, SSID, Realm, eNB ID, and GPS may be used) are received from the UE 10, the ProSe Server 90 may update the plurality of location information items of the UE 90.

In the present embodiment, the location information is updated within the ProSe Server 90. However, when the location information is managed in a device different from the ProSe Server 90, the location information may be updated in this device, and this device may be, for example, the HSS 50 managed by the mobile communication provider.

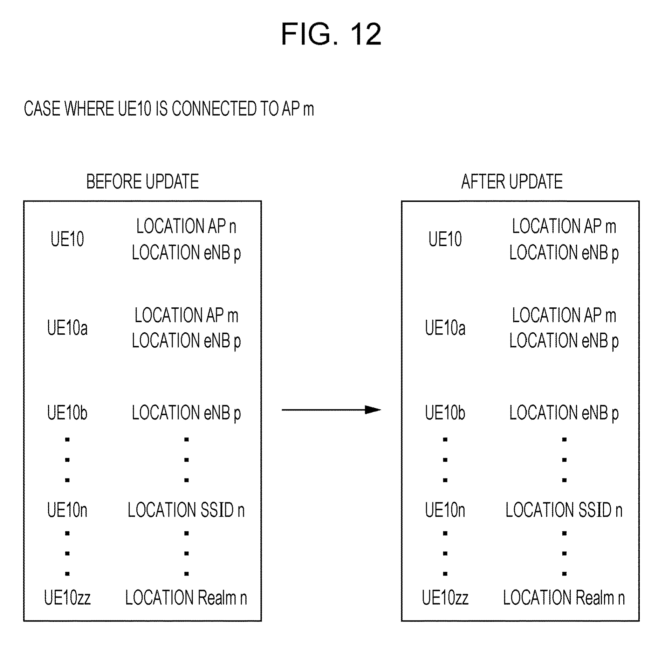

Fig. 12 shows examples of the location information management table 946 before and after the update is performed. Here, the UE 10 notifies the ProSe Server of AP m as the location information. The AP m may be an AP name which is identification information of the WLAN base station.

A location AP n indicates that the AP name is AP n, and a location eNB p indicates that the eNB ID is eNB p. The eNB p may be an eNB ID which is identification information of the LTE base station. A location SSID m indicates that the SSID is SSID m. A location Realm n indicates that the Realm name is Realm n.

In the location information management table 946 before the update is performed, the UE 10 is managed as being located in the service area of the location AP n and the location eNB p. The ProSe Server 90 changes the location AP n of the UE 10 to the location AP m based on the location information from the UE 10.

When the location information from the UE 10 is not received, the ProSe Server 90 determines that there are no proximity UEs capable of performing the transmission and reception of data through the ProSe. Here, the transmission and reception of data through the ProSe means the transmission and reception of data in the direct communication path between the UEs based on the LTE(D) or the WLAN(D).

### [1.3.2 Proximity Detection Unnecessary Procedure]

Next, a proximity detection unnecessary procedure will be described. The proximity detection unnecessary procedure is performed in order for a certain UE not to be detected as a proximity UE by another UE. Here, the proximity detection unnecessary procedure may not be performed in order for a certain UE to be detected as not performing the direct communication of the LTE(D), the locally routed communication and the communication via a macro by another UE. Further, a procedure example in which the UE 10c different from the UE 10 is not detected as a proximity UE of the UE 10 by the UE 10 will be described.

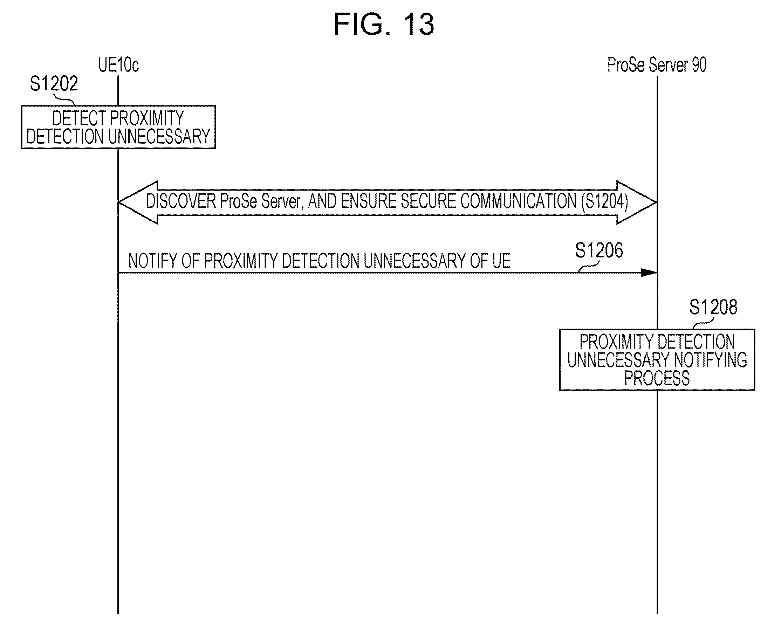

The proximity detection unnecessary procedure will be described with reference to Fig. 13. Initially, the UE 10 detects the proximity detection unnecessary (S1202). Here, for example, the proximity detection unnecessary may be configured such that the UE 10c is not detected by a specific UE through a terminal operation of the user, and may be detected based on the configuration.

The UE 10 that detects the proximity detection unnecessary ensures the secure communication with the ProSe Server 90 (S1204). When secure communication means is already ensured, the UE 10 previously obtains information indicating the location of the ProSe Server 90, and thus, it is possible to detect the ProSe Server 90.

Here, for example, the secure communication being obtained means that communication is performed after connection authentication is performed by the ProSe Server 90 or a device within another core network, or a high-security communication path using IPSec is established and communication may be performed through the established communication path. Another method for increasing security may be used.

Thereafter, the UE 10c transmits a proximity detection unnecessary notification of the UE to the ProSe Server 90 (S1206). When another UE different from the UE 10c requests the detection of proximity UEs from the ProSe Server, the UE 10c requests the excluding of the UE 10c from a proximity detection target from the ProSe Server 90 by transmitting the proximity detection unnecessary notification. In other words, the UE 10c refuses to be detected as the proximity terminal.

Here, the UE 10c may transmit a notification including information indicating the proximity detection unnecessary, a specific application, and information for identifying a specific UE. Here, an example in which the UE 10c transmits a notification including the information indicating the proximity detection unnecessary, the APP 4 and the UE 10 will be described.

The ProSe Server 90 receives the proximity detection unnecessary notification from the UE 10c, and performs a proximity detection unnecessary notifying process based on the notified information (S1208). The ProSe Server 90 updates the contact lists such that the UE 10c is not detected by another UE in the proximity detection unnecessary notifying process.

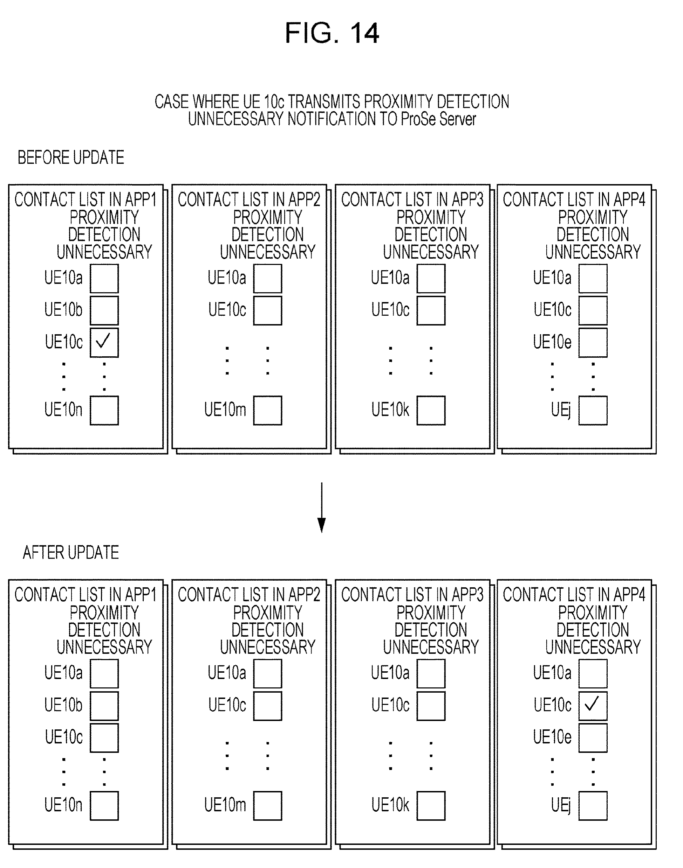

Fig. 14 shows an example of the update in the proximity detection unnecessary notifying process. Here, an example in which the information indicating the proximity detection unnecessary, the APP 4 and the UE 10 are received through the notification of the UE 10c will be described.

The ProSe Server 90 specifies the Server contact list 942 correlated with the APP 4 of the UE 10 based on the received information. As shown in Fig. 14, the update is performed by checking the proximity detection unnecessary check box of the UE 10c in a non-update state in which the proximity detection unnecessary check box of the UE 10c is not checked. Thus, when the UE 10 requests the ProSe Server 90 to detect whether or not there is a proximity terminal that performs communication in the APP 4, the ProSe Server 90 detects a proximity terminal by excluding the UE 10c from the target. That is, even though the UE 10c is located in the proximity of the UE 10, the UE 10c is not detected by the ProSe Server 90. Here, the UE 10c may be detected by the UE 10 so as not to perform the direct communication of the LTE(D) or the like, the locally routed communication and the communication via a macro.

When another UE different from the UE 10c requests the ProSe Server 90 to detect the proximity UE, the UE 10c may request the ProSe Server 90 to make the UE 10c to be a proximity detection target by transmitting the proximity discovery unnecessary notification. In other words, the UE 10c requests to cancel the state in which the UE 10c refuses to be detected and change to a state in which the UE 10c permits to be detected.

Here, the UE 10c may transmit a notification including information indicating that the proximity detection is permitted, a specific application, and information for identifying a specific UE. The ProSe Server 90 receives the notification from the UE 10c, specifies the Server contact list 942 in the same process as the process of configuring the proximity detection necessary, and updates the Server contact list such that the UE 10c is included in the proximity detection target by un-checking the check box based on the received information.

As stated above, UEs other than the UE 10c may request not to make them to be the proximity detection targets, similarly to the UE 10c. Accordingly, the UE that requests the discovery of the proximity UE requests to notify the information regarding the proximity UE among the UEs which do not want to be subjected to the proximity detection. When the information regarding the proximity UE is requested from a certain UE, the ProSe Server 90 detects the proximity UE among the UEs which do not wish to be subjected to the proximity detection, and provides the information regarding the proximity UE.

Although it has been described in the present example that the UE 10c transmits the notification including the information indicating the proximity detection unnecessary, the APP 4 and the information for identifying the UE 10, the UE 10c may transmit a notification including the information indicating the proximity detection unnecessary and the APP 4.

In this case, the UE 10c does not refuse to be subjected to the proximity detection by a specific UE, but the Server contact list 942 correlated with the APP 4 is configured such that the UE 10c is not subjected to the proximity detection by all the UEs. Specifically, the ProSe Server 90 detects whether or not the UE 10c is included in the Server contact list 90 correlated with the APP 4 of all the UEs, and updates the Server contact list such that the UE 10c is not subjected to the proximity detection by validating the check box correlated with the UE 10c.

The UE 10c may transmit a notification including information indicating the proximity detection unnecessary and information for identifying the UE 10.

In this case, the ProSe Server 90 configures the Server contact lists 942 for the all applications correlated with the UE 10 such that the UE 10c is not subjected to the proximity detection. Specifically, the ProSe Server 90 updates all the Server contact lists 942 of the UE 10 such that the proximity detection is not performed by detecting whether or not the UE 10c is listed and by validating the check box correlated with the UE 10c. Here, the UE 10c may be detected by the UE 10 so as not to perform the direct communication of the LTE(D), the locally routed communication and the communication via a macro by validating the check box correlated to the UE 10c.

### [1.3.3 Proximity Detection Process]

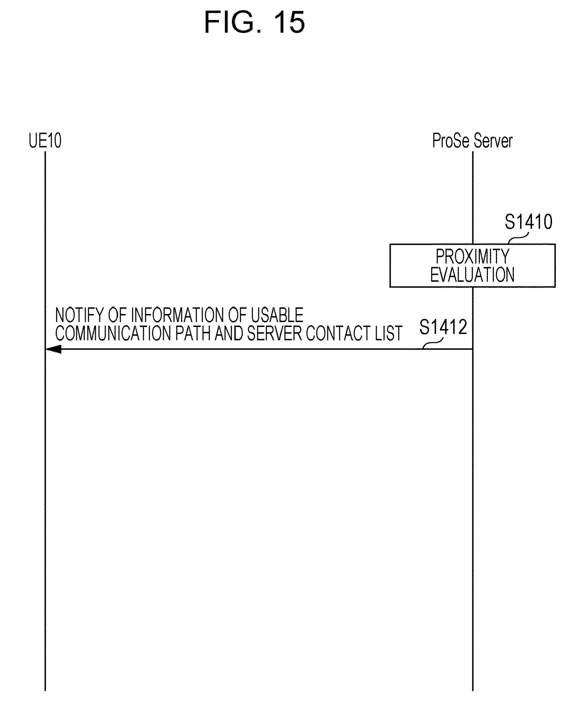

A proximity detection process for allowing the ProSe Server 90 to start the transmission and reception of data will be described. The proximity detection procedure by determining to start the transmission and reception of data will be described with reference to Fig. 15. The ProSe Server 90 may start the proximity detection procedure based on the notification of the location information of the UE, or may start the proximity detection procedure based on the notification of the proximity detection unnecessary. In addition, the ProSe server may start the proximity detection procedure at any timing. The result (the notification of the contact list of S1412) of the proximity detection is notified to the UE 10, but may be similarly used in the UE 10a.

As shown in Fig. 15, the ProSe Server 90 initially performs the proximity detection process in the proximity detection procedure (S1410). In the proximity detection process, it is evaluated whether or not the UE within the Server contact list 942 of the UE 10 and the UE 10 that transmits the location information in a UE location registration procedure are located in proximity. It may be evaluated whether or not the direct communication based on the LTE(D) or the WLAN(D) is performed.

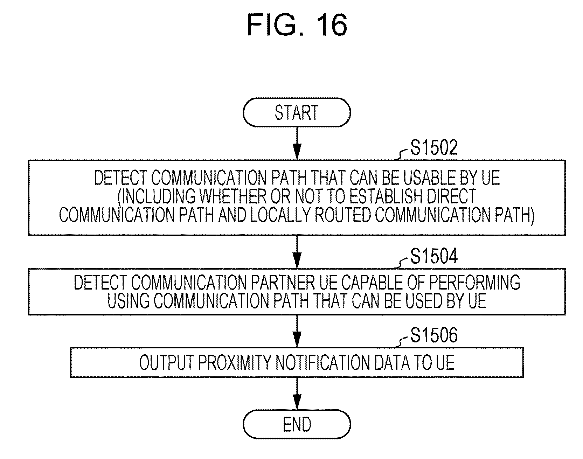

Fig. 16 shows an example of a procedure of the proximity detection process. In the present example, an example in which the UE 10 performs the location registration and the ProSe Server 90 performs the proximity detection process on the UE 10 after the location registration procedure is completed will be described. Initially, the UE 10 detects the usable communication path (S1502). Here, in order for the UE 10 to detect the usable communication path, the ProSe Server 90 may detect the usable communication path based on the communication path management table 944 for each application classification. The ProSe Server 90 may detect the communication path that can be used by the UE 10 based on the communication path management table 944 for each application classification. The ProSe Server may detect all the applications of the contact lists of the UE 10 managed in the Server contact list 942. Alternatively, the UE 10 may notify the ProSe Server 90 of the APP requested for the detection, and the ProSe Server 90 may detect the direct communication path that can be used for the APP 4.

Thus, the ProSe Server 90 can detect that the communication path based on the LTE(D), the locally routed communication path and the communication path via a macro can be used for the APP 4, as communication path that can be used by the UE 10. The ProSe Server 90 can detect that the communication path based on the LTE(D) can be used for the APP 1, as the communication path that can be used by the UE 10. The ProSe Server can detect that the locally routed communication path can be used for the APP 2. The ProSe Server can detect that the communication path based on the LTE(D) or the locally routed communication can be used for the APP 3.

Subsequently, the proximity UE of the UE 10 is detected based on the direct communication path that can be used by the UE 10 detected in S1502 (S1504). Here, in order to detect the UE as the communication partner that can communicate with the UE, the ProSe Server 90 may detect the UE by using the proximity detection policy 948, the location information management table 946 and the Server contact list 942 of the UE 10.

For example, it may be determined whether or not the UE is located in proximity by extracting the UE 10, the location information of the UE in the Server contact list 942 of the APP 4 of the UE 10, and the location information of the UE 10 from the location information management table 942 correlated with each UE and comparing the two extracted location information. It may be determined to perform the direct communication of the LTE(D) and the locally routed communication based on the two location information items.

For example, as shown in Fig. 8B, the determination method based on the location information may be performed by determining that two UEs are located in proximity enough to perform the communication based on the LTE(D) since the two UEs are located in the service area of the same WLAN base station. The determination method may determine that two UEs are located in proximity enough to perform the locally routed communication since the two UEs are located in the service area of the same LTE base station (eNB). When there is not any correspondence case, the determination method may be performed by determining that two UEs are separated at a distance enough to perform neither the locally routed communication nor the communication based on the LTE(D) (none).

As the example of the determination method, it has been described in the present example that the determination is performed using the information of the AP name or the eNB, but the determination method is not limited thereto. It may be detected that the UEs are in proximity using the information of SSID or the Realm or the GPS information, and it may be determine whether or not the communication based on the LTE(D) can be performed or the locally routed communication can be performed.

A specific example in which the ProSe Server 90 detects the proximity UE of the UE 10 (S1504) will be described. When the UE 10 requests the detection of the proximity UE capable of performing the communication in the APP 4, the ProSe Server 90 detects the communication path that can be used by the UE based on the request from the UE 10 (S1502). As described above, detection means detects that the communication is performed based on the LTE(D) or the locally routed communication in the APP 4 based on the detected communication path.

The UE located in proximity enough to perform the communication based on the detected usable communication path (LTE(D) or locally routed path) is extracted based on the Server contact list 942, the location information management table 946 and the proximity detection policy 948. Specifically, the UE capable of using the LTE(D) may be detected by detecting the UE using the same wireless LAN as the location information. The UE capable of using the locally routed communication may be detected by detecting the UE using the same LTE base station (eNB) as the location information.

The detection of whether or not the UE notified as the proximity detection unnecessary on the Server contact list 942 to the ProSe Server 90 is in proximity is not performed. For example, in the state in which the contact list of the APP 4 in Fig. 14 is updated, the proximity detection unnecessary checkbox of the UE 10c is checked. Thus, the detection of whether or not the UE 10 is in the proximity of the UE 10c is not performed.

In so doing, the ProSe Server 90 can detect that the communication path that can be used by the UE 10 in the APP 4 is the communication based on the LTE(D) and can detect the UE in proximity enough to perform the communication based on the LTE(D) and the locally routed communication. The detected UE may be plural in number. As in the APP 4, the ProSe Server 90 can detect that the usable communication path for the APP 1 is the communication based on the LTE(D) and can detect the UE in proximity enough to perform the communication based on the LTE(D).

The ProSe Server 90 can detect that the communication path that can be used in the APP 2 is the locally routed communication as in the APP 4 and can detect the UE in proximity enough to perform the locally routed communication. The ProSe Server 90 can detect that the communication path that can be used in the APP 3 is the communication based on the LTE(D) as in the APP 4 and the locally routed communication and can detect the UE in proximity enough to perform the communication based on the LTE(D) and the locally routed communication.

In the APP 4, the UE 10 can perform the communication via a macro with the UE (for example, UEm) that is not able to use the direct communication of the LTE(D) or the locally routed communication. Meanwhile, in the APP 1, the UE 10 is not able to perform the communication with the UE (for example, UEn) that is not able to perform the direct communication of the LTE(D). In the APP 2, the UE 10 is not able to perform the communication with the UE that is not able to use the locally routed communication. In the APP 3, the UE 10 is not able to perform the communication with the UE that is not able to use the communication of the LTE(D) or the locally routed communication.

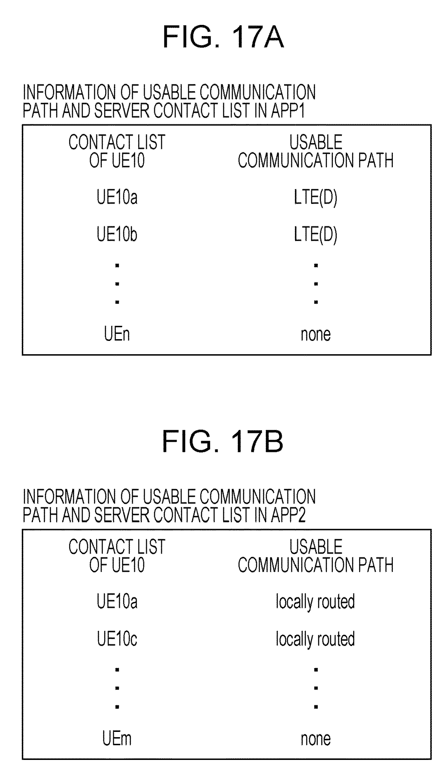

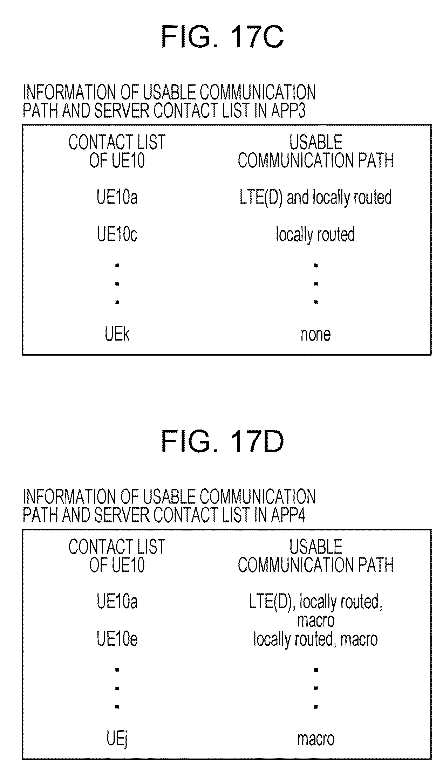

Referring back to Fig. 15, the ProSe Server 90 that completes the evaluation within the Server contact list 942 of the UE 10 in S1410 notifies the UE 10 of the UE capable of performing the communication which is managed for each application, the proximity UE and the information regarding the usable communication path (S1412). For example, as shown in Figs. 17A to 17D, the Server contact list 942 and the usable communication path are transmitted to the UE 10. As shown in Figs. 17A, 17B, 17C and 17D, the notification information transmitted to the UE 10 may be notified for each application. Here, in the examples of Figs. 17A to 17D, Fig. 17A shows the notification information regarding the APP 1, Fig. 17B shows the notification information regarding the APP 2, Fig. 17C shows the notification information regarding the APP 3, and Fig. 17D shows the notification information regarding the APP 4.

Here, in the example of the APP 1 shown in Fig. 17A, the proximity UE and the usable communication path may be notified in correlation with each other, as the proximity detection result. Specifically, the UE 10a may be notified as being in proximity enough to establish the direct communication path based on the LTE(D). The usable communication path (LTE(D)) for a certain UE may be included in the notification, as the proximity detection result.

In addition to the information regarding the UE located in proximity, information regarding the UE that is not located in proximity may be notified. For example, in the case of the APP 1, the UE 10 may be notified that there is not the communication path that can be used for the UE (UEn) that is not located in proximity enough to use the direct communication path of the LTE(D) (none).

When it is not able to establish the communication path that can be used for the communication based on the APP list 142 with the UE that is not located in proximity enough to establish the direct communication path, the UE 10 may determine that the UE 10 is not able to communicate with the UEn through the APP 1 at that time.

In the example of the APP 1, based on the APP list 142, it may be detected that the permitted communication path is only the LTE(D), and it may be determined that the UE 10 is not able to establish the communication path that can be used for the communication with the UE that is not located in proximity. The UE 10 may determine that it is not able to communicate with the UEn through the APP 1 at that time.

Here, in the example of the APP 2 shown in Fig. 17B, the proximity UE and the usable communication path may be notified in correlation with each other as the proximity detection result, similarly to the APP 1. Specifically, it may be notified that the UE 10a is in proximity enough to establish the direct communication path based on the LTE(D) and the locally routed communication. The usable communication path (LTE(D) and locally routed path) for only a certain UE may be included in the notification as the proximity detection result.

In addition to the information regarding the UE located in proximity, the information regarding the UE that is not located in proximity may be notified. For example, in the case of the APP 2, the UE 10 may be notified that there is not the communication path that can be used for the UE (UEm) that is not located in proximity enough to use the direct communication path of the LTE(D) and the locally routed communication path (none). For example, when it is not able to use the locally communication path in the APP 2, it may be notified that the UE 10 does not have the usable communication path that can be used for the UE (UEm) that is not located in proximity (none).

In the example of the APP 2, it may be detected that the permitted communication path is the locally routed communication based on the APP list 142, and the UE 10 may determine that the UE that is not able to perform the locally routed communication is not able to communicate with the UEm through the APP 2 at that time.

Here, in the example of the APP 3 shown in Fig. 17C, the proximity UE and the usable direct communication path may be notified in correlation with each other as the proximity detection result, similarly to the APP 1. Specifically, it may be notified that the UE 10a is in proximity enough to establish the LTE(D) and the locally routed communication path. When the communication path is permitted for the application such as the APP 3, information of a plurality of usable communication paths may be transmitted to the UE 10b. For example, it may be notified that the UE 10a is in proximity enough to establish the LTE(D) and the locally routed communication path. It may be notified that the UE 10d is in proximity enough to establish the locally routed communication path. It may be notified that the UE 10e is in proximity enough to establish the locally routed communication path. Only the proximity UE capable of performing the usable communication path (LTE(D) and the locally routed communication path) may be included in the notification as the proximity detection result.

In addition to the information regarding the UE located in proximity, the information regarding the UE that is not located in proximity may be notified. For example, in the case of the APP 3, the UE 10 may be notified that there is not the direct communication path that can be used for the UE (UEm) that is not located in proximity enough to use the LTE(D) and the locally routed communication path (none). For example, when it is not able to use the LTE(D) and the locally routed communication path in the APP 3, it may be notified that there is not the communication path that can be used for the UE (UEm) that is not located in proximity (none).

In the example of the APP 3, the UE 10 may detect that the permitted communication path is the LTE(D), the locally routed communication path based on the APP list 142, and the UE 10 may determine that the UE that is not able to perform the LTE(D) and the locally routed communication is not able to perform the communication with the UEm through the APP 3 at that time.

Here, in the example of the APP 4 shown in Fig. 17C, the proximity UE and the usable direct communication path may be notified in correlation with each other as the proximity detection result, similarly to the APP 1. When the communication path is permitted for the application as in the APP 4, information of a plurality of usable communication paths may be transmitted to the UE 10a depending on a degree of proximity. For example, the UE 10 may be notified that the UE 10a is in proximity enough to establish the LTE(D) and the locally routed communication path. The UE 10 may be notified that the UE 10d is in proximity enough to establish the locally routed communication path. The UE 10 may be notified that the UE 10e is in proximity enough to establish the LTE(D) and the locally routed communication path.

Only the proximity UE capable of performing the usable direct communication path and the locally routed communication path may be included in the notification as the proximity detection result.

In addition to the information regarding the UE located in proximity, the information regarding the UE that is not located in proximity may be notified. For example, in the case of the APP 4, the UE 10 may be notified that there is not the direct communication path that can be used for the UE (UEj) that is not located in proximity enough to use the LTE(D) and the locally routed communication path (none). Alternatively, the UE 10 may be notified that it is not use the direct communication path and it is possible to use the communication path via a macro.

The UE 10 may detect that it is not able to establish the direct communication path with the UE that is not located in proximity enough to establish the direct communication path and it is possible to perform the communication using the communication path via a macro, based on the APP list 142.

In the example of the APP 4, the UE 10 may detect that the permitted communication path is the LTE(D), the locally routed communication path and the communication path via a macro based on the APP list 142, and may determine that it is possible to perform communication by establishing the communication path via a macro with the UE that is not located in proximity.

Here, in the example of the APP 4, in the proximity detection unnecessary notification procedure, since the UE 10 performs the procedure so as not to perform the communication with the UE 10 in the APP 4, the usable communication path that can be used by the UE 10c is not included even though the UE 10c is included in the Server contact list 942.

Through the above procedure, the UE 10 can detect the UE capable of using the LTE(D) or the locally routed communication from the Server contact list 942, and can determine to perform the proximity detection. The proximity detection in the ProSe Server 90 can be performed based on the request for the detection of the proximity terminal of the UE 10, and can obtain the detection result as the UE 10. Means for requesting the detection of the proximity terminal of the UE 10 may perform the request for the detection of the proximity terminal by requesting the registration of the location information, or means for transmitting a message indicating the request for the detection of the proximity terminal to the ProSe Server 90, other than the request for the registration of the location information may be used.

As stated above, since the procedure of establishing the communication path is performed by detecting that there is the UE in proximity enough to perform the LTE(D) or the locally routed communication, the procedure of establishing the communication path that is unnecessarily performed even though it is not able to perform the communication with the UE is not performed. Thus, it is possible to suppress an unnecessary procedure, an unnecessary terminal discovery process, and a resource regarding terminal discovery.

It is possible to realize the start of the transmission and reception of data through the locally routed communication path by giving the condition for starting the transmission and reception of data through the locally routed direct communication path to the communication source UE.

### [1.3.4 Communication Path Establishment Procedure]

### [1.3.4.1 Communication Path Establishment Procedure 1]

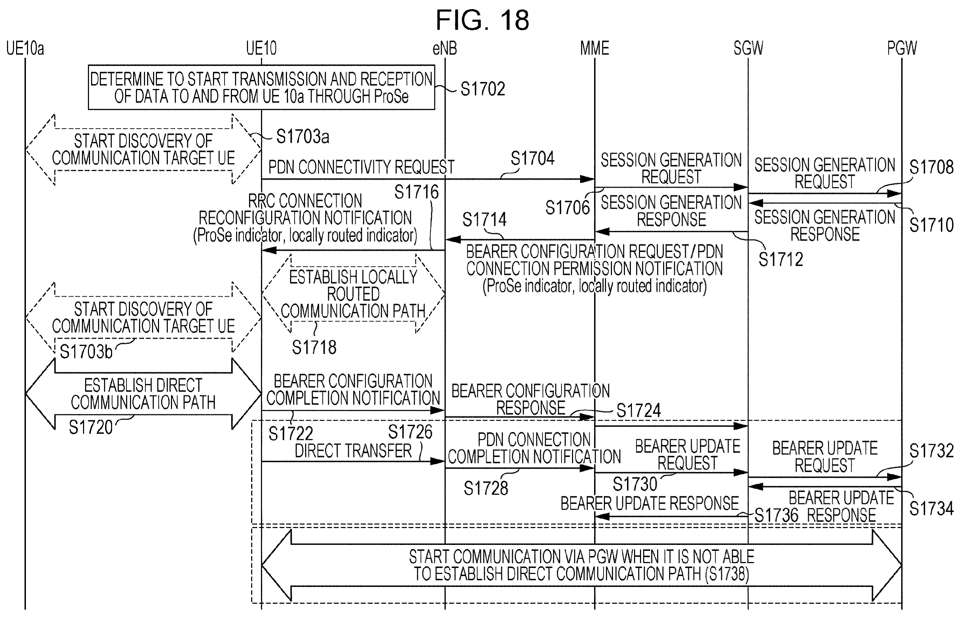

Next, a procedure until the transmission and reception of data through the direct communication, the locally routed communication, or the communication via a macro is started after the proximity detection is performed on the UE capable of performing the direct communication and the locally routed communication will be described. Hereinafter, an example in which the UE 10 performs communication using the APP 4 as the application will be mainly described. The UE 10 detects the UE located in proximity enough to perform the communication using the APP 4 as described above. The information regarding the usable direct communication path is obtained. In the present example, a procedure in a state in which the UE 10 detects the UE 10a as the UE located in proximity based on the notification from the ProSe Server 90 and detects that the usable communication path is the communication path based on the LTE(D) will be descried with reference to Fig. 18. Here, since the APP 4 is associated with the Cat. 4, it is possible to use the communication path via a macro in addition to the communication path of the LTE(D) and the locally routed communication. When it is not able to use the direct communication path of the LTE(D) and the locally routed communication, it is possible to use the communication path via a macro.

When an application to be used is the APP 1, since the APP 1 is associated with the Cat. 1, it is possible to use only the direct communication path of the LTE(D). In this case, when it is not able to use the communication path of the LTE(D) with the communication target UE, it is not able to start the communication.

When an application to be used is the APP 2, since the APP 2 is associated with the Cat. 2, it is possible to use only the locally routed communication path. In this case, when it is not able to use the locally routed communication path with the communication target UE, it is not able to start the communication.

When an application to be used is the APP 3, since the APP 3 is associated with the Cat. 3, it is possible to use only the direct communication path of the LTE(D) and the locally routed communication path. In this case, when it is not able to use the communication path of the LTE(D) and the locally routed communication path with the communication target UE, it is not able to start the communication.

The UE 10 determines to start the communication with the UE 10a in the APP 4 (S1702). This determination may be performed by selecting the UE 10a of the terminals in the proximity of the UE 10 by the user and determining to start the communication, based on the information of the proximity UE notified by the ProSe Server 90.

The UE 10 may previously start the discovery of the communication target UE when the communication path based on the LTE(D) with the UE 10a is established (S1703a). The discovery of the UE is performed to confirm whether or not the communication path based on the LTE(D) can actually be established with the UE 10a.

Even though the ProSe Server 90 notifies that the UE 10 is in proximity enough to establish the communication path based on the LTE(D) with the UE 10a, since it is not apparent that the communication path can be actually established, the UE may be discovered.

Specifically, the discovery of the proximity terminal is performed by transmitting broadcast information based on the frequency used in the LTE wireless access method to a proximity area, and the proximity terminal sends a response to the discovery of the proximity terminal. Among the responses from the proximity terminals which are received by the UE 10, it may be detected that UE 10a is in proximity by detecting the response from the UE 10a.

Here, since the UE 10 may not perform the direct communication of the LTE(D) with the UE 10a, the discovery of the UE 10 may not be necessarily performed.

The UE 10 establishes the communication path based on the LTE(D) with the UE 10a based on the approval of the mobile communication provider. As a method of requesting the approval of the communication provider, the UE 10 may transmit a PDN connectivity request to the MME 40 based on a UE requested PDN connectivity procedure (S1704). Here, the UE 10 transmits the PDN connectivity request including the APN. The PDN connectivity request is a request transmitted to the MME 40 from the UE 10 in order to establish the PDN connection.

The UE 10 retains the APN correlated with the usable direct communication path, and when the usable direct communication path of the APP 4 is the LTE(D), the locally routed communication path and the communication path via a macro and the UE 10 requests the approval for the establishment of the direct communication path of the LTE(D), the establishment of the locally routed communication path and the establishment of the communication path via a macro, the APN correlated with the LTE(D), the locally routed communication path and the communication path via a macro may be selected.

The APN managed in correlation with the locally routed communication path may be plural in umber. For example, a plurality of different APNs such as an APN 2 correlated with the locally routed communication path, and an APN 3 correlated with the LTE(D) and the locally routed communication may be managed.

This means that the APN is managed in correlation with the permission information for the establishment of the locally routed communication path. A plurality of different APNs such as an APN 2 correlated with the locally routed communication, an APN 3 correlated with the LTE(D) and the locally routed communication, and an APN 4 correlated with the LTE(D), the locally routed communication and the communication via a macro may be managed.

For example, the APN may be managed such that only the LTE(D) is permitted in the APN 1.

The UE 10 may retain an APN other than the APN which permits the establishment of the direct communication path and the locally routed communication, such as an APN 5 which does not permit the establishment of the direct communication path and the locally routed communication path.

In order to request the permission for the establishment of the communication path via a macro, the locally routed communication path and the direct communication path of the LTE(D) from the MME 40, the UE 10 selects the APN which permits the establishment of the communication path based on the LTE(D), the establishment of the locally routed communication path and the establishment of the communication path via a macro, among the plurality of APNs, and adds the selected APN to the PDN connectivity request. Although it has been described in the above example that the UE 10 can select the APN 4, the UE 10 may select the APN based on the correlation information by managing the application in correlation with the APN, for example, by using the APN 4 for the APP 4. Alternatively the APN may be arbitrarily selected.

In the discovery of the communication target UE, the resolution of the IP address of the UE 10a may be performed. In order to perform the resolution of the IP address, the IP address of the UE 10a may be simultaneously included when the UE 10 receives a response from the UE 10a.

When the PDN connectivity request is transmitted to the MME 40 (S1704), the UE 10 adds the APN correlated with the usable communication path in the UE 10a notified in the Server contact list 942 to the PDN connectivity request. Here, since the direct communication of the LTE(D) and the locally routed communication are permitted and the application supports the transmission and reception via the macro, the APN 4 is selected, and the APN 4 is included.

The APN which permits the establishment of only the locally routed communication may be used in any type of application. The APN which permits the establishment of the LTE(D) and the locally routed communication may be used. The APN which permits the establishment of the LTE(D), the locally routed communication and the communication via a macro may be used.

Next, the MME 40 receives the PDN connectivity request transmitted from the UE 10, and confirms the APN included in the PDN connection. The confirmation of the APN is performed by determining that the received APN is the APN which permits the LTE(D), the locally routed communication and the communication via a macro based on the permission information 442 for the establishment of the communication path. Thus, the MME 40 detects that the UE 10 requests the permission for the establishment of the direct communication path based on the LTE(D) and for the establishment of the locally routed communication path and the communication path via a macro.

The MME 40 manages the APN that can be used for each UE, and determines whether or not the UE 10 can use the APN notified from the UE 10. When the UE 10 can use the APN, the MME 40 permits the establishment of the communication path via a macro, the establishment of the locally routed communication and the establishment of the communication path correlated with the establishment of the direct communication path correlated with the APN, and does not permit the when the UE 10 is not able to use the APN.

Through the above procedure, the MME 40 can determine to permit the establishment of the direct communication path based on the LTE(D), the establishment of the locally routed communication path and the establishment of the communication path via a macro of the UE 10.

When the MME 40 determines to permit, the MME 40 transmits a bearer configuration request/PDN connection permission notification to the eNB 45 (S1714), and the eNB 45 transmits a RRC connection reconfiguration notification to the UE 10 based on the bearer configuration request/PDN connection permission notification (S1716). Thus, the MME 40 notifies the UE 10 that it is determined to permit the establishment of the direct communication path based on the LTE(D), the establishment of the locally routed communication path and the communication path via a macro.

Here, the bearer configuration request/PDN connection permission notification and the RRC reconfiguration notification may be transmitted by including information indicating whether or not the establishment of the direct communication path is permitted, information indicating whether or not the establishment of the locally routed communication path is permitted, and information indicating whether or not the establishment of the communication path via a macro is permitted.

The information indicating whether or not the establishment of the direct communication path is permitted may be notified by including a flag such as ProSe Indicator which explicitly indicates that the communication path establishment of the direct communication path is permitted. Alternatively, the information indicating whether or not the establishment of the direct communication path is permitted may be notified by including information correlated with the communication path via a macro such as a bearer ID correlated with the direct communication path, and an IP address used for the communication using the direct communication path.

The information indicating whether or not the establishment of the direct communication path is permitted may be implicitly notified without including a flag such as ProSe Indicator which explicitly indicates that the communication path establishment of the direct communication path is permitted. Alternatively, the information indicating whether or not the establishment of the direct communication path is permitted may be notified by including information correlated with the communication path via a macro such as a bearer ID correlated with the communication path via a macro and an IP address used for the communication using the communication path via a macro. Alternatively, the information indicating whether or not the establishment of the direct communication path is permitted may be notified by including a flag different from the ProSe Indicator which explicitly indicates that the communication path establishment of the direct communication path is permitted.

The information indicating whether or not the establishment of the locally routed communication path is permitted may be implicitly notified without including a flag such as locally routed indicator which explicitly indicates that the establishment of the locally routed communication path is permitted. Alternatively, the information indicating whether or not the establishment of the locally routed communication path is permitted may be notified by including information correlated with the communication path via a macro such as a bearer ID correlated with the direct communication path and an IP address used for the communication using the direct communication path.

The information indicating whether or not the establishment of the locally routed communication path is permitted may be implicitly notified without including a flag such as locally routed indicator which explicitly indicates that the establishment of the locally routed communication path is permitted. Alternatively, the information indicating whether or not the establishment of the direct communication path is permitted may be notified by including information correlated with the communication path via a macro such as a bearer ID correlated with the communication path via a macro, an IP address used for the communication using the communication path via a macro. Alternatively, the information indicating whether or not the establishment of the locally routed communication path is permitted may be notified by including a flag different from the locally routed indicator which explicitly indicates that the establishment of the locally routed communication path is permitted.

A flag which is explicitly indicates the establishment of the direct communication path is permitted and the establishment of the locally routed communication is permitted may be notified as one flag without being notified as different flags.

Thus, the MME 40 can notify that the establishment of the direct communication path is permitted, the establishment of the locally routed communication path is permitted and the establishment of the communication path via a macro is permitted, can notify that the establishment of only the direct communication path is permitted, and can notify that the establishment of only the locally routed communication path is permitted and the establishment of only the communication path via a macro is permitted.

The notification may be performed using different flags such as a flag 1 indicating whether or not the establishment of the direct communication path, the locally routed communication path and the communication path via a macro is permitted, a flag 2 indicating whether or not only the establishment of the direct communication path is permitted, a flag 3 indicating whether or not only the establishment of only the locally routed communication path is permitted, and a flag 4 indicating whether or not the establishment of the communication path via a macro is permitted.

The notification is not limited thereto, but information indicating whether or not the establishment of the direct communication path is permitted, information indicating whether or not only the locally routed communication path is permitted and information indicating whether or not the establishment of the communication path via a macro is permitted may be constituted by combining other information elements, and the configured information may be notified.

The MME 40 determines to generate a session executed in the SGW 35 and PGW 30 based on whether or not the establishment of the communication path via a macro is permitted. For example, in the example in which the APN 4 is included in the PDN connectivity request as described above, it is determined to establish the direct communication path, the locally routed communication path and the communication path via a macro, and the session is generated in order to the communication path via a macro.

Here, when the APN 1 is included in the PDN connectivity request, since it is determined to establish only the direct communication path of the LTE(D) and the communication path via a macro is not established, the session may not be generated.

When the APN 2 is included, since it is determined to establish only the locally routed communication path of the LTE(D) and the communication path via a macro is not established, the session may not be generated.

When the APN 3 is included, since it is determined to establish only the direct communication path of the LTE(D) and the locally routed communication path and the communication path via a macro is not established, the session may not be generated.

When the APN 5 is included in the PDN connectivity request, it is determined to establish the communication path via a macro, and the session is generated in order to establish the communication path via a macro. As mentioned above, it may be determined whether or not to generate the session executed in the SGW 35 and the PGW 30 based on the APN.

When it is determined to generate the session, a session generation request (S1706) transmitted from the MME 40 to the SGW 35, a session generation request (S1708) transmitted from the SGW 35 to the PGW 30, a session generation response (S1710) transmitted from the PGW 30 to the SGW 35, and a session generation response (S1712) transmitted from the SGW 35 to the MME 40 as responses to these requests are transmitted and received.

As stated above, the MME 40 generates the session within the core network depending on the APN that grants the permission, that is, establishes the communication path such as the PDN connection.

The eNB 45 receives the bearer configuration request/PDN connection permission notification from the MME 40, and detects the communication path based on the information indicating whether or not the establishment of the direct communication path included in the notification is permitted, and the information indicating whether or not the establishment of the communication path via a macro is permitted.

Here, when the eNB 45 detects that the communication path establishment of the communication path via a macro is permitted based on the information indicating whether or not the establishment of the communication path via a macro is permitted, the UE 10 may allocate a radio resource for performing wireless communication with the eNB 45. For example, when the UE 10 requests the establishment of the PDN connection including the APN 4, it may be detected that the establishment requested from the UE 10 may be the establishment of the direct communication path, the establishment of the locally routed communication path and the establishment of the communication path via a macro and the establishment is permitted by the MME 40, and the establishment of the wireless communication path such as the allocation of the radio resource between the eNB 45 and the UE 10 may be performed based on the detection.

When the eNB 45 detects that only the establishment of the direct communication path is permitted based on the information indicating whether or not the establishment of the direct communication path is permitted, the information indicating whether or not the establishment of the locally routed communication path is permitted and the information indicating whether or not the establishment of the communication path via a macro is permitted, the UE 10 may not allocate the radio resource for performing the wireless communication with the eNB 45. The detection may be performed by detecting that the ProSe Indicator is not included in the notification.

When the eNB 45 may determine to perform the establishment of the wireless communication path including the allocation of the radio resource between the eNB 45 and the UE based on the information indicating whether or not the establishment of the direct communication path is permitted, the information indicating whether or not the establishment of the locally routed communication path is permitted and the information indicating whether or not the establishment of the communication path via a macro is permitted. For example, when it is detected that only the establishment of the locally routed communication is permitted, the wireless communication path including the allocation of the radio resource between the eNB 45 and the wireless resource between the eNB 45 and the UE based on the detection.

When the establishment of the direct communication path is not permitted, the wireless communication path including the allocation of the radio resource between the eNB 45 and the UE may be established based on the fact that the direct communication path is not permitted.

Thereafter, the eNB 45 transmits the RRC connection reconfiguration notification to the UE 10, and notifies of permission information in response to the connection establishment request transmitted from the UE 10. The notification may be transmitted by including the information indicating whether or not the establishment of the direct communication path is permitted, the information indicating whether or not the establishment of the locally routed communication path is permitted and the information indicating whether or not the establishment of the communication path via a macro is permitted, which are received from the MME 40.

Subsequently, the UE 10 receives the RRC connection reconfiguration notification from the eNB 45, and detects whether or not the establishment of the direct communication path, the locally routed communication path and the communication path via a macro is permitted, whether or not only the establishment of the direct communication path of the LTE(D) is permitted, whether or not only the establishment of the locally routed communication path of the LTE(D) is permitted or whether or not only the establishment of the communication path via a macro is permitted, based on the information indicating whether or not the establishment of the direct communication path is permitted, the information indicating whether or not the establishment of the locally routed communication path is permitted, and the information indicating whether or not the establishment of the communication path via a macro is permitted, which are included in the notification and are transmitted from the MME 40. Here, as the method of detecting that the establishment of the communication path based on the LTE(D), the locally routed communication path and the communication path via a macro is permitted, the detection may be performed by detecting that the ProSe Indicator are included.

The MME 40 may add the information used by the UE 10 in order to establish the direct communication path, such as the bearer ID or the IP address used by the UE 10 in order to perform the communication using the direct communication path, or the information regarding the frequency used for the direct communication, to the bearer configuration request/PDN connection permission notification, and may notify the UE 10 of the context configuration request and the radio bearer establishment request. The bearer ID correlated with the direct communication path may be allocated by the eNB 45, and may be notified to the UE 10 by being included in the RRC connection reconfiguration notification.

The MME 40 may notify the UE 10 of the bearer configuration request/PDN connection permission notification and the RRC connection reconfiguration notification including the information used by the UE 10 in order to establish the locally routed communication path, such as the information regarding the bearer ID or the IP address used by the UE 10 in order to perform the communication using the locally routed communication path or a frequency used for the locally routed communication path. The bearer ID correlated with the locally routed communication path may be allocated by the eNB 45, and the RRC connection reconfiguration notification including the bearer ID may be notified to the UE 10.

The MME 40 may notify the UE 10 of the bearer configuration request/PDN connection permission notification and the RRC connection reconfiguration notification including the information used by the UE 10 in order to establish the communication path via a macro, such as the information regarding the bearer ID or the IP address used by the UE 10 in order to perform the communication using the communication path via a macro or a frequency used for the communication path via a macro. The bearer ID correlated with the direct communication path may be allocated by the eNB 45, and the RRC connection reconfiguration notification including the bearer ID may be notified to the UE 10.

Here, the eNB 45 manages information for identifying the UE 10 and information for identifying a bearer such as a bearer ID in correlation with each other in the establishment of the locally routed communication path. The eNB 45 can determine to transmit the UE 10a or the SGW 35 by managing the UE 10 and the bearer ID in correlation with each other and determining whether or not the bearer that can be used by the UE corresponds to the locally routed communication.

The UE 10a performs the same procedure as that of the UE 10, and thus, the eNB 45 may manage the information for identifying the UE 10a and the information for identifying the bearer such as the bearer ID in correlation with each other in the establishment of the locally routed communication path.

The eNB 45 may realize the locally routed communication based on the correlation. For example, the UE 10 may receive the transmitted data, may detect that the locally routed communication is performed based on the bearer ID of the received communication path, may detect that the received data is data to be transmitted to the UE 10 based on information of the transmission destination of the received data, may detect the communication path correlated with the UE 10a from the bearer ID correlated with the UE 10a, and may transmit data in the detected communication path. The UE 10 and the UE 10a can perform the locally routed communication. That is, the UE 10 and the UE 10a can perform the locally routed communication by selecting the communication path in which the locally routed communication is permitted from the bearer ID and transmitting the data.

The eNB 45 may realize the locally routed communication by managing the information of the UE which performs the locally routed communication and the communication path of the UE in correlation with each other. For example, the UE 10 and the UE 10a may manage that the locally routed communication is performed, and may manage the bearer ID used in the locally routed communication of the UE 10 and the bearer ID used in the locally routed communication of the UE 10a in correlation with each other. Thus, the eNB 45 can determine that the detected communication is the locally routed communication addressed to the UE 10a by confirming the bearer ID used by the UE 10.

For example, the UE 10 may receive the transmitted data, may detect that the locally routed communication is performed based on the bearer ID of the received communication path, may detect the bearer ID of the UE 10a correlated with the bearer ID of the received communication path, and may transmit the data in the detected communication path. Thus, the UE 10 and the UE 10a can start the locally routed communication. That is, the UE 10 and the UE 10a can the locally routed communication by selecting the communication path in which the locally routed communication is permitted from the bearer ID and performing the transmission.

As mentioned above, the UE 10 and the UE 10a can start the communication by establishing the locally routed communication path (S1718). When the locally routed communication is established for the communication of the APP 4, the UE 10 selects the locally routed communication, and transmits communication data of the APP 4. More specifically, at the time of transmitting user data of the APN 4, the communication may be performed by selecting the correlated IP address. The communication may be performed may be performed by selecting the correlated bearer ID and by specifying the communication path.

Here, when the direct communication of the LTE(D) is performed, although it has been described that the discovery of the communication target UE is started before the PDN connectivity request is transmitted (S1703a), the discovery may be started after the RRC connection reconfiguration notification is received (S1703b).

When the establishment of the direct communication path is permitted by the MME 40 based on the information indicating whether or not the establishment of the direct communication path is permitted, the UE 10 may establish the direct communication path with the UE 10a (S1720). When the direct communication path establishment is not permitted, the establishment of the direct communication path may not be performed.

In the establishment procedure of the direct communication path based on the LTE(D) with the UE 10a, the UE 10 may establish the direct communication path using the frequency included in the information regarding the establishment of the direct communication path obtained from the RRC connection reconfiguration notification, or may establish the direct communication path by previously allocating a frequency to be used.

Here, the IP address or the bearer ID included in the information regarding the establishment of the direct communication path obtained from the RRC connection reconfiguration notification may be notified to the UE 10a, the notified IP address or bearer ID may be managed in correlation with the direct communication path, and the correlated IP address or bearer ID may be used at the time of performing the direct communication. At the time of establishing the direct communication path with the UE 10a, any one of the UE 10 and the UE 10a may allocate the IP address or the bearer ID and may notify the other one of the IP address or bearer ID, and the other one may obtain the notified IP address or bearer ID, may manage the obtained IP address or bearer ID in correlation with the direct communication path, and may use the IP address or bearer ID at the time of performing the direct communication. Here, the eNB 45 may detect the destination information from the UE 10, and may transmit the data of the UE 10 to the UE 10 by using the locally routed communication path when the UE 10a is the destination. In this case, even if the bearer of the locally routed communication path is designated, when the UE that does not establish the locally routed communication path with the UE 10 except for the UE 10a is the destination, the communication may be stopped. In this case, the eNB may notify to the UE 10 which is the communication source that it is not able to perform the locally routed communication.

A bearer between the eNB 45 and the UE 10 in the communication path via a macro through the eNB 45, the SGW 35 and the PGW 30 form the UE 10, and a bearer between the eNB 45 and the UE 10 in the locally routed communication to the UE 10a from the UE 10 through the eNB 45 may be managed as the same bearer.

That is, the eNB 45 may detect the destination in the transmission of data from the UE 10, may check that the UE 10a is located in the service area of the eNB 45 when the destination is the UE 10a, and may determine to transmit data to the UE 10a by using the locally routed communication path. In this case, the MME 40 or the eNB 45 may allocate a bearer ID allocated in the establishment of the communication path between the eNB 45 and the UE 10 with a bearer ID for the locally routed communication path and a bearer ID for the communication path via a macro as the same bearer ID.

The eNB 45 may detect the destination in the transmission of data from the UE 10, and may determine to use the communication path via a macro from the SGW 35 to the PGW 30 when the destination is the UE other than the UE 10a which does not establish the locally routed communication path.

As discussed above, the UE 10 and the UE 10a can start the communication by establishing the direct communication path. When the communication path based on the LTE(D) is established for At the communication of the APP 4, the UE 10 selects the direct communication path in order to transmit communication data of the APP 4, and transmits the communication data of the APP 4. More specifically, at the time of transmitting user data of the APN 4, the correlated IP address may be selected, and the communication may be performed. The correlated bearer ID may be selected, the communication path may be specified, and the communication may be performed.

The UE 10 in which the establishment of the communication path of the LTE(D) with the UE 10a is completed transmits a RRC reconfiguration completion notification to the eNB 45 in order to notify that the establishment of the locally routed communication path and the direct communication path is completed (S1722). The eNB 45 may transmit the bearer configuration response to the MME 40 by confirming that the UE 10 and the UE 10a establish the direct communication path of the LTE(D) and the locally routed communication path, and may notify that the establishment of the direct communication path and the locally routed communication path is completed (S1724).

Subsequently, the UE 10 determines to establish the communication path via a macro based on the information indicating whether or not the communication path via a macro is established. In the establishment procedure of the communication path via a macro, the UE 10 may establish the communication path using the frequency obtained from the RRC connection reconfiguration notification, may establish the communication path by previously allocating a frequency to be used.

Here, the IP address or the bearer ID obtained from the RRC connection reconfiguration notification may be notified to the UE 10a, the notified IP address or bearer ID may be managed in correlation with the communication path via macro, and the correlated IP address or bearer ID may be used at the time of performing the communication via a macro.

When the establishment of the communication path via a macro is permitted based on the information indicating whether or not the establishment of the communication path via a macro is permitted, the UE 10 may transmit a direct transfer message to the eNB 45 (S1726). The eNB 45 may transmit the PDN connection completion notification to the MME 40 based on the reception of the direct transfer message (S1728).

As stated above, the UE 10 notifies the MME 40 that the communication path via a macro is established by transmitting the direct transfer message and the PDN connection completion notification.

Here, when the PDN connection between the PGW 30 and the UE 10 is established as the communication path via a macro, the MME 40 performs the procedure with respect to the SGW 35 and the PGW 30 after the bearer configuration response or the PDN connection completion notification is received, and updates the bearer configuration. Specifically, the MME 40 transmits a bearer update request to the SGW 35 (S1730), and the SGW 35 transmits the bearer update request to the PGW 30 based on the reception (S1732). The PGW 30 transmits a bearer update response to the SGW 35 as a response (S1734), and the SGW 35 transmits the bearer update response to the MME 40 based on the reception (S1736). Through the above procedure, bearer information is updated in each device.

As mentioned above, the UE 10 can establish the communication path via a macro, the locally routed communication path and the direct communication path with the UE 10a by requesting the establishment of the PDN connection using the APN 2 to the APN 4. The UE 10 can establish the direct communication path with the UE 10a by requesting the establishment of the PDN connection using the APN 1. The UE 10 can establish the communication path via a macro by requesting the establishment of the PDN connection using the APN 7.

Through the above procedure, the UE 10 that performs the communication in the APP 4 can establish the direct communication path of the LTE (D), the locally routed communication path and the communication path via a macro. Here, the UE 10 notifies the PDN connectivity request including the APN 4 that permits the communication path of the LTE(D), the locally routed communication path and the communication path via a macro, and thus, the UE 10 can establish the LTE(D) and the communication path via a macro.

Here, the UE 10 can transmit and receive data by using the communication path via a macro, the locally routed communication path and the direct communication path with the UE 10a. Here, the UE 10 may select any one of the communication path via a macro, the locally routed communication path and the direct communication path with the UE 10a. The UE 10 may manage a priority for selecting the direct communication path, the locally routed communication path and the communication path via a macro, and may select the communication path via a macro, the locally routed communication path or the direct communication path based on the priority.

For example, When the direct communication path of the LTE(D), the locally routed communication path and the communication path via a macro can be used as in the APP 4, the UE 10 may manage the priority of the direct communication path of the LTE(D), the locally routed communication path and the communication path via a macro. Here, the priority of the direct communication path of the LTE(D), the locally routed communication path and the communication path via a macro may be managed in correlated with the PDN connection of the direct communication path of the LTE(D), the PDN connection of the locally routed communication path and the PDN connection of the communication path via a macro. The priority of the direct communication path of the LTE(D), the locally routed direct communication path and the communication path via a macro may be managed in correlation with the bearer of the direct communication path of the LTE(D), the bearer of the locally communication path and the bearer of the communication path via a macro.

Here, when the communication path via a macro and the locally routed communication path are established as in the APN 4 and it is not able to maintain the direct communication path or the locally routed communication path with the UE 10a, the UE 10 may start the communication via a macro. That is, when the UE 10 is not able to start the direct communication of the LTE(D) and the locally routed communication with the UE 10a, the UE 10 starts the communication via a macro (PGW 30) (S1738).

Here, when the communication path via a macro and the locally routed communication path are established as in the APN 4 and it is not able to maintain the direct communication path with the UE 10a, the UE 10 may start the locally routed communication or the communication via a macro. That is, when the UE 10 is not able to start the direct communication of the LTE(D) with the UE 10a, the UE 10 starts the locally routed communication or the communication via a macro.

Here, the PDN connection of the communication path via a macro through the APN 4, the PDN connection of the communication path of the LTE(D) through the APN 4 and the PDN connection of the locally routed communication path through the APN 4 may be managed. Since the UE 10 is not in proximity enough to perform the LTE(D) and the locally routed communication with the UE 10a, the UE 10 may perform the communication by selecting the PDN connection of the direct communication path via a macro through the APN 4 and the UE 10a. Since the UE 10 is not in proximity enough to perform the LTE(D) with the UE 10a, the UE 10 may perform the communication by selecting the PDN connection of the direct communication path via a macro and the locally routed communication through the APN 4 and the UE 10a.

Through the above procedure, the UE 10 can start the direct communication of the LTE(D), the locally routed communication or the communication via a macro with the UE 10a.

Although it has been described in the present example that the establishment of the communication path is performed when the UE 10 starts the direct communication, the locally routed communication and the communication via a macro with the UE 10a by transmitting the PDN connectivity request by the UE 10, the present embodiment is not limited thereto, but the establishment of the communication path may be previously performed. For example, the UE 10 obtains the permission for the direct communication path based on the fact that the PDN connectivity request for the establishment of the direct communication path of the LTE(D), the locally routed communication path and the communication path via a macro is previously transmitted when the terminal is started or the application is started, the UE 10 may determine that the UE 10a is in proximity enough to perform the direct communication, and may immediately establish the direct communication path when it is determined to start the direct communication (S1717).

For example, when the communication of the APP 4 is performed, the UE 10 requests the permission for the establishment of the communication path via a macro, the locally routed communication path and the communication path of the LTE(D) by selecting the APN which permits the LTE(D), the locally routed communication path and the communication via a macro and adding the selected APN to the PDN connectivity request.

The UE 10 receives whether or not the establishment of the communication path of the LTE(D), the locally routed communication path and the communication path via a macro are permitted, and establishes the direct communication path of the LTE(D), the locally routed communication path and the communication path via a macro when the communication path establishment is permitted.

When the MME 40 permits the establishment of the communication path based on the LTE(D), and the establishment of the communication path via a macro and the locally routed communication path, information such as SSID for allowing the UE 10 and the UE 10a to perform the direct communication may be included.

As described above, the UE 10 performs the establishment procedure after the permission of the mobile communication provider is obtained for the establishment of the direct communication path, the locally routed communication path and the communication via a macro correlated with the application. The request for the permission is performed based on the information correlated with the direct communication path.

Thus, for example, when there are a plurality of applications correlated with the LTE(D), the permission request may not be transmitted to an individual application.

For example, when the communication using the LTE(D), the locally routed communication and the communication path via a macro is permitted at the time of starting the communication of the APP 4, if the communication using the LTE(D), the locally routed communication path and the communication path via a macro are performed by the application different from the APP 4, it is determined that the communication path establishment is already permitted, and the direct communication path, the locally routed communication path and the communication path via a macro may be established.

The UE 10a as the communication partner may perform the permission procedure based on the PDN connectivity request described above in order to obtain the permission of the communication provider at the time of the establishment of the direct communication path, the locally routed communication path and the communication path via a macro.

Alternatively, the permission procedure may be performed based on the PDN connectivity request when the establishment of the direct communication path, the locally routed communication path and the communication via a macro is obtained from the UE 10. That is, at the time of establishing the direct communication path, the locally routed communication path and the communication path via a macro between the UE 10 and the UE 10a, the completion of the permission procedure of the UE 10a as the communication partner may be one condition for establishing the direct communication path, the locally routed communication path and the communication path via a macro.

When data of the application is transmitted and received, the UE 10 performs the communication by managing the direct communication path, the locally routed communication path and the communication path via a macro correlated with the application and selecting the direct communication path, the locally routed communication path or the communication path via a macro.

Here, the UE 10 may select the direct communication path of the LTE(D) in the state in which the direct communication path, the locally routed communication path and the communication path via a macro are established using the APN such as the APN 4 which permits the establishment of the direct communication path of the LTE(D), the locally routed communication path and the communication path via a macro.

The UE 10 may select the locally routed communication path in the state in which the direct communication path, the locally routed communication path and the communication path via a macro are established using the APN such as the APN 4 which permits the establishment of the direct communication path of the LTE(D), the locally routed communication path and the communication path via a macro.

In this case, the UE 10 may transmit and receive data by managing the application and the communication path in correlation with each other, managing the priority of the direct communication path of the LTE(D), the locally routed communication path and the communication path via a macro correlated with the specified application, and selecting the communication path of the LTE(D), the locally routed communication path and the communication path via a macro correlated with the specified application.

Thus, the UE 10 can transmit and receive the data of the application using the direct communication path of the LTE(D), the locally routed communication path and the communication path via a macro by selecting the direct communication path, the locally routed communication path or the communication path via a macro.

The UE 10 may retain the bearer ID correlated with the established direct communication path, the bearer ID correlated with the communication path established with the eNB 45 and the bearer ID correlated with the communication path established with the PGW 30, may manage the communication path in correlation with the beater ID, and may manage the priority between the bearer ID correlated with the direct communication path, the bearer ID correlated with the established locally routed communication path and the bearer ID correlated with the communication path via a macro.

Thus, the UE 10 can perform the transmission and reception by selecting the bearer ID correlated with the direct communication path, the bearer ID correlated with the locally routed communication path, or the communication path via macro.

The UE 10 may establish the PDN connection for performing the communication by using the established direct communication path, may establish the PDN connection for the performing the communication by using the locally routed communication path, may establish the PDN connection for the performing the communication by using the communication path via a macro, may manage the communication and the PDN connection in correlation with each other, and may manage the priority between the PDN connection of the direct communication path, the PDN connection of the locally routed communication path and the PDN connection of the communication path via a macro.

Thus, the UE 10 can transmit and receive data of the application that performs the direct communication, the locally routed communication and the communication via a macro by selecting the PDN connection of the communication path via a macro, the PDN connection for performing the communication using the locally routed communication path, or the PDN connection of the direct communication path.

Here, it is necessary to specify the application corresponding to the data to be transmitted and received when the data is transmitted and received, and specifying means may specify the application based on IP5 tuple information such as a transmission source address, a transmission destination address, a protocol number, a transmission source port number, and a transmission destination port number. The application may be specified based on the identification information such as an application ID.

For example, when it is detected that the transmission data corresponds to the application such as APP 5 that performs the communication on the communication path via a macro, the transmission data is transmitted by selecting the communication path via a macro which is the communication path correlated with the application. When it is detected that the transmission data corresponds to the application such as the APP 1 capable of performing the communication using the LTE(D), the communication is performed by selecting the communication path based on the LTE(D) which is the communication path correlated with the application.

When it is detected that the transmission data corresponds to the application such as the APP 2 capable of performing the communication using the locally routed communication path, the communication is performed by selecting the locally routed communication path which is the communication path correlated with the application.

When it is detected that the transmission data corresponds to the application such as the APP 3 capable of performing the communication using the locally routed communication path and the LTE(D), the communication is performed by selecting the LTE(D) or the locally routed communication path which is the communication path correlated with the application, but the communication is performed by selecting the communication path by the selection method based on the priority information described above.

### [1.3.4.2 Communication Path Establishment Procedure 2]

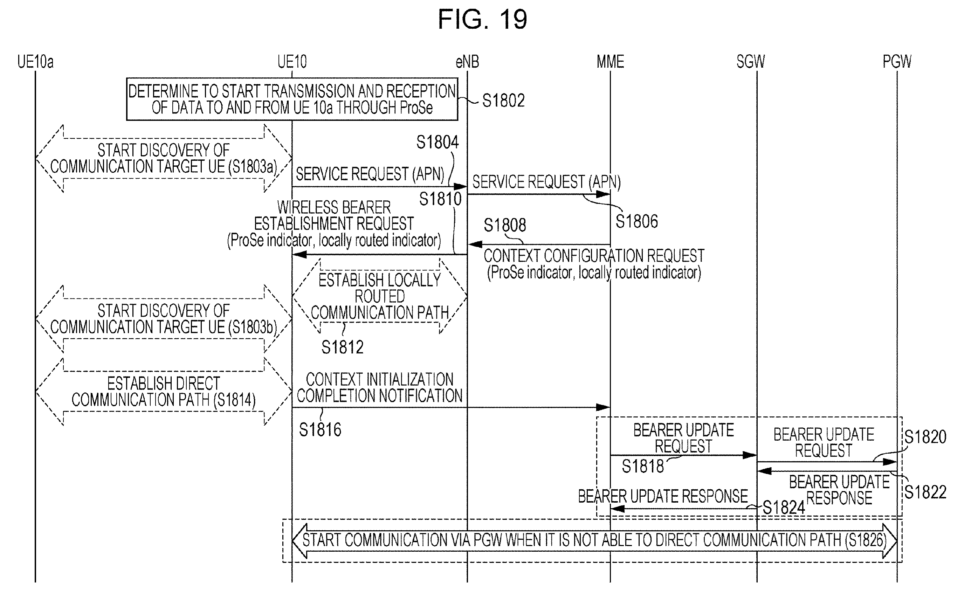

A method different from the method described in Communication Path Establishment Procedure 1 of 1.3.4.1 will be described as the procedure of performing the proximity detection on the UE capable of performing the direct communication and starting to transmit and receive the data through the ProSe. In Communication Path each Procedure 1 of 1.3.4.1, the procedure of requesting that the provider is to permit the establishment of the communication path of the UE is performed based on the UE requested PDN connectivity procedure. Meanwhile, in the present example, the procedure of requesting that the provider is to permit the establishment of the communication path of the UE is performed based on a service request procedure. Communication Path Establishment Procedure 2 through the direct communication will be described with reference to Fig. 19.

In the present example, an example in which the UE 10 performs the communication with eh UE 10a through the APP 4 will be mainly described. Here, the UE 10 detects the UE located in proximity enough to perform the communication by using the APP 4 as described above. The information regarding the usable communication path is obtained. In the present example, a procedure starting from a state in which the UE 10 detects the UE 10a as the UE located in proximity based on the notification from the ProSe Server 90 and detects that the usable communication path is the communication path based on the LTE(D) and the locally routed communication path will be described.

Initially, the UE 10 determines to start the transmission and reception of data to and from the UE 10a through the ProSe (S1802). A specific determination method is the same as the method (S1702) in which the UE 10 determines to start the transmission and reception of data to and from the UE 10a through the ProSe in Communication Path Establishment Procedure 1 described with reference to Fig. 18, and thus, the description thereof will be omitted.

The UE 10 may start the discovery of the communication target UE before the communication path via a macro and the communication path based on the LTE(D) with the UE 10a is established (S1803a). The specific method is the same as the method (S1702) of starting the discovery of the communication target UE in Communication Path Establishment Procedure 1 described with reference to Fig. 18, and thus, the description thereof will be omitted.

The UE 10 establishes the communication path based on the LTE(D) and the locally routed communication path with the UE 10a based on the approval of the communication provider. As a method of requesting the approval of the communication provider, the service request may be transmitted to the eNB 45 based on the service request procedure of the UE (S1804). Here, the UE 10 transmits the service request by adding the APN to the service request.

In the procedure described herein, when the communication path established by the method described in 1.3.4.1 Communication Path Establishment Procedure 1 is changed from the connected state to the connection standby state (idle), the service request may be transmitted in order for the UE 10 and the UE 10a to change from a connection standby state (idle) to a connected state.

The UE 10 retains the APN correlated with the usable direct communication path, and when the usable communication path of the APP 4 is the communication path of the LTE(D), the locally routed communication path and the communication path via a macro and the UE 10 requests the approval for the establishment of the direct communication path of the LTE(D), the locally routed communication path and the communication path via a macro, the APN correlated with the LTE(D), the locally routed communication path and the communication path via a macro is selected.

This means that the APN is managed in correlation with permission information for the establishment of the direct communication path, the locally routed communication path and the communication path via a macro. For example, the APN is managed such that the LTE(D), the locally routed communication path and the communication via a macro are permitted in the APN 4.

The APN which permits only the direct communication path may be managed. For example, the APN may be managed such that only the communication of the LTE(D) is permitted in the APN 1.

The APN which permits the locally routed communication may be managed. For example, only the locally routed communication may be permitted in the APN 2, and the communication of the LTE(D) and the locally routed communication may be permitted in the APN 3.

The UE 10 may retain an APN other than the APN which permits the establishment of the direct communication path and the locally routed communication path, such as an APN 5 which does not permit the establishment of the direct communication path and the locally routed communication path.

In order to request the permission for the establishment of the direct communication path of the LTE(D), the locally routed communication path and the communication path via a macro from the MME 40, the UE 10 selects the APN which permits the LTE(D), the locally routed communication path and the communication via a macro, among the plurality of APNs, and adds the selected APN to the service request. In the above example, the UE 10 can select the APN 4. However, the UE may manage the application in correlation with the APN such that the APN 4 is used for the APP 4, and may select the APN based on the correlation information. Alternatively, the APN may be arbitrarily selected.

In the discovery of the communication target UE, the resolution of the IP address of the UE 10a may be performed. In order to perform the resolution of the IP address, the IP address of the UE 10a may be simultaneously included when the UE 10 receives a response from the UE 10a.

When the service request is transmitted to the eNB 45 (S1804), the UE 10 adds the APN corresponding to the usable communication path of the UE 10a notified in the Server contact list 942 to the service request. Here, since the application that supports the direct communication of the LTE(D), the locally routed communication and the communication via a macro is used, the UE 10 adds the APN 4 to the service request.

In any type of application, the direct communication path of the LTE(D), the locally routed communication path and the communication path via a macro may be established. When the direct communication paths of the LTE(D), the locally routed communication path and the WLAN(D) can be established, the UE 10 may arbitrarily determine the direct communication path, the locally routed communication path and the communication path via a macro, or may determine the direct communication path by using the notification from the network.

The eNB 45 receives the service request from the UE 10, and transmits the service request including the APN to the MME 40 (S1806). Accordingly, the UE 10 transmits the service request to the MME 40 through the eNB 45.

Here, when the communication path is already established in a case where the established communication path is changed to the connection standby state, the UE 10 may add information such as a bearer ID for specifying the communication path to the service request, and may transmit the service request including the information.

Subsequently, the MME 40 receives the service request transmitted from the eNB 45, and checks the included APN. The confirmation of the APN is performed by determining that the received APN is the APN which permits the LTE(D), the locally routed communication path, and the communication via a macro based on the permission information 442 for the establishment of the communication path. Thus, the MME 40 detects that the UE 10 requests the permission for the establishment of the direct communication path based on the LTE(D), the establishment of the locally routed communication path and the establishment of the communication path via a macro.

The MME 40 may detect the permission for the establishment of the direct communication path based on the LTE(D), and the establishment of the communication path via a macro and the locally routed communication path based on the bearer ID included in the service request.

The MME 40 manages the APN that can be used for each UE, and determines whether or not the UE 10 can use the APN notified from the UE 10. When the UE 10 can use the APN, the MME permits the establishment of the communication path correlated with the establishment of the communication path via a macro, and the establishment of the direct communication path and the locally routed communication path correlated with the APN, and does not permit the communication path establishment when the UE 10 is not able to use the APN.

Through the above procedure, the MME 40 can determine to permit the establishment of the direct communication path based on the LTE(D), and the establishment of the communication path via a macro and the locally routed communication path, of the UE 10.

When the MME 40 determines as the permission, the MME 40 transmits a context configuration request to the eNB 45 (S1808), and the eNB 45 transmits a radio bearer establishment request to the UE 10 based on the context configuration request (S1810). Thus, the MME 40 notifies the UE 10 that it is determined that the establishment of the direct communication path based on the LTE(D), and the communication path via a macro and the locally routed communication path is permitted.

Here, the context configuration request and the radio bearer establishment request may be transmitted by including information indicating whether or not the establishment of the direct communication path is permitted, information indicating whether or not the establishment of the locally routed communication path is permitted, and information indicating whether or not the establishment of the communication path via a macro is permitted.

The information indicating whether or not the establishment of the direct communication path is permitted may include a flag, such as ProSe Indicator, which explicitly indicates that the communication path establishment of the communication path is permitted. The information indicating whether or not the establishment of the locally routed communication path is permitted may include a flag, such as locally routed indicator, which explicitly indicates that the establishment of the locally routed communication path is permitted. Alternatively, the information indicating whether or not the establishment of the direct communication path is permitted may be notified by including information correlated with the communication path via a macro, such as a bearer ID correlated with the direct communication path or an IP address used for the communication using the direct communication.

The information indicating whether or not the establishment of the direct communication path is permitted may be implicitly notified without including a flag, such as ProSe Indicator, which explicitly indicates that the communication path establishment of the direct communication path is permitted. The information indicating whether or not the establishment of the locally routed communication path is permitted may be implicitly notified without including a flag, such as locally routed indicator, which explicitly indicates that the establishment of the locally routed communication path is permitted. Alternatively, the information indicating whether or not the establishment of the direct communication path or the locally routed communication is permitted may be notified by including information correlated with the communication path via a macro, such as a bearer ID correlated with the communication path via a macro or an IP address used for the communication using the communication path via a macro. The information indicating whether or not the establishment of the direct communication path is permitted may be notified by including a flag different from the ProSe Indicator which explicitly indicates the communication path establishment of the direct communication path is permitted. The information indicating whether or not the establishment of the locally routed communication path is permitted may be notified by including a flag different from the locally routed indicator which explicitly indicates the establishment of the locally routed communication path is permitted.

A flag which is explicitly indicates the establishment of the direct communication path is permitted and the establishment of the locally routed communication is permitted may be notified as one flag without being notified as different flags.

Thus, the MME 40 can notify that the establishment of the direct communication path is permitted, the establishment of the locally routed communication path is permitted and the establishment of the communication path via a macro is permitted, can notify that the establishment of only the direct communication path is permitted, can notify that the establishment of only the locally routed communication path is permitted, and can notify that the establishment of only the communication path via a macro is permitted.

The MME 40 may perform the notification using different flags such as a flag 1 indicating whether or not the establishment of the direct communication path, the locally routed communication and the communication path via a macro is permitted, a flag 2 indicating whether or not only the establishment of the direct communication path is permitted, a flag 3 indicating whether or not only the locally routed direct communication is permitted and a flag 4 indicating whether or not the establishment of the communication path via a macro is permitted.

The notification is not limited thereto, but the information indicating whether or not the establishment of the direct communication path is permitted, the information indicating whether or not the establishment of the locally routed communication path is permitted and the information indicating whether or not the establishment of the communication path via a macro is permitted may be constituted by combining other information elements, and the constituted information may be notified.

The eNB 45 receives the bearer configuration request/PDN connection permission notification from the MME 40, and detects the permitted communication path based on the information indicating whether or not the establishment of the direct communication path is permitted, the information indicating whether or not the establishment of the locally routed communication path is permitted and the information indicating whether or not the establishment of the communication path via a macro is permitted, which are included in the notification.

Here, when the eNB 45 detects that the communication path establishment of the communication path via a macro is permitted based on the information indicating whether or not the establishment of the direct communication path is permitted, the information indicating whether or not the establishment of the locally routed communication path is permitted or the information indicating whether or not the establishment of the communication path via a macro is permitted, the UE 10 may allocate a radio resource for performing the wireless communication with the eNB 45. For example, when the UE 10 transmits the service request including the APN 4, the eNB 45 detects that the establishment requested from the UE 10 is the establishment of the direct communication path, the establishment of the locally routed communication path and the establishment of the communication path via a macro and the establishment is permitted by the MME 40, and may establish the wireless communication path including the allocation of the radio resource between the eNB 45 and the UE 10 based on the detected information.

Here, when it is detected that only the establishment of the locally routed communication path is established, the wireless communication path including the allocation of the radio resource between the UE and the eNB 45 based on the detection.

When the eNB 45 detects that only the establishment of the direct communication path is permitted based on the information indicating whether or not the establishment of the direct communication path is permitted, the information indicating whether or not the establishment of the locally routed communication path is permitted and the information indicating whether or not the establishment of the communication path via a macro is permitted, the UE 10 may not allocate the radio resource for performing the wireless communication with the eNB 45. In this detection, the eNB 45 may perform the detection without including the ProSe Indicator in the notification.

When the establishment of the direct communication path is not permitted, the wireless communication path including the allocation of the radio resource between the eNB 45 and the UE may be established based on the fact that the direct communication path is not permitted.

Subsequently, the eNB 45 transmits a radio bearer establishment request to the UE 10, and notifies of the permission information based on the connection establishment request transmitted from the UE 10 (S1810). The notification may be transmitted by including information indicating whether or not the establishment of the direct communication path is permitted, information indicating whether or not the establishment of the locally routed communication path is permitted and the information indicating whether or not the establishment of the communication path via a macro is permitted, which are received from the MME 40. Although it has been described that the discovery of the communication target UE is started before the service request is transmitted (S1703a), the discovery may be started after the wireless bearer establishment request is received (S1803b).

The UE 10 receives the wireless bearer establishment request, and detects whether or not the direct communication path, the locally routed communication path and the communication path via a macro are permitted, whether or not only the establishment of the direct communication path is permitted, whether or not only the establishment of the locally routed communication path is permitted and whether or not only the establishment of the communication path via a macro is permitted based on the information indicating whether or not the establishment of the direct communication path is permitted, the information indicating whether or not the establishment of the locally routed communication path is permitted and the information indicating whether or not the establishment of the communication path via a macro is permitted, which are included in the notification and are received from the MME 40. Here, as the method of detecting that the establishment of the communication path based on the direct communication path of the LTE(D), the locally routed communication path and the communication path via a macro are permitted, the detection may be performed by detecting that the ProSe Indicator or the locally routed communication are included in the notification.

The MME 40 may add the information used by the UE 10 in order to establish the direct communication path, such as the bearer ID or the IP address used by the UE 10 in order to perform the communication using the direct communication path, or the information regarding the frequency used for the direct communication, to the context configuration request and the radio bearer establishment request, and may notify the UE 10 of the context configuration request and the radio bearer establishment request. The bearer ID correlated with the direct communication path may be allocated by the eNB 45, and may be notified to the UE 10 by being included in the radio bearer establishment request.

The MME 40 may notify the UE 10 of the bearer configuration request and the wireless bearer establishment request including the information used by the UE 10 in order to establish the locally routed communication path, such as the information regarding the bearer ID or the IP address used by the UE 10 in order to perform the communication using the locally routed communication path or a frequency used for the locally routed communication path. The bearer ID correlated with the locally routed communication path may be allocated by the eNB 45, and the wireless bearer establishment request including the bearer ID may be notified to the UE 10.

Here, the eNB 45 manages information for identifying the UE 10 and information for identifying a bearer such as a bearer ID in correlation with each other in the establishment of the locally routed communication path. The eNB 45 can determine to transmit the UE 10a or the SGW 35 by managing the UE 10 and the bearer ID in correlation with each other and determining whether or not the bearer that can be used by the UE corresponds to the locally routed communication.

The UE 10a performs the same procedure as that of the UE 10, and thus, the eNB 45 may manage the information for identifying the UE 10a and the information for identifying the bearer such as the bearer ID in correlation with each other in the establishment of the locally routed communication path.

The eNB 45 may realize the locally routed communication based on the correlation. For example, the UE 10 may receive the transmitted data, may detect that the locally routed communication is performed based on the bearer ID of the received communication path, may detect the communication path correlated with the UE 10a from the bearer ID correlated with the UE 10a, and may transmit data in the detected communication path. The UE 10 and the UE 10a can perform the locally routed communication. That is, the UE 10 and the UE 10a can perform the locally routed communication by selecting the communication path in which the locally routed communication is permitted from the bearer ID and transmitting the data.

The eNB 45 may realize the locally routed communication by managing the information of the UE which performs the locally routed communication and the communication path of the UE in correlation with each other. For example, the UE 10 and the UE 10a may manage that the locally routed communication is performed, and may manage the bearer ID used in the locally routed communication of the UE 10 and the bearer ID used in the locally routed communication of the UE 10a in correlation with each other. Thus, the eNB 45 can determine that the detected communication is the locally routed communication addressed to the UE 10a by confirming the bearer ID used by the UE 10.

For example, the UE 10 may receive the transmitted data, may detect that the locally routed communication is performed based on the bearer ID of the received communication path, may detect the bearer ID of the UE 10a correlated with the bearer ID of the received communication path, and may transmit the data in the detected communication path. Thus, the UE 10 and the UE 10a can start the locally routed communication. That is, the UE 10 and the UE 10a can the locally routed communication by selecting the communication path in which the locally routed communication is permitted from the bearer ID and performing the transmission.

As mentioned above, the UE 10 and the UE 10a can start the communication by establishing the locally routed communication path (S1812). When the locally routed communication is established for the communication of the APP 4, the UE 10 selects the locally routed communication, and transmits communication data of the APP 4. More specifically, at the time of transmitting user data of the APPN 4, the communication may be performed by selecting the correlated IP address. The communication may be performed may be performed by selecting the correlated bearer ID and by specifying the communication path.

The MME 40 may add the information used by the UE 10 in order to establish the communication path via a macro, such as the bearer ID or the IP address used by the UE 10 in order to perform the communication using the communication path via a macro or the information regarding the frequency used for the communication via a macro, to the context configuration request and the radio bearer establishment request, and may notify the UE 10 of the context configuration request and the radio bearer establishment request. The bearer ID correlated with the communication path via a macro may be allocated by the eNB 45, and may be notified to the UE 10 by being included in the radio bearer establishment request.

The eNB 45 may detect the destination information from the UE 10, and may transmit the data of the UE 10 to the UE 10 by using the locally routed communication path when the UE 10a is the destination. In this case, even if the bearer of the locally routed communication path is designated, when the UE that does not establish the locally routed communication path with the UE 10 except for the UE 10a is the destination, the communication may be stopped. In this case, the eNB may notify to the UE 10 which is the communication source that it is not able to perform the locally routed communication.

A bearer between the eNB 45 and the UE 10 in the communication path via a macro through the eNB 45, the SGW 35 and the PGW 30 form the UE 10, and a bearer between the eNB 45 and the UE 10 in the locally routed communication to the UE 10a from the UE 10 through the eNB 45 may be managed as the same bearer. That is, the eNB 45 may detect the destination in the transmission of data from the UE 10, may check that the UE 10a is located in the service area of the eNB 45 when the destination is the UE 10a, and may determine to transmit data to the UE 10a by using the locally routed communication path. In this case, the MME 40 or the eNB 45 may allocate a bearer ID allocated in the establishment of the communication path between the eNB 45 and the UE 10 with a bearer ID for the locally routed communication path and a bearer ID for the communication path via a macro as the same bearer ID.

The eNB 45 may detect the destination in the transmission of data from the UE 10, and may determine to use the communication path via a macro from the SGW 35 to the PGW 30 when the destination is the UE other than the UE 10a which does not establish the locally routed communication path.

When the establishment of the communication path is permitted by the MME 40 based on the information indicating whether or not the establishment of the direct communication path is permitted, the UE 10 may establish the direct communication path with the UE 10a (S1814). When the establishment of the communication path is not permitted, the establishment of the direct communication path may not be performed. The UE 10 may determine whether or not to establish the direct communication path based on the communication path correlated with the APP, and the direct communication path permitted by the MME 40. Alternatively, the UE 10 may determine whether or not to establish the direct communication path based on any one of the information regarding the communication path correlated with the APP and the direct communication path permitted by the MME 40.

For example, when the direct communication path correlated with the APP 4 is the LTE(D), the locally routed communication and the communication via a macro and the APN permitted by the MME permits the establishment of the LTE(D), the locally routed communication and the communication path via a macro, since the communication path of the LTE(D), the locally routed communication path and the communication path via a macro are the correlated with the APP 4 and the LTE(D), the locally routed communication path and the communication via a macro are permitted by the APN, the UE 10 determines to establish the direct communication path of the LTE(D), the locally routed communication path and the communication path via a macro.

In the establishment procedure of the direct communication path based on the LTE(D) with the UE 10a, the UE 10 may establish the communication path by using the frequency obtained from the radio bearer establishment request, or may establish the communication path by previously allocating a frequency to be used.

Here, the bearer ID or the IP address obtained from the radio bearer establishment request may be notified to the UE 10a, may be managed in correlation with the direct communication path, and may be used at the time of performing the direct communication. At the time of establishing the direct communication path with the UE 10a, any one of the UE 10 and the UE 10a may allocate the IP address or the bearer ID and may notify the other one of the IP address or bearer ID, and the other one may obtain the notified IP address or bearer ID, may manage the obtained IP address or bearer ID in correlation with the direct communication path, and may use the IP address or bearer ID at the time of performing the direct communication.

As mentioned above, the UE 10 and the UE 10a can start the communication by establishing the direct communication path. When the communication path based on the LTE(D) is established for the communication of the APP 4, the UE 10 can select the direct communication path in order to transmit communication data of the APP 4, and can transmit the communication data of the APP 4. More specifically, at the time of transmitting user data of the APN 4, the correlated IP address may be selected, and the communication may be performed. The correlated bearer ID may be selected, the communication path may be specified, and the communication may be performed.

The UE 10 that completes the establishment of the communication path of the LTE(D) with the UE 10a may transmit a context initialization completion notification to the MME 40 for notifying that the establishment of the direct communication path is completed (S1816).

Thereafter, the UE 10 may establish the communication path using the frequency obtained from the radio bearer establishment request, as the establishment procedure of the communication path via a macro, or the UE 10 may establish the communication path by previously allocating a frequency to be used.

The UE 10 may transmit a context initialization completion notification to the MME 40 by including information indicating whether or not the establishment of the direct communication path is completed, information indicating whether or not the establishment of the locally routed communication path is completed.

The MME 40 may determine whether or not to update the bearer information based on the information indicating whether or not the establishment of the direct communication path is completed, the information indicating whether or not the establishment of the locally routed communication path is completed, and the information indicating whether or not the establishment of the communication path via a macro is completed, or all the information items.

For example, when it is determined that the establishment of the communication path via a macro is completed, after the context initialization completion notification is received, the MME 40 performs the procedure between the SGW 35 and the PGW 30, and updates the bearer configuration. Specifically, the MME 40 transmits a bearer update request to the SGW 35 (S1818), and the SGW 35 transmits the bearer update request to the PGW 30 based on the reception (S1820). The PGW 30 transmits a bearer update response to the SGW 35 (S1822), as a response, and the SGW 35 transmits the bearer update response to the MME 40 based on the reception (S1824). Through the above procedure, the bearer information is updated in each device.

Here, when only the direct communication path is permitted, or when only the locally routed communication path is permitted, the procedure from S1818 to S1824 may not be performed.

Through the above procedure, the UE 10 can establish the direct communication path of the LTE(D), the locally routed communication path and the communication path via a macro. Here, the UE 10 notifies the service request including the APN 4 that permits the LTE(D), the locally routed communication path and the communication path via a macro, and thus, the UE 10 can establish the LTE(D), the locally routed communication and the communication path via a macro.

Here, the UE 10 can transmit and receive data by using the communication path via a macro, the locally routed communication path and the direct communication path with the UE 10a. Here, the UE 10 may select any one of the communication path via a macro, the locally routed communication path and the direct communication path with the UE 10a. The UE 10 may manage a priority for selecting the direct communication path, the locally routed communication path and the communication path via a macro, and may select the communication path via a macro, the locally routed communication path or the direct communication path based on the priority.

For example, When the direct communication path of the LTE(D), the locally routed communication path and the communication path via a macro can be used as in the APP 4, the UE 10 may manage the priority of the direct communication path of the LTE(D), the locally routed communication path and the communication path via a macro. Here, the priority of the direct communication path of the LTE(D), the locally routed communication path and the communication path via a macro may be managed in correlated with the PDN connection of the direct communication path of the LTE(D), the PDN connection of the locally routed communication path and the PDN connection of the communication path via a macro. The priority of the direct communication path of the LTE(D), the locally routed direct communication path and the communication path via a macro may be managed in correlation with the bearer of the direct communication path of the LTE(D), the bearer of the locally communication path and the bearer of the communication path via a macro.

Meanwhile, when it is not able to maintain the direct communication with the UE 10a, the UE 10 may start the communication via a macro or the locally routed communication. Here, when the bearer correlated with the communication path via a macro, the bearer correlated with the locally routed communication path and the bearer correlated with the communication path of the LTE(D) are managed, since the UE 10 is not in proximity enough to perform the LTE(D) with the UE 10a, the UE 10 may select the bearer correlated with the communication path via a macro or the bearer correlated with the locally routed communication path and the UE 10a.

When the UE 10 is not able to start the direct communication of the LTE(D) with the UE 10a and is not able to start the locally routed communication, the UE 10 starts the communication via a macro (PGW 30) (S1826).

Here, when the bearer correlated with the communication path via a macro, the bearer correlated with the locally routed communication path and the bearer correlated with the communication path of the LTE(D) are managed, since the UE 10 is not in proximity enough to perform the LTE(D) and the locally routed communication with the UE 10a, the UE 10 may select the bearer correlated with the communication path via a macro and the UE 10a.

Through the above procedure, it is possible to start the direct communication of the LTE(D), the locally routed communication or the communication via a macro with the UE 10a.

Although it has been described in the present example that the transmission of the service request by the UE 10 is performed when the UE 10 starts the direct communication, the locally routed communication or the communication via a macro with the UE 10a, the present invention is not limited thereto, but the service request may be previously transmitted. For example, the UE 10 may previously obtain permission based on the transmission of the service request for the establishment of the direct communication path of the LTE(D), the locally routed communication and the communication path via a macro at the time of starting the terminal or at the time of starting the application, may determine that the UE 10 is proximity enough to perform the direct communication with the UE 10a, and may immediately establish the direct communication path when it is determined to start the direct communication (S1814). The UE 10 may determine that the UE 10a is in proximity enough to perform the locally routed communication, and may immediately establish the locally routed communication path when it is determined to start the locally routed communication (S1814).

Although it has been described in the above example that the communication is started by establishing the direct communication path based on the LTE(D), the locally routed communication and the communication path via a macro in order to perform the communication of the APP 4, the UE 10 can apply the aforementioned method to the communication of the APP 1, the communication of the APP 2 and the communication of the APP 3, as shown in Fig. 5A.

For example, when the communication of the APP 4 is performed, the UE 10 requests the permission for the establishment of the communication path via a macro, the locally routed communication and the communication path of the LTE(D) by selecting the APN which permits the LTE(D), the locally routed communication and the communication via a macro and adding the selected APN to the service request.

The UE 10 receives whether or not the establishment of the communication path of the LTE(D), the locally routed communication and the communication path via a macro is permitted, and establishes the direct communication path of the LTE(D), the locally routed communication and the communication path via a macro when the request is permitted.

When the communication of the APP 1 is performed, the UE 10 requests the permission for the establishment of the LTE(D) by selecting the APN which permits the LTE(D) and adding the selected APN to the service request.

The UE 10 receives whether or not the establishment of the communication path of the LTE(D) is permitted, and establishes the direct communication path of the LTE(D) when the request is permitted.

When the communication of the APP 2 is performed, the UE 10 requests the permission for the establishment of the locally routed communication path by selecting the APN which permits the locally routed communication and adding the selected APN to the service request.

The UE 10 receives whether or not the establishment of the locally routed communication path is permitted, and establishes the locally routed communication path when the communication channel is permitted.

When the communication of the APP 3 is performed, the UE 10 requests the permission for the establishment of the locally routed communication path and the LTE(D) by selecting the APN which permits the LTE(D) and the locally routed communication and adding the selected APN to the service request.

The UE 10 receives whether or not the establishment of the LTE(D) and the locally routed communication path is permitted, and establishes the LTE(D) and the locally routed communication path when the communication channel is permitted.

As stated above, the UE 10 performs the establishment procedure after the permission of the mobile communication provider is obtained for the establishment of the direct communication path and the locally routed communication path correlated with the application. The request for the permission is performed based on the information correlated with the direct communication path and the locally routed communication.

Thus, for example, when there are a plurality of applications correlated with the LTE(D) or the locally routed communication, the permission request may not be transmitted to an individual application.

For example, when the communication using the LTE(D), the locally routed communication and the communication path via a macro is permitted at the time of starting the communication of the APP 4, if the communication using the LTE(D), the locally routed communication path and the communication path via a macro are performed by the application different from the APP 4, it is determined that the communication path establishment is already permitted, and the direct communication path, the locally routed communication path and the communication path via a macro may be established.

The UE 10a as the communication partner may perform the permission procedure based on the service request described above in order to obtain the permission of the communication provider at the time of the establishment of the direct communication path, the locally routed communication path and the communication path via a macro.

Alternatively, the permission procedure may be performed based on the service request when the establishment of the direct communication path and the locally routed communication path is obtained from the UE 10. That is, at the time of establishing the direct communication path, the locally routed communication path and the communication path via a macro between the UE 10 and the UE 10a, the completion of the permission procedure of the UE 10a as the communication partner may be one condition for establishing the direct communication path, the locally routed communication path and the communication path via a macro.

When data of the application is transmitted and received, the UE 10 performs the communication by managing the direct communication path, the locally routed communication path and the communication path via a macro correlated with the application and selecting the direct communication path, the locally routed communication path or the communication path via a macro.

Here, the UE 10 may select the direct communication path of the LTE(D) or the locally routed communication path in the state in which the direct communication path, the locally routed communication path and the communication path via a macro are established using the APN such as the APN 4 which permits the establishment of the direct communication path of the LTE(D), the locally routed communication path and the communication path via a macro.

In this case, the UE 10 may transmit and receive data by managing the application and the communication path in correlation with each other, managing the priority of the direct communication path of the LTE(D), the locally routed communication path and the communication path via a macro correlated with the specified application, and selecting the communication path of the LTE(D), the locally routed communication path and the communication path via a macro correlated with the specified application.

Thus, the UE 10 can transmit and receive the data of the application using the direct communication path of the LTE(D), the locally routed communication path and the communication path via a macro by selecting the direct communication path, the locally routed communication path or the communication path via a macro.

The UE 10 may retain the bearer ID correlated with the established direct communication path, the bearer ID correlated with the established locally routed communication path and the bearer ID correlated with the communication path established with the PGW 30, may manage the communication path in correlation with the beater ID, and may manage the priority between the bearer ID correlated with the direct communication path, the bearer ID correlated with the established locally routed communication path and the bearer ID correlated with the communication path via a macro.

Thus, the UE 10 can transmit and receive the bearer ID by selecting the bearer ID correlated with the direct communication path, the bearer ID correlated with the locally routed direct communication path or the bearer ID correlated with the communication path with the macro.

The UE 10 may establish the PDN connection for performing the communication by using the established direct communication path, may establish the PDN connection for the performing the communication by using the locally routed communication path, may establish the PDN connection for the performing the communication by using the communication path via a macro, may manage the communication and the PDN connection in correlation with each other, and may manage the priority between the PDN connection of the direct communication path, the PDN connection of the locally routed communication path and the PDN connection of the communication path via a macro.

Thus, the UE 10 can transmit and receive the data of the application that performs the direct communication, the locally routed communication and the communication via a macro by selecting the PDN connection of the direct communication path, the PDN connection of the locally routed communication or the PDN connection correlate with the communication via a macro.

Here, it is necessary to specify the application corresponding to the data to be transmitted and received when the data is transmitted and received, and specifying means may specify the application based on IP5 tuple information such as a transmission source address, a transmission destination address, a protocol number, a transmission source port number, and a transmission destination port number. The application may be specified based on the identification information such as an application ID.

For example, when it is detected that the transmission data corresponds to the application such as APP 5 that performs the communication in the communication path via a macro, the transmission data is transmitted by selecting the communication path via a macro which is the communication path correlated with the application. When it is detected that the transmission data corresponds to the application such as the APP 1 capable of performing the communication using the LTE(D), the communication is performed by selecting the communication path based on the LTE(D) which is the communication path correlated with the application.

When it is detected that the transmission data corresponds to the application such as the APP 1 capable of performing the communication using the communication path of the LTE(D), the communication is performed by selecting the communication path of the LTE(D) which is the communication path correlated with the application, but the communication is performed by selecting the communication path by the selection method based on the priority information described above.

When it is detected that the transmission data corresponds to the application such as the APP 2 capable of performing the communication using the locally routed communication path, the communication is performed by selecting the locally routed communication path which is the communication path correlated with the application, but the communication is performed by selecting the communication path by the selection method based on the priority information described above.

When it is detected that the transmission data corresponds to the application such as the APP 3 capable of performing the communication using the locally routed communication path and the LTE(D), the communication is performed by selecting the locally routed communication path or the LTE(D) which is the communication path correlated with the application, but the communication is performed by selecting the communication path by the selection method based on the priority information described above.

### [1.3.5 Disconnection Procedure]

In this section, a method of stopping the transmission and reception of data to and from the UE 10a through the direct communication or the locally routed communication during the communication through the direct communication path between the UE 10 and the UE 10a will be described. As a case where the UE 10 ends the communication, a case where it is not necessary to use the established communication path such as the completion of the application by the user, a case where it is not able to maintain the direct communication path by moving the UE 10 or the UE 10a as the communication partner, or a case where it is not able to maintain the locally routed communication path by moving the UE 10 or the UE 10a is considered.

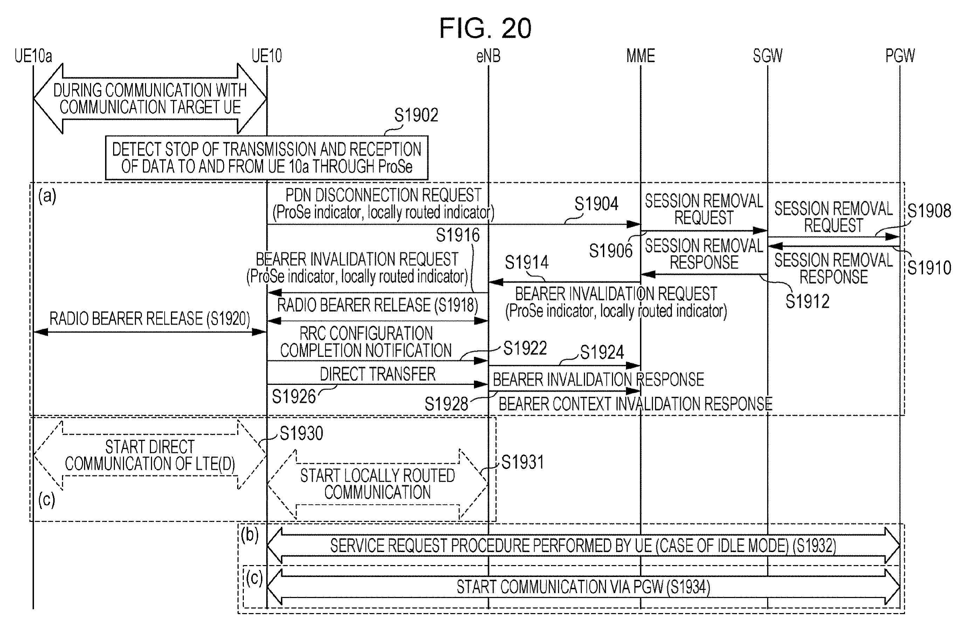

The method of stopping the transmission and reception of data to and from the UE 10a through the ProSe will be described in conjunction with these cases with reference to Fig. 20.

In the following description, the procedure of stopping the direct communication or the locally routed communication is started by detecting that the UE 10 stops the direct communication or the locally routed communication. Meanwhile, the UE 10a can perform the same procedure.

Initially, the UE 10 detects that the communication through the ProSe with the UE 10a is stopped (S1902). Here, as the method of detecting the stopping of the communication through the ProSe, various methods are considered. For example, the detection may be performed when the transmission and reception of data between the UE 10 and the UE 10a is completed, when it is not able to maintain the direct communication, for example, the distance between the UE 10 and the UE 10a increases and, or when it is not able to maintain the locally routed communication.

The subsequent procedure is differently performed in the case where the transmission and reception of data is completed between the UE 10 and the UE 10a, in the case where it is not able to maintain the direct communication between the UE 10 and the UE 10a and the communication is continued, and in the case where it is not able to maintain the locally routed communication. When it is not able to maintain the direct communication or the locally routed communication between the UE 10 and the UE 10a, it is not previously detected that it is not able to maintain the direct communication or the locally routed communication, and the procedure is differently performed in the case where the connection standby state is changed and in the case where it is previously detected that it is not able to maintain the direct communication or the locally routed communication.

Hereinafter, a procedure performed when the transmission and reception of data is completed will be described as a disconnection procedure (a), a procedure performed when the connection standby state is changed while it is not previously detected that it is not able to maintain the direct communication or the locally routed communication path will be described as a disconnection procedure (b), and a procedure performed when it is previously detected that it is not able to maintain the direct communication or the locally routed communication path when it is not able to maintain the direct communication or the locally routed communication path between the UE 10 and the UE 10a will be described as a disconnection procedure (c). The disconnection procedure (a) will be first described. Here, the description will be presented using (a) surrounded by a dotted line shown in Fig. 20.

### [1.3.5.1 Disconnection Procedure (a)]

The UE 10 that detects the completion of the transmission and reception of data to and from the UE 10a transmits a PDN disconnection request to the MME 40 (S1904). In this case, the UE 10 may notify the PDN disconnection request including ProSe Indicator or locally routed indicator.

The MME 40 performs a procedure of removing the session executed in the SGW 35 and the PGW 30. The MME detects that the PDN disconnection request is a request for releasing the direct communication path based on the ProSe Indicator, and detects that the PDN disconnection request is a request for releasing the locally routed communication path based on the locally routed indicator. The MME detects that the communication path via a macro is removed by the PDN disconnection request, and removes the session executed in the SGW 35 and the PGW 30.

Here, the MME 40 may select whether or not to remove the session of the communication path via a macro of the UE 10, that is, the communication path of the PDN connection. That is, when the direct communication path of the LTE(D), the locally routed communication path and the communication path via a macro are established as in the APN 4, the MME removes the session within the core network, that is, removes the communication path of the PDN connection, and when the communication path via a macro is not established and only the direct communication path of the LTE(D) or the locally routed communication path is established as in the APN 1, the APN 2 or the APN 3, the MME does not remove the session of the communication path via a macro of the UE 10, that is, does not remove the communication path of the PDN connection. When the communication path establishment is not associated with the direct communication path and only the communication path via a macro is established as in the APN 5, the MME removes the session.

The MME 40 detects the communication path via a macro established together with the locally routed communication path and the direct communication path such as the APN 4 of the UE 10. As the method of detecting that the communication path via a macro associated with the locally routed communication path and the direct communication path is established, for example, the UE 10 notify the PDN disconnection request by explicitly including information regarding the PDN connection of the communication path via a macro, and the MME 40 may detect the information regarding the PDN connection of the communication path via a macro, and may remove the session of the PDN connection of the communication path via a macro.

The MME 40 can detect that only the direct communication path of the LTE(D) is established. That is, the UE 10 may notify the PDN disconnection request by explicitly information regarding the PDN connection of only the direct communication path, and the MME 40 may detect the information regarding the PDN connection of the direct communication path.

The MME 40 can detect that only the locally routed communication path is established. That is, the UE 10 may notify the PDN disconnection request by explicitly information regarding the PDN connection of only the locally routed communication path, and the MME 40 may detect the information regarding the PDN connection of the direct communication path.

The MME 40 may detect that the only the communication path via a macro is established. That is, the UE 10 may notify the PDN disconnection request by explicitly including information regarding the PDN connection of only the communication path via a macro, and the MME 40 may detect the information regarding the PDN connection of the communication path via a macro.

A session removal request (S1906) transmitted to the SGW 35 from the MME 40 that detects the establishment of the direct communication path, the locally routed communication path and the communication path via a macro with the UE 10, a session removal request (S1908) transmitted from the SGW 35 to the PGW 30, a session removal response (S1910) transmitted from the PGW 30 to the SGW 35, and a session removal response (S1912) transmitted from the SGW 35 to the MME 40 as responses thereof are transmitted and received. Thus, in the PDN connection of the communication path via a macro associated with the direct communication path and the locally routed communication path such as the APN 4, the session between the PGW 30 and the SGW 35 is removed, and the session between the SGW 35 and the eNB 45 is removed.

The session between the PGW 30 and the SGW 35 in the PDN connection of only the communication path via a macro such as the APN 5 may be removed, and the session between the SGW 35 and the eNB 45 may be removed.

When the communication path of only the locally routed communication path and the direct communication path as in the APN 1, the APN 2 and the APN 3 are removed, the processes from S1906 to S1912 may not be performed.

Thereafter, the MME 40 transmits a bearer invalidation request to the eNB 45 (S1914). In this case, a bearer ID indicating a bearer associated with the direct communication path, the locally routed communication path and the communication path via a macro may be included in the bearer invalidation request. A flag such as ProSe Indicator which explicitly indicates that the establishment of the direct communication path and the locally routed communication path is permitted may be included in the bearer invalidation request. Here, the ProSe Indicator or the locally routed indicator may be information indicating that the establishment of the PDN connection between the UE and the PGW of the related art is permitted.

Here, the eNB 45 detects that the direct communication path, the locally routed indicator and the communication path via a macro such as the APN 4 are established by using the ProSe Indicator, the locally routed indicator or the bearer ID, and removes the wireless communication path including the release of the radio resource between the eNB 45 and the UE based on this detection. The direct communication path between the UE 10 and the UE 10a is removed based on the RRC connection reconfiguration notification notified to the UE 10 by the eNB 45.

The eNB 45 may detect that the communication path via a macro such as the APN 5 is established by using the ProSe Indicator, the locally routed indicator or the bearer ID, and may remove the wireless communication path including the release of the radio resource between the eNB 45 and the UE based on this detection. Here, the communication path the release of the wireless resource between the eNB 45 and the UE which is the locally routed communication path may be removed. The eNB 45 may detect that the direct communication path such as the APN 1 is established by using the ProSe Indicator, the locally routed indicator or the bearer ID.

Subsequently, the eNB 45 transmits the RRC connection reconfiguration notification for the UE 10 to the UE 10 (S1916). In this case, when the direct communication path established in the APN 1, the APN 3 or the APN 4 is removed, a bearer ID indicating a bearer associated with the direct communication may be included in the RRC connection reconfiguration notification. A flag such as ProSe Indicator which explicitly indicates that the direct communication path is removed in addition to indicating that the establishment of the PDN connection is permitted between the UE and the PGW in the related art may be included in the RRC connection reconfiguration notification. A flag such as a locally routed indicator which explicitly indicates that the locally routed communication path is removed may be included in the RRC connection reconfiguration notification.

Subsequently, the UE 10 releases the radio bearer which is the direct communication path with the UE 10a (S1918). In this case, the UE 10 may select whether or not to release the radio bearer based on the flag which explicitly indicates that the direct communication path or the bearer ID associated with the direct communication. When only the communication path via a macro is removed, the present process may not be performed. The UE 10 releases the wireless bearer of the locally routed communication path with the UE 10a (S1920). In this case, the UE 10 may select whether or not to release based on the bearer ID correlated with the locally routed communication or the flag which explicitly indicates that the locally routed communication path is removed. When only the locally routed communication path is removed, the present process may not be performed.

The UE 10 that releases the radio bearer with the UE 10a transmits the RRC connection reconfiguration completion notification to the eNB 45 (S1922). The eNB 45 transmits the bearer invalidation response (S1924). Thereafter, the UE 10 transmits the direct transfer message to the eNB 45 (S1926). The eNB 45 transmits an EPS bearer context invalidation response to the MME 40 based on the reception of the direct transfer message (S1928).

Whether or not to transmit the RRC connection reconfiguration completion notification by the UE 10 may be selected based on whether or not remove the direct communication path. Similarly, whether or not to transmit the direct transfer message by the UE 10 may be selected based on whether or not to remove the direct communication path. For example, the UE 10 may determine to transmit the direct transfer message when the PDN connection between the PGW and UE is removed, and may determine not to transmit the direct transfer message when the direct communication path is removed.

That is, when the locally routed communication path or the communication path via a macro is removed as well as removing the direct communication path, the RRC connection reconfiguration completion notification may be transmitted. When only the direct communication path is removed, the RRC connection reconfiguration completion notification may not be transmitted. When only the communication path via a macro is removed, the RRC connection reconfiguration completion notification may be transmitted.

Through the above procedure, the UE 10 can stop the direct communication path of the LTE(D) and the communication via a macro with the UE 10a.

When the direct communication path, the locally routed communication path and the communication path via a macro are established, the UE 10 may designate any one of these paths, and may transmit the disconnection request.

In this case, the UE 10 may transmit the disconnection request including information for identifying the direct communication path such as identification information the PDN connection or the bearer ID correlated with the direct communication path, and may request the release of the communication path resource correlated with the direct communication path in the MME 40 and the eNB 45, and the MME 40 and the eNB 45 may release the communication resource correlated with the direct communication path based on the request.

The UE 10 may transmit the disconnection request including information for identifying the locally routed communication path such as identification information the PDN connection or the bearer ID correlated with the locally routed communication path, and may request the release of the communication path resource correlated with the locally routed communication path in the MME 40 and the eNB 45, and the MME 40 and the eNB 45 may release the communication resource correlated with the locally routed communication path based on the request.

The UE 10 may transmit the disconnection request including information for identifying the communication path via a macro such as the identification information of the PDN connection or the bearer ID correlated with the communication path via a macro, and may request the release of the communication resource correlated with the communication path via a macro in the MME 40, the PGW 30 and the eNB 45, and the MME 40, the PGW 30 and the eNB 45 may release the communication path resource correlated with the communication path via a macro based on the request.

The UE 10 may transmit the disconnection request including information for identifying the direct communication path such as the identification information of the PDN connection or the bearer ID correlated with the direct communication path, may transmit the disconnection request including information for identifying the locally routed communication path such as the identification information of the PDN connection or the bearer ID correlated with the locally routed communication path, and may transmit the disconnection request including information for identifying the communication path via a macro such as the identification information of the PDN connection or the bearer ID correlated with the communication path via a macro. The UE 10 may request the release of the communication path resource correlated with the direct communication path in the UE 10 and the UE 10a, the release of the communication path resource correlated with the locally routed communication path in the UE 10 and the eNB 45, and the release of communication path resource correlated with the communication path via a macro in the MME 40, the PGW 30 and the eNB 45. The MME 40 and the eNB 45 may release the communication path resource correlated with the direct communication path based on the request, the MME 40 and the eNB 45 may release the communication path resource correlated with the locally routed communication path based on the request, and the MME 40, the PGW 30 and the eNB 45 may release the communication path resource correlated with the communication path via a macro based on the request.

### [1.3.5.2 Disconnection Procedure (b)]

Meanwhile, when it is not able to maintain the direct communication path or the locally routed communication, a process procedure for starting the communication via a macro will be described. When the UE 10 establishes the communication path via a macro, the locally routed communication path and the direct communication path and it is not able to maintain the locally routed communication path or the direct communication path due to the movement of the UE 10 or the communication partner UE 10a, the UE 10 continues the communication by changing the communication path from the locally routed communication path or direct communication path which is not maintained to the direct communication path, the locally routed communication path or the communication path via a macro which is maintained.

In such a state, the UE 10 may detect that the communication path via a macro is changed to the idle mode, and may start the procedure for changing the communication path to the active mode based on this detection.

Specifically, the UE 10 performs a service request procedure, as shown in (b) of Fig. 20. Here, the PDN disconnection procedure may not be performed without transmitting the PDN disconnection request described with reference to (a) of Fig. 20. The service request procedure may be performed based on the procedure described with reference to Fig. 19. Hereinafter, the service request procedure shown in (b) of Fig. 20 will be described with reference to Fig. 19. Initially, the UE 10 starts the service request procedure (S1928). The service request procedure will be described with reference to Fig. 19. In Fig. 19, the direct communication path or the locally routed communication is not established, and only the communication path via a macro (via the PGW 30) is established. Thus, it is not necessary to discover the communication target UE in Fig. 19 (S1803a and S1803b). Since the communication is performed via the PGW, the UE 10 establishes the direct communication path with the UE 10a (S1812).

In the procedure described herein, the service request may be transmitted in order to change the UE 10 and the UE 10a from the connection standby state (idle) to the connected state.

Initially, the UE 10 transmits the service request in order to establish the communication via a macro (S1804). The UE 10 retains the APN correlated with the communication path via a macro, and selects the APN correlated with the communication path via a macro, the locally routed communication and the LTE(D) in, for example, the APN 4.

The APN 5 which establishes only the communication via a macro and does not related with the direct communication path and the locally routed communication path may be used.

In order to request that the MME 40 is to permit the establishment of the communication path via a macro, the UE 10 selects the APN which permits the LTE(D), the locally routed communication path and the communication via a macro, and adds the selected APN to the service request. Although it has been described in the aforementioned example that the UE 10 may select the APN 4 or the APN 5, the UE 10 may select the APN based on the correlation information by managing the application in correlation with the APN, for example, by using the APN 4 for the APP 4. Alternatively the APN may be arbitrarily selected.

The eNB 45 receives the service request from the UE 10, and transmits the service request including the APN to the MME 40 (S1806). Accordingly, the UE 10 transmits the service request to the MME 40 through the eNB 45.

Subsequently, the MME 40 receives the service request transmitted from the eNB 45, and checks the include APN. The confirmation of the APN is performed by determining that the APN received based on the permission information 442 for the communication path establishment is the APN which permits the LTE(D) and the communication via a macro. Thus, the MME 40 detects that the UE 10 requests the permission for the establishment of the direct communication path based on the LTE(D) and the establishment of the communication path via a macro. Since the process in the present example is the same as the method described in Communication Path Establishment Procedure 2 of 1.3.5.2, and the detailed description thereof will be omitted.

Through the above procedure, the MME 40 can determine to permit the establishment of the direct communication path based on the LTE(D) and the establishment of the communication path via a macro of the UE 10.

Here, the APN 5 may be detected, and it may be detected that the permission for the establishment of only the communication path via a macro is requested.

When the MME 40 determines to permit, the MME 40 transmits the context configuration request to the eNB 45 (S1808), and the eNB 45 transmits the radio bearer establishment request to the UE 10 based on the context configuration request (S1810). Thus, the MME 40 notifies the UE 10 that it is determined to permit the establishment of the direct communication path based on the LTE(D), the establishment of the locally routed communication path and the establishment of the communication path via a macro.

Here, a flag such as ProSe Indicator which explicitly indicates that the establishment of the direct communication path is permitted may be included in the context configuration request and the radio bearer establishment request. The context configuration request and the wireless bearer establishment request may include a flag such as a locally routed indicator which explicitly indicates that the establishment of the locally routed communication path is permitted. Here, the ProSe Indicator or the locally routed indicator may be information indicating that the establishment of the PDN connection between the PGW and the UE of the related art is permitted.

The eNB 45 may detect that the establishment requested from the UE 10 is not the locally routed communication or the direct communication path between the UEs, and may establish the wireless communication path for transmitting and receiving data including the allocation of the radio resource between the eNB 45 and the UE 10 based on this detection.

Thereafter, the UE 10 receives the radio bearer establishment request from the eNB 45, and detects that the establishment of the communication path via a macro is permitted. The detection may be performed by detecting that the ProSe Indicator or the locally routed indicator is included in the notification.

The MME 40 may notify the UE 10 of the context configuration request and the radio bearer establishment request by including information regarding a bearer ID or an IP address used by the UE 10 in order to perform the communication via a macro or a frequency used for the communication via a macro.

Here, even when the information regarding the locally routed communication path such as the LTE(D) is received from the MME 40, since it is not able to establish the locally routed communication path with the UE 10a, the UE 10 may not establish the direct communication path (S1810). Since the direct communication with the UE 10a is not performed, the UE 10 may not perform the discovery of the communication target UE (S1812).

Even when the information regarding the direct communication path of the LTE(D) is received from the MME 40, since it is not able to establish the direct communication path with the UE 10a, the UE 10 may not establish the direct communication path (S1814).

Thereafter, the UE 10 establishes the communication path via a macro by using the bearer ID or the IP address used for the communication via a macro and the frequency used for the communication via a macro notified from the MME 40.

Subsequently, the UE 10 notifies the MME 40 that the UE 10 establishes the communication path via a macro by transmitting the context initialization completion notification (S1816). Here, the UE 10 may determine transmit the notification when the PDN connection between the PGW and the UE is established, but may determine not to transmit the notification when the direct communication path is established.

As the communication path via a macro, when the bearer between the PGW 30 and the UE 10 is established, the MME 40 perform the procedure between the SGW 35 and the PGW 30 after the context initialization completion notification is received, and updates the bearer configuration. Specifically, the MME 40 transmits the bearer update request to the SGW 35 (S1818), and the SGW 35 transmits the bearer update request to the PGW 30 (S1820). The PGW 30 transmits the bearer update response to the SGW 35, as a response (S1822) and the SGW 35 transmits the bearer update response to the MME 40 based on the reception (S1824). The bearer information is updated in each device through this procedure.

Subsequently, since it is not able to start the direct communication of the LTE(D) with the UE 10a, the UE 10 starts the communication via a macro (PGW 30) with the UE 10a (S1826).

When the UE 10 is not able to maintain the LTE(D) and the locally routed communication path, the UE 10 may use the communication path via a macro depending on the presence or absence of the communication path via a macro.

The UE 10 may establish the locally routed communication path, and may change the communication path to the locally routed communication path when it is possible to maintain the locally routed communication path. Here, the eNB 45 that receives the data from the UE 10 may determine whether or not the data can be transmitted in the locally routed communication path to the UE 10a, and may transmit data between the UE 10 and the UE 10a by using the locally routed communication path when it is possible to transmit the data in the locally routed communication path. When it is not able to transmit the data from the UE 10 to the UE 10a in the locally routed communication path, the eNB 45 may determine to use the communication path via a macro. The UE 10 may determine whether or not to transmit the data from the UE 10 in the communication path via a macro by establishing the communication path via a macro.

Here, a case where the communication is performed in the APP 4 and the direct communication path, the locally routed communication path and the communication path via a macro are established will be described. Here, as in the APP 1 to the APP 3, the communication path such as the LTE(D), the locally routed communication path or the communication path via a macro is not established, and it is not able to use the communication path.

### [1.3.5.3 Disconnection Procedure (c)]

Next, a case where it is previously detected that it is not able to maintain the direct communication or the locally routed communication when it is not able to maintain the locally routed communication or the direct communication between the UE 10 and the UE 10a will be described. In the disconnection procedure (b) of 1.3.5.2, since the UE is in the connection standby (IDLE) state, the communication path via a macro is established. However, in the disconnection procedure (c) of 1.3.5.3, the UE 10 maintains the connected state, and the direct communication path, the locally routed communication and the communication path via a macro are maintained.

The communication may be continued by changing the communication path without establishing a new communication path via a macro based on the fact that the direct communication path or the locally routed communication path and the associated communication path via a macro are maintained. When the direct communication path and the communication path via a macro are maintained, the communication may be continued by selecting the communication path of the direct communication path and the communication path via a macro and changing the communication path. When the locally routed communication path and the communication path via a macro are maintained, the communication may be continued by selecting the communication path of the locally routed communication path and the communication path via a macro and changing the communication path.

Here, the description will be presented using (c) surrounded by a dotted line shown in Fig. 20. In (c) of Fig. 20, the UE 10 changes the communication path with the UE 10a from the direct communication path or the locally routed communication path to the communication path via a macro, and thus, the UE 10 can start the communication via a macro (PGW 30) with the UE 10a (S1934). When the communication path is changed from the direct communication path or the locally routed communication path to the communication path via a macro, and when the bearer ID associated with the communication path via a macro is managed, the UE 10 may select the bearer ID associated with the communication path via a macro. When the PDN connection associated with the communication path via a macro is managed, the PDN connection associated with the communication path via a macro may be selected.

As mentioned above, the UE stops the direct communication of the LTE(D) or the locally routed communication with the communication target UE, and can change the communication to the communication via the PGW 30 when the transmission and reception of data is not completed.

When the LTE(D) and the communication path via a macro are maintained, the UE may select the communication path of the direct communication path and the communication path via a macro, and starts the direct communication path of the LTE(D) (S1930) or start the communication path via a macro (S1934). Here, as the method of selecting the direct communication of the LTE(D) and the communication via a macro, the UE 10 may arbitrarily select the communication path. Alternatively, the UE may manage the priority, and select the communication path based on the priority.

As stated above, the UE stops the locally routed communication with the communication target UE during the communication, and can change the communication to the direct communication or the communication via the PGW 30 when the transmission and reception of data is not completed.

When the locally routed communication path and the communication path via a macro are maintained, the UE 10 selects the communication path of the locally routed communication path and the communication via a macro, and starts the locally routed communication (S1931) or starts the communication path via a macro (S1934). Here, the method of selecting the locally routed communication or the communication via a macro, the UE 10 may arbitrarily select the communication path, or may select the communication path based on the priority.

When the eNB 45 receives data from the UE 10, the eNB 45 may detect destination information included in the data, and may transmit the data of the UE 10 to the UE 10a by using the locally routed communication path when the UE 10a is the destination. In this case, even if a bearer of the locally routed communication path is designated, when the UE that does not establish the locally routed communication path with the UE 10 except for the UE 10a is the destination, the communication may be stopped. In this case, the eNB may notify to the UE 10 which is the communication source that it is not able to perform the locally routed communication.

A bearer between the eNB 45 and the UE 10 in the communication path via a macro through the eNB 45, the SGW 35 and the PGW 30 form the UE 10, and a bearer between the eNB 45 and the UE 10 in the locally routed communication to the UE 10a from the UE 10 through the eNB 45 may be managed as the same bearer.

That is, the eNB 45 may detect the destination in the transmission of data from the UE 10, may check that the UE 10a is located in service area of the eNB 45 when the destination is the UE 10a, and may determine to transmit data to the UE 10a by using the locally routed communication path. In this case, the MME 40 or the eNB 45 may allocate a bearer ID allocated in the establishment of the communication path between the eNB 45 and the UE 10 with a bearer ID for the locally routed communication path and a bearer ID for the communication path via a macro as the same bearer ID.

The eNB 45 may detect the destination in the transmission of data from the UE 10, and may determine to use the communication path via a macro from the SGW 35 to the PGW 30 when the destination is the UE other than the UE 10a which does not establish the locally routed communication path.

As described above, the UE can stop the direct communication with the communication target UE during the communication, and can change the communication path to the locally routed communication path or the communication via the PGW 30 when the transmission and reception of data is not completed.

Through the above procedure, in the present embodiment, when data is transmitted and received through the ProSe, the communication source UE can prevent the power consumption of the communication source UE from being inefficiently consumed by discovering the communication target UE without unnecessarily discovering the communication target UE.

It is possible to discover the communication target UE by giving the condition for discovering the communication target UE to the communication source UE, and it is possible to realize the start of the transmission and reception of data through the ProSe.

The mobile communication provider determines whether or not to permit the establishment of the direct communication path between the UEs, and thus, it is possible to provide the locally routed communication and the direct communication path between the UEs to the UE.

It is possible to realize the start of the transmission and reception of data through the locally routed communication path by giving the condition for starting the transmission and reception of data through the locally routed communication path to the communication source UE.

The mobile communication provider can perform the transmission and reception of data through the direct communication path and the locally routed communication while maintaining the communication via a base station device provided in the related art. When it is possible to use the direct communication path, the locally routed communication and the communication path via a base station device of the related art, it is possible to select any one of the direct communication path, the locally routed communication and the communication path via a macro.

When the UE 10 is not able to maintain the LTE(D) and the locally routed communication path, the UE 10 may use the communication path via a macro depending on the presence or absence of the communication path via a macro.

Here, the UE 10 may detect that it is not able to maintain the direct communication, may retain the locally routed communication path, and may transmit and receive data by changing the communication path to the locally routed communication path when it is possible to maintain the locally routed communication path. The eNB 45 that receives the data from the UE 10 determines whether or not the data can be used in the locally routed communication path, and may transmit and receive data between the UE 10 and the UE 10a by using the locally routed communication path when it is not able to transmit the data in the locally routed communication path. When it is not able to transmit the data to the UE 10a from the UE 10 in the locally routed communication path, the eNB 45 may determine to use the communication path via a macro. The UE 10 may determine whether or not to transmit the data from the UE 10 in the communication path via a macro by establishing the communication path via a macro.

Here, a case where the communication is performed in the APP 4 and the direct communication path, the locally routed communication path and the communication path via a macro are established will be described. As in the APP 1 to the APP 3, when the communication path such as the LTE(D), the locally routed communication path or the communication path via a macro is not established, it is not able to use the communication path.

### [1.4 Modification Example]

### [1.4.1 Modification Example 1]

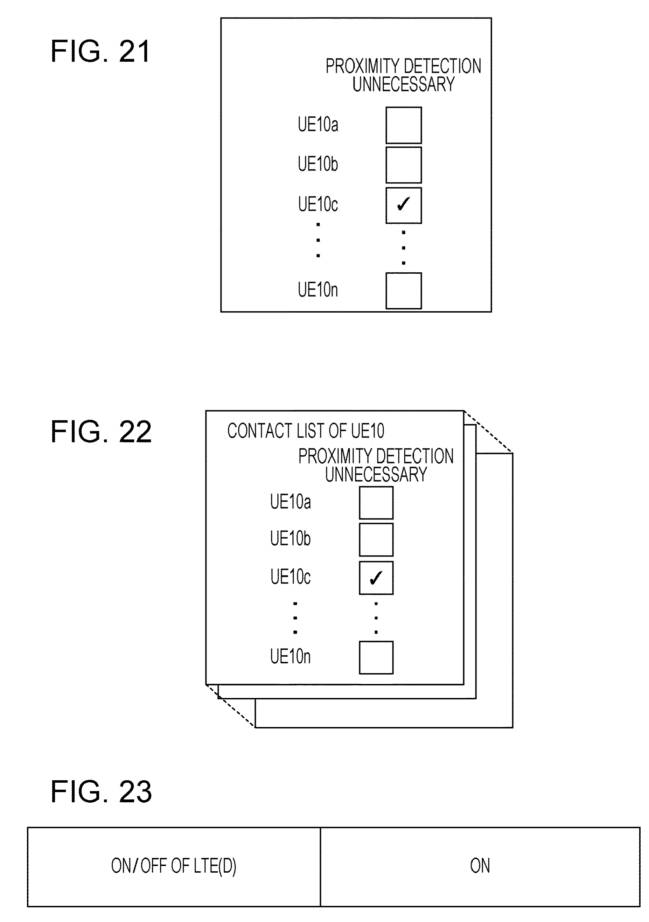

The UE according to the first embodiment manages the UE contact list 144 for each application, but may manage one UE contact list 144 for each UE without managing the UE contact list 144 for each application. Fig. 21 shows an example of the UE contact list 144 managed for each UE. As shown in Fig. 21, the UE 10 manages one UE contact list 144. Similarly to the first embodiment, the proximity detection may not be performed using the proximity detection unnecessary check box.

Since the UE 10 retains one UE contact list 144, the ProSe Server 90 manages the Server contact list 942 for each UE. Fig. 22 shows an example of the Server contact list 942 managed by the ProSe Server. As shown in Fig. 22, the ProSe Server 90 manages one Server contact list 942 for each UE.

The mobile communication system or the IP mobile communication network has the same configuration except for the above description. The UEs have the same configuration except for the UE contact list 144, and the ProSe Server 90 has the same configuration except for the Server contact list.

The UE location information notification procedure, the proximity detection unnecessary notification procedure, the proximity detection procedure, the communication path establishment procedure, and the disconnection procedure can be similarly used, and thus, the description thereof will be omitted.

Thus, even when the UE 10 can use the plurality of applications, it is not necessary to have a different contact list for each application, and it is possible to share the same contact list by the plurality of applications.

### [1.4.2 Modification Example 2]

Although it has been described that the UE 10 according to the first embodiment facilitates (turns ON) both the function of the LTE(D), the UE 10 may consider the ON or OFF of the function of the LTE(D). The UE considers the ON or OFF of the function of the LTE(D), and thus, the ProSe Server 90 can include the ON or OFF state of the LTE(D).

Fig. 23 shows an example of the ON or OFF of the LTE(D) in which the UE 10 manages the ON or OFF state of the LTE(D). In Figs. 23, the ON or OFF state of the LTE(D) is turned on.

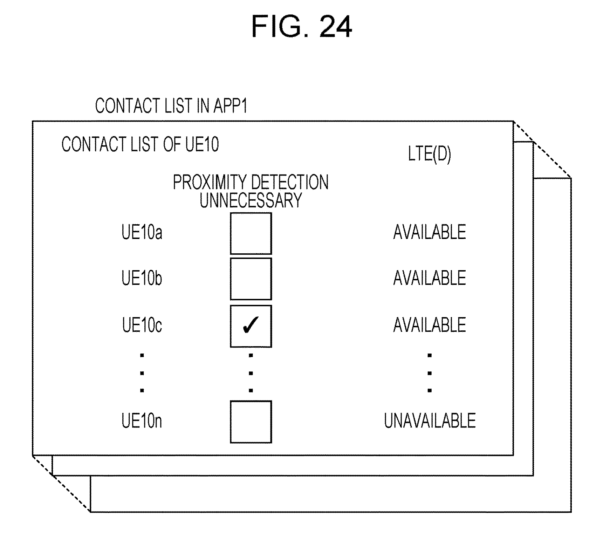

Fig. 24 shows an example of the contact list of the Server contact list 942 in which the ON or OFF state of the LTE(D) is managed in the ProSe Server 90. Since the LTE(D) is turned on in the UE 10, the ON or OFF state of the LTE(D) is managed in the UE contact list 144 of the UE 10. Here, if the state of the LTE(D) is turned off in the UE 10, the state of the LTE(D) of the contact list of the UE 10 within the Server contact list 942 may be turned off, or the state of the LTE(D) may not be managed. In the UE 10n, the state of the LTE(D) is turned on.

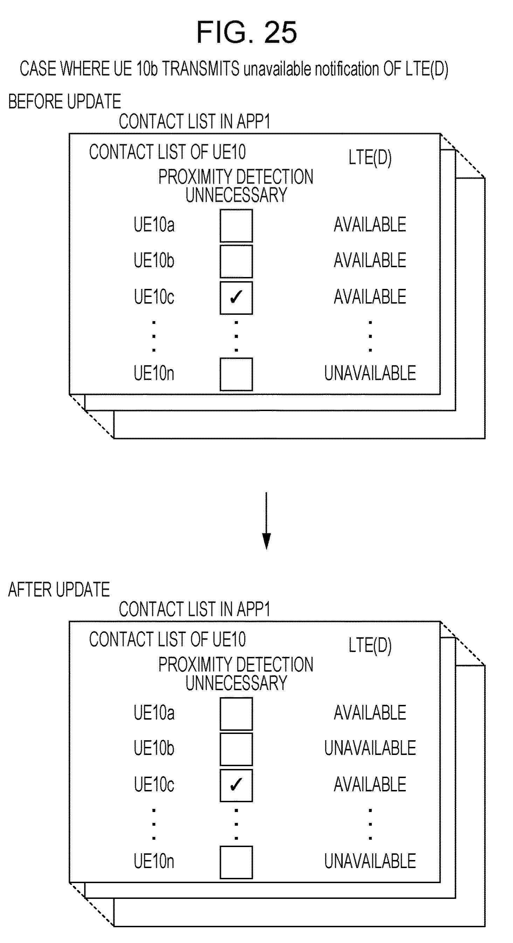

Fig. 25 shows an example in which the UE location information of S1008 in [1.3.1 UE Location Notification Procedure] is updated. Here is an update example of a case where the UE 10b notifies the OFF state of the LTE (D). From the state before updated to the state after updated, the LTE (D) of the UE 10b is changed from ON to OFF.

Not the UE location information of S1008 in [1.3.1 UE Location Notification Procedure] but the ON or OFF state of the LTE(D) may be updated using the proximity detection unnecessary notifying process of S1208 in [1.3.2 Proximity Detection Unnecessary Procedure].

The mobile communication system or the IP mobile communication network has the same configuration except for the above description. The UEs have the same configuration except for the ON or OFF state of the LTE(D) and the ProSe Server 90 has the same configuration except for the Server contact list.

The ProSe Server 90 detects the communication path that can be used at the time of detecting the proximity UE. However, when the state in which the UE invalidates the direct communication path establishment function such as the OFF state of the LTE(D) is received and managed, the ProSe Server determines that these communication paths are not available.

The details of another UE location information notification procedure, proximity detection unnecessary notification procedure, proximity detection procedure, communication path establishment procedure, and disconnection procedure are similarly applicable, and thus, the description thereof will be omitted.

### [1.4.3 Modification Example 3]

In the first embodiment, the ProSe Server 90 notifies of the proximity detection response indicating that the LTE(D) and the WLAN(D) can be used, in the notification of the contact list of S1412. However, the ProSe Server 90 may notify the UE 10 of the degree of proximity, and the UE 10 may determine to perform the direct communication depending on the degree of proximity. The present modification example has a difference from the locational relationship between the UEs is expressed in numerical form and is notified and the granularity of the location information can be minutely notified.

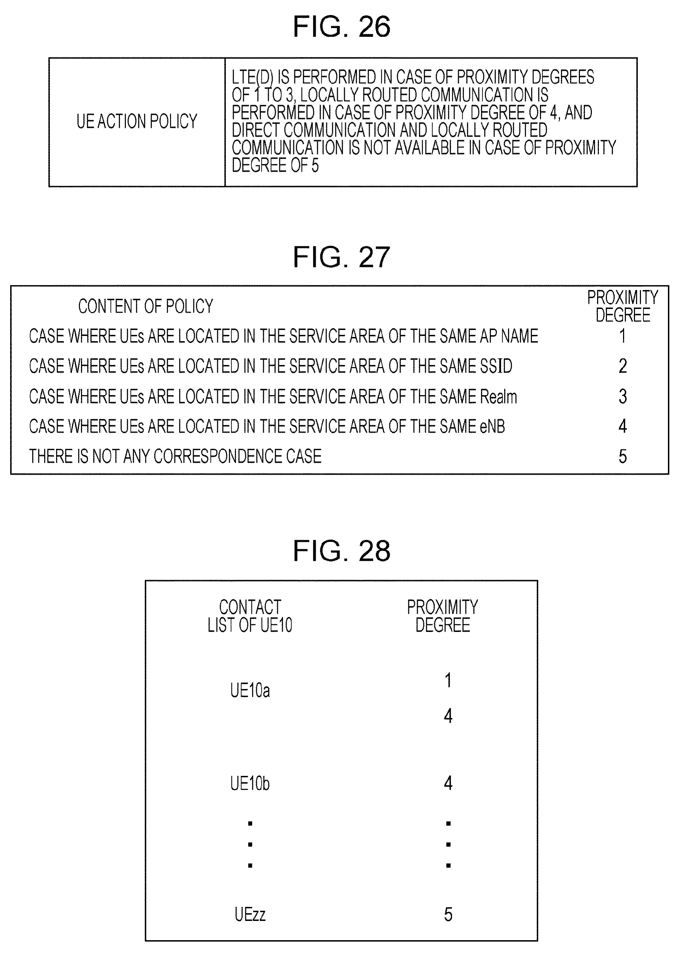

Fig. 26 shows an example of a UE action policy managed by the UE 10. As shown in Fig. 26, the LTE(D) is performed in a case where the degrees of proximity are 1 to 3, the locally routed communication is performed in a case where the degree of proximity is 4, and it is not able to perform the communication of the LTE(D) and the locally routed communication in a case where the degree of proximity is 5. Not only one degree of proximity is notified, but multiple degrees of proximity are likely to be notified. When the degree of proximity of 1 and the degree of proximity of 4 are notified, there is a possibility that the LTE(D) and the locally routed communication are arbitrarily selected.

Fig. 27 shows an example of the proximity detection policy 948 managed by the ProSe Server 90. The ProSe Server 90 evaluates the UE within the Server contact list 942 based on the location information management table 946. In Fig. 27, if the same AP name is managed in the locational relationship between the UEs, it is evaluated as being the degree of proximity of 1, if the same SSID is managed, it is evaluated as being the degree of proximity of 2, if the same Realm is managed, it is evaluated as being the degree of proximity of 3, if the same eNB ID is managed, it is evaluated as being the degree of proximity of 4, and when there is not any correspondence case, it is evaluated as being the degree of proximity of 5.

Fig. 28 shows an example of the proximity detection result of S1410 in [1.3.3 Proximity Detection Procedure]. Since the UE 10 are the UE 10a are managed to be connected to the same AP and are managed to be connected to the same eNB, the UE 10a is evaluated as the degree of proximity of 1 and the degree of proximity of 4. Since the UE 10 and the UE 10b are managed to be connected to the same eNB, the UE 10b is evaluated as the degree of proximity of 4. Since the location information corresponding to the proximity detection policy 948 is not managed, the UEzz is evaluated as the degree of proximity of 5.

The mobile communication system or the IP communication network has the same configuration except for the above description. The UE has the same configuration except for the UE action policy, and the ProSe Server 90 has the same configuration except for the proximity detection policy 948.

The UE location information notification procedure, the proximity detection unnecessary notification procedure, the proximity detection procedure, the communication path establishment procedure, and the disconnection procedure can be similarly used, and thus, the description thereof will be omitted.

### [1.4.4 Modification Example 4]

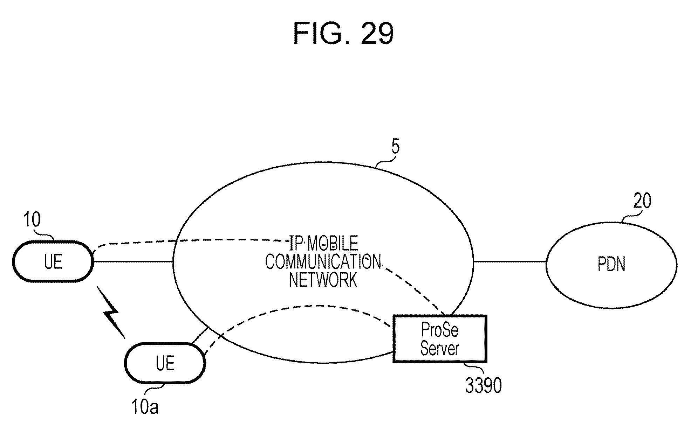

The mobile communication system may have the same configuration illustrated in Fig. 29 not the configuration illustrated in Fig. 1. It has been described in Fig. 1 that the ProSe Server 90 is provided on the PDN 20, but may be provided on the IP mobile communication network 5 as shown by a ProSe Server 3390 in Fig. 29. The ProSe Server 3390 can perform the communication by ensuring a secure communication path with the UE 10 and the UE 10a. The ProSe Server 3390 can perform the communication by ensuring a secure communication path with the MME 40.

The mobile communication system or the IP mobile communication network has the same configuration except for the above description. The UE location information notification procedure, the proximity detection unnecessary notification procedure, the proximity detection procedure, the communication path establishment procedure, and the disconnection procedure can be similarly used, and thus, the description thereof will be omitted.

### [1.4.5 Modification Example 5]

Although it has been described in the first embodiment that when the UE 10 requests the permission for the establishment of the direct communication path from the mobile communication provider, the UE 10 transmits the request including the APN and the mobile communication provider determines whether or not to permit the request based on the APN, determination means is not limited thereto, but another method may be used.

For example, the MME 40 may manage an application list equivalent to the APP list 142 retained by the UE 10, may manage the application and the direct communication path capable of being established in correlation with each other, and may determine whether or not to permit the request based on the managed application list and direct communication path.

In this case, the UE 10 may transmit the PDN connectivity request (S1704) or the service request (S1804) including the information regarding the application.

When the PDN connectivity request or the service request is received, the MME 40 may determine whether or not to permit the included application and the information of the direct communication path correlated with the application. Thus, the MME 40 can notify the UE 10 of whether or not to select the usable direct communication path and permit the establishment of the direct communication path for each application of the UE 10.

The configuration of each device and the procedure except for the above description are the same as those described in the first embodiment, and the detailed description thereof will be omitted.

As discussed above, although the first embodiment and the plurality of modification examples thereof have been described, the respective modification examples may be independently applied to the first embodiment, but may be applied by combining two or more modification examples.

### [1.4.6 Modification Example 6]

Although the embodiments of the present invention have been described with reference to the drawings, a specific configuration is not limited to the embodiments. Designs within the scope without departing from the gist of the present invention are included in the claims.

In the respective embodiments, programs operated in the respective devices are programs (programs causing a computer to perform functions) that control a CPU and the like so as to realize the functions of the embodiments. The information used in these devices is temporarily accumulated in a temporary storage device (for example, RAM) during the process, and is then stored in a storage device such as various ROMs or HDDs. The stored information is read by the CPU when necessary, and is modified and written.

As a recording medium that stores the programs, any one of a semiconductor medium (for example, ROM, or non-volatile memory card), an optical recording medium and a magnetooptical recording medium (for example, DVD (Digital Versatile Disc), MO (Magneto Optical Disc), MD (Mini Disc), CD (Compact Disc), or BD), or a magnetic recording medium (for example, magnetic tape, or flexible disc) may be used. The functions of the present invention may be realized by performing the process in cooperation with other application programs or an operating system based on the instruction of the program, in addition to realizing the functions of the embodiments by executing the loaded program.

When the programs are distributed on the market, the programs may be distributed by being stored in a portable recording medium, or may be transmitted to a server computer connected via a network such as the Internet. In this case, a storage device of a server computer may be included in the present invention.

In the embodiments, some or all of the respective devices may be realized using LSI (Large Scale Integration) which is an integrated circuit. The respective functional blocks of the respective devices may be realized as individual chips, or some or all thereof may be realized as an integral chip. The integrated circuit is not limited to the LSI, but may be realized as a private circuit a general-purpose processor. As the semiconductor technology has progressed, when a technology for realizing the integrated circuit replaced with the LSI has appeared, it is possible to use integrated circuit realized by this technology.

Although it has been described in the embodiments that the LTE and the WLAN (for example, IEEE 802.11a/b/n) are used as the example of the wireless access network, the connection may be performed through the WiMAX in place of the WLAN.

### Industrial Applicability

An embodiment of the present invention is applicable to a mobile communication system capable of suppressing unnecessary proximity detection when a UE as a communication target is discovered in order to allow a UE that performs the transmission and reception of data in a proximity service to start the proximity service.

### Reference Signs List

- 1: Mobile communication system
- 5: IP mobile communication network
- 10: UE
- 20: PDN
- 30: PGW
- 35: SGW
- 40: MME
- 45: eNB
- 50: HSS
- 55: AAA
- 60: PCRF
- 65: ePDG
- 70: WLAN ANa
- 72: WLAN APa
- 74: GW
- 75: WLAN ANb
- 76: WLAN APb
- 80: LTE AN
- 90: ProSe Server

## Claims

1. A terminal device of a mobile communication system including a server device which detects a proximity terminal, a control device, the terminal device, and a proximity terminal device which is located in the proximity of the terminal device, the terminal device being adapted to:
obtain, from the server device, information regarding a proximity terminal device which is located at a distance capable of establishing a direct communication path and a communication path via only a base station device, the paths being correlated with an application, and information regarding a direct communication path capable of being established;
transmit, to the control device, a request message which requests an approval for the establishment of the direct communication path capable of being established, the communication path via only the base station device and a communication path via a macro;
receive a response message indicating that the establishment of the direct communication path capable of being established, the communication path via only the base station device and the communication path via the macro is permitted; and
establish, based on the response message, the direct communication path with a proximity terminal device, establish the communication path via only the base station device with a proximity terminal device, and establish the communication path via the macro with a terminal device.

2. The terminal device according to claim 1,
wherein the terminal device is adapted to:
retain a first APN which permits the establishment of the direct communication path, the communication path via only the base station device, and the communication path via the macro, and a second APN which does not permit the establishment of the direct communication path and the communication path via only the base station device; and
transmit, to the control device, the request message which requests the approval for the establishment of the direct communication path capable of being established, the communication path via only the base station device and the communication path via the macro by including an APN which permits the establishment of the direct communication path, the communication path via only the base station device, and the communication path via the macro.

3. A terminal device that is adapted to:
transmit, to a control station, a request message which requests the establishment of a communication path by including an APN which permits the establishment of a direct communication path, a communication path via only a base station device, and a communication path via a macro;
receive, from a control device, a response message indicating that the establishment of the communication paths is permitted and the permitted communication paths are established;
establish the communication paths based on the response message;
manage applications and communication paths in correlation with each other; and
select, based on the correlation of the applications with the communication paths, the direct communication path, the communication path via only the base station device, or the communication path via the macro, and transmit application data by using the selected communication path.

4. A control device of a mobile communication system that includes a server device which detects a proximity terminal, the control device, a terminal device, and a proximity terminal device which is located in the proximity of the terminal device, the control device being adapted to:
manage identification information of the terminal device and permission information indicating that the establishment of a direct communication path, a communication path via only a base station device, and a communication path via a macro is permitted, in correlation with each other;
receive a request message which requests an approval for the establishment of the direct communication path, the communication path via only the base station device, and the communication path via the macro, which is transmitted from the terminal device; and
permit the establishment of the direct communication path, the communication path via only the base station device, and the communication path via the macro of the terminal device, based on the correlation of the identification information of the terminal device with the permission information indicating that the establishment of the direct communication path, the communication path via only the base station, and the communication path via the macro is permitted.

5. A base station device of a mobile communication system including a server device which detects a proximity terminal, a control device, a terminal device, and the base station device, the base station device being adapted to:
receive, from the control device, a notification including information indicating whether or not the establishment of a direct communication path, a communication path via only a base station device, and a communication path via a macro is permitted for the terminal device; and
allocate a radio resource for transmitting and receiving data to and from the terminal device based on the permission information included in the notification.
